# EUROPEAN PATENT APPLICATION

(11) **EP 4 671 985 A1**
(43) Date of publication of application: **31.12.2025**
(21) Application number: 25184757.0
(22) Date of filing: 24.06.2025
(51) Int. Cl.: G06F 9/48, G06F 9/50

(54) **APPLICATION PROGRAMMING INTERFACE TO PREVENT THREAD PERFORMANCE**

(30) Priority: 24.06.2024 US 202418752685; 24.06.2024 US 202418752690; 24.06.2024 US 202418752694
(71) Applicant: Nvidia Corporation, Santa Clara, CA 95051 (US)
(72) Inventor: SOMAN, Advait, Santa Clara, 95051 (US); BHARAMBE, Girish Bhaskarrao, Santa Clara, 95051 (US); LONG, Ze, Santa Clara, 95051 (US); EDWARDS, Harold Carter, Santa Clara, 95051 (US); BRITO GADESCHI, Gonzalo, Santa Clara, 95051 (US); NARAWANE, Yashwardhan, Santa Clara, 95051 (US); DHAR, Vikram, Santa Clara, 95051 (US); TREICHLER, Sean Jeffrey, Santa Clara, 95051 (US); PARLE, Apoorv, Santa Clara, 95051 (US); HIRISAVE CHANDRA SHEKHARA, Gokul Ramaswamy, Santa Clara, 95051 (US)
(74) Representative: Mathys & Squire

(57) **Abstract**

Apparatuses, systems, and techniques to cancel pending GPU thread work to allow said work to be assumed by running thread clusters. In at least one embodiment, processors comprising one or more circuits to perform an application programming interface (API) to cause one or more software threads identified by the API to be prevented from being performed by one or more processors.

## Description

### CROSS-REFERENCE TO RELATED APPLICATIONS

This application incorporates by reference for all purposes the full disclosure of copending U.S. Patent Application No. 18/752,690, entitled "APPLICATION PROGRAMMING INTERFACE TO IDENTIFY THREAD PREVENTION" (Attorney Docket No. 0112912-C57US0) and U.S. Patent Application No. 18/752,694, entitled "APPLICATION PROGRAMMING INTERFACE TO INDENTIFY DIMENSIONS OF THREADS" (Attorney Docket No. 0112912-C58US0).

### FIELD

At least one embodiment pertains to scheduling GPU process threads to minimize excess resource use by scheduling threads by allowing running threads to request more work from pending potential threads. For example, in at least one embodiment, if a group of threads, such as a CTA (Cooperative Thread Array), is performing work, it can request the work of a pending thread to be cancelled, check the cancellation was completed to avoid parallel processing, and request the dimensions of the thread to begin processing after it completes current work. In at least one embodiment, this process avoids latency when ending one job and beginning the next and prevents duplicate processing. For example, at least one embodiment pertains to perform an application programming interface (API) to cause one or more software threads identified by the API to be prevented from being performed by one or more processors, perform an application programming interface (API) to cause one or more processors to indicate whether one or more software threads have been prevented from being performed, and/or perform an application programming interface (API) to indicate one or more software threads that have been prevented from being performed by one or more processors.

### BACKGROUND

GPU thread scheduling can have wasted resources or duplicate processing performed by separate threads. Methods to schedule GPU process threads without excess resource use can be improved.

### SUMMARY

The invention is defined by the claims. In order to illustrate the invention, aspects and embodiments which may or may not fall within the scope of the claims are described herein.

Apparatuses, systems, and techniques to cancel pending GPU thread work to allow said work to be assumed by running thread clusters. In at least one embodiment, processors comprising one or more circuits to perform an application programming interface (API) to cause one or more software threads identified by the API to be prevented from being performed by one or more processors.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE DRAWINGS

FIG. 1 illustrates examples of scheduled working threads within differentiated scheduling methods, according to at least one embodiment;
FIG. 2 illustrates an operating CTA requesting the scheduler cancel one or more pending process threads, according to at least one embodiment;
FIG. 3 illustrates an operating CTA confirming the scheduler cancelled one or more pending process threads, according to at least one embodiment;
FIG. 4 illustrates an operating CTA requesting the scheduler provide dimensions for one or more previously cancelled process threads and assuming the thread work, according to at least one embodiment;
FIG. 5 illustrates an example diagram of an API functioning to cause software to cancel threads and/or request the dimensions of threads, according to at least one embodiment;
FIG. 6 illustrates a flowchart indicating an example process to dynamically assign work to CTAs, according to at least one embodiment;
FIG. 7 illustrates a flowchart indicating an example process wherein a CTA requests more thread work from a scheduler by cancelling pending threads, according to at least one embodiment;
FIG. 8 is a block diagram illustrating a cancel cluster operation, according to at least one embodiment;
FIG. 9 is a block diagram illustrating a cancel cluster query operation, according to at least one embodiment;
FIG. 10 is a block diagram illustrating a get first thread operation, according to at least one embodiment;
FIG. 11 illustrates an example block diagram illustrating an example processor, according to at least one embodiment;
FIG. 12 illustrates a distributed system, in accordance with at least one embodiment;
FIG. 13 illustrates an exemplary data center, in accordance with at least one embodiment;
FIG. 14 illustrates a client-server network, in accordance with at least one embodiment;
FIG. 15 illustrates an example of a computer network, in accordance with at least one embodiment;
FIG. 16A illustrates a networked computer system, in accordance with at least one embodiment;
FIG. 16B illustrates a networked computer system, in accordance with at least one embodiment;
FIG. 16C illustrates a networked computer system, in accordance with at least one embodiment;
FIG. 17 illustrates one or more components of a system environment in which services may be offered as third party network services, in accordance with at least one embodiment;
FIG. 18 illustrates a cloud computing environment, in accordance with at least one embodiment;
FIG. 19 illustrates a set of functional abstraction layers provided by a cloud computing environment, in accordance with at least one embodiment;
FIG. 20 illustrates a supercomputer at a chip level, in accordance with at least one embodiment;
FIG. 21 illustrates a supercomputer at a rack module level, in accordance with at least one embodiment;
FIG. 22 illustrates a supercomputer at a rack level, in accordance with at least one embodiment;
FIG. 23 illustrates a supercomputer at a whole system level, in accordance with at least one embodiment;
FIG. 24A illustrates inference and/or training logic, in accordance with at least one embodiment;
FIG. 24B illustrates inference and/or training logic, in accordance with at least one embodiment;
FIG. 25 illustrates training and deployment of a neural network, in accordance with at least one embodiment;
FIG. 26 illustrates an architecture of a system of a network, in accordance with at least one embodiment;
FIG. 27 illustrates an architecture of a system of a network, in accordance with at least one embodiment;
FIG. 28 illustrates a control plane protocol stack, in accordance with at least one embodiment;
FIG. 29 illustrates a user plane protocol stack, in accordance with at least one embodiment;
FIG. 30 illustrates components of a core network, in accordance with at least one embodiment;
FIG. 31 illustrates components of a system to support network function virtualization (NFV), in accordance with at least one embodiment;
FIG. 32 illustrates a processing system, in accordance with at least one embodiment;
FIG. 33 illustrates a computer system, in accordance with at least one embodiment;
FIG. 34 illustrates a system, in accordance with at least one embodiment;
FIG. 35 illustrates an exemplary integrated circuit, in accordance with at least one embodiment;
FIG. 36 illustrates a computing system, according to at least one embodiment;
FIG. 37 illustrates an APU, in accordance with at least one embodiment;
FIG. 38 illustrates a CPU, in accordance with at least one embodiment;
FIG. 39 illustrates an exemplary accelerator integration slice, in accordance with at least one embodiment;
FIGS. 40A-40B illustrate exemplary graphics processors, in accordance with at least one embodiment;
FIG. 41A illustrates a graphics core, in accordance with at least one embodiment;
FIG. 41B illustrates a GPGPU, in accordance with at least one embodiment;
FIG. 42A illustrates a parallel processor, in accordance with at least one embodiment;
FIG. 42B illustrates a processing cluster, in accordance with at least one embodiment;
FIG. 42C illustrates a graphics multiprocessor, in accordance with at least one embodiment;
FIG. 43 illustrates a software stack of a programming platform, in accordance with at least one embodiment;
FIG. 44 illustrates a CUDA implementation of a software stack of FIG. 43, in accordance with at least one embodiment;
FIG. 45 illustrates a ROCm implementation of a software stack of FIG. 43, in accordance with at least one embodiment;
FIG. 46 illustrates an OpenCL implementation of a software stack of FIG. 43, in accordance with at least one embodiment;
FIG. 47 illustrates software that is supported by a programming platform, in accordance with at least one embodiment; and
FIG. 48 illustrates compiling code to execute on programming platforms of FIGS. 43 - 46, in accordance with at least one embodiment.

### DETAILED DESCRIPTION

In at least one embodiment, systems and methods implemented in accordance with this disclosure are utilized to perform an application programming interface (API) to cause one or more software threads identified by the API to be prevented from being performed by one or more processors. In at least one embodiment, systems and methods implemented in accordance with this disclosure are utilized to perform an application programming interface (API) to cause one or more processors to indicate whether one or more software threads have been prevented from being performed. In at least one embodiment, systems and methods implemented in accordance with this disclosure are utilized to perform an application programming interface (API) to indicate one or more software threads that have been prevented from being performed by one or more processors.

In at least one embodiment, one or more GPU process schedulers have one or more CTAs (Cooperative Thread Arrays, where in at least one embodiment, a CTA is a basic workload unit within a GPU, representing a group of threads cooperatively processed) performing processing on designated threads. In at least one embodiment, a CTA is a group (e.g., array) of one or more threads that are to perform (e.g., execute) one or more software kernels (e.g., kernels). In at least one embodiment, a CTA includes one or more work groups that comprise one or more work items (e.g., threads) to be used to perform one or more software kernels. In at least one embodiment, one or more threads of one or more CTAs are to be performed using one or more processors. In at least one embodiment, one or more threads are to be performed using one or more SMs (Stream Multiprocessors). In at least one embodiment, one or more threads are to be performed using one or more SMs (Stream Multiprocessors). In at least one embodiment, one or more threads are to be performed using one or more compute units. In at least one embodiment, one or more of these working (e.g., work within this context is calculations and/or manipulations regarding data as part of a process thread, according to at least one embodiment) CTAs may be able to assume work of pending, unscheduled threads. In at least one embodiment, a CTA may perform an API to request a cancellation of assumable threads. In at least one embodiment, said CTA may then request confirmation of thread cancellation. In at least one embodiment, if cancellation was complete, said CTA may then request one or more starting dimensions (e.g., data required to begin processing of new threads such as, for example, system resource requirements for processing and/or data start points, according to at least one embodiment) of the cancelled threads. In at least one embodiment, once starting dimensions are acquired, said CTA may then begin processing new threads without significant pause between previous thread work and said new thread work, reducing total resource wastage during runtime.

In at least one embodiment, for example, a scheduler begins processing by assigning work to one or more processors (e.g., SMs, compute units, etc.) based on dimensions of said work. In at least one embodiment, said scheduler then allows CTAs to request new work based on available resources assigned to said CTAs. In at least one embodiment, said scheduler then indicates to cancel pending threads, returning thread identification to shared memory to allow requesting CTAs to know which threads were indicated to be cancelled, but not if they were cancelled. In at least one embodiment, cancellation confirmation at this stage would be unreliable. In at least one embodiment, a CTA then requests confirmation of cancellation, requesting a scheduler confirm successful cancellation to prevent parallel and redundant processing, to which a scheduler then answers with confirmation, lack of confirmation, or an indication to allow more time to determine cancellation. In at least one embodiment, a CTA may be able to indicate to assume said work once cancelled if pertinent. In at least one embodiment, a CTA with confirmation of successfully cancelled work then requests starting dimensions for said cancelled threads to allow for assuming related thread work after completion of current thread work. In at least one embodiment, said dimensions come in at least two forms; thread IDs (e.g., thread identifications), and/or individual thread dimensions (X, Y, or Z coordinates of thread locations within an indicated space). In at least one embodiment, thread IDs are useful for indication of threads within a given space, but are not guaranteed to be unique, potentially indicating multiple threads. In at least one embodiment, individual thread dimensions are required as they are unique identifiers, with which a given CTA may then assume said associated threads work. In at least one embodiment, cancellation of potential threads using preceding and following descriptions allows for smoother transitions between work blocks for given processing units (e.g., CTA, thread blocks, thread clusters, and/or other work processing group designations), thus reducing overall resource wastage on work not contributing to final work product (e.g., prologue 108, epilogue 112, unscheduled, and/or tile fetch 114).

In at least one embodiment, an API as described in preceding or following descriptions performs a set of instructions. In at least one embodiment, instructions performed and/or communicated by an API may also be performed and/or communicated as an instruction (e.g., PTX and/or other instruction forms), and/or other software and/or hardware indications to perform described processes and/or systems.

In preceding and following descriptions, various techniques are described. For purposes of explanation, specific configurations and details are set forth in order to provide a thorough understanding of possible ways of implementing techniques. However, it will also be apparent that techniques described below may be practiced in different configurations without specific details. Furthermore, well-known features may be omitted or simplified to avoid obscuring techniques being described.

In at least one embodiment, as used in any implementation described herein, unless otherwise clear from context or stated explicitly to contrary, terms such as "module" and nominalized verbs each refers to any combination of software logic, firmware logic, hardware logic, and/or circuitry configured to provide functionality described herein. In at least one embodiment, software may be embodied as a software package, code and/or instruction set or instructions, and "hardware", as used in any implementation described herein, may include, for example, singly or in any combination, hardwired circuitry, programmable circuitry, state machine circuitry, fixed function circuitry, execution unit circuitry, and/or firmware that stores instructions executed by programmable circuitry. In at least one embodiment, modules may, collectively or individually, be embodied as circuitry that forms part of a larger system, for example, an integrated circuit (IC), system on-chip (SoC), and so forth.

In at least one embodiment, a system, such as system 100, system 200, system 300, system 400, system 500, system 600, system 700, system 800, system 900, system 1000, and/or system 1100, includes a collection of one or more hardware and/or software computing resources with instructions that, when executed, performs one or more communication processes such as those described herein. In at least one embodiment, system 100, system 200, system 300, system 400, system 500, system 600, system 700, system 800, system 900, system 1000, and/or system 1100 comprises one or more software programs executable on computer hardware, one or more applications executable on computer hardware, and/or variations thereof. In at least one embodiment, one or more processes of system 100, system 200, system 300, system 400, system 500, system 600, system 700, system 800, system 900, system 1000, and/or system 1100 are performed by any suitable processing system or unit (e.g., graphics processing unit (GPU), general-purpose GPU (GPGPU), parallel processing unit (PPU), central processing unit (CPU)), a data processing unit (DPU), such as described below, and in any suitable manner, including sequential, parallel, and/or variations thereof. In at least one embodiment, system 100, system 200, system 300, system 400, system 500, system 600, system 700, system 800, system 900, system 1000, and/or system 1100 use a machine learning training framework such as PYTORCH, TENSORFLOW, BOOST, CAFFE, MICROSOFT COGNITIVE TOOLKIT/CNTK, MXNET, CHAINER, KERAS, DEEPLEARNING4J, and/or other training framework to implement and perform operations described herein to perform an application programming interface (API) to cause one or more software threads identified by the API to be prevented from being performed by one or more processors. In at least one embodiment, system 100, system 200, system 300, system 400, system 500, system 600, system 700, system 800, system 900, system 1000, and/or system 1100 use a machine learning training framework and/or other training framework to implement and perform operations described herein to perform an application programming interface (API) to cause one or more processors to indicate whether one or more software threads have been prevented from being performed. In at least one embodiment, system 100, system 200, system 300, system 400, system 500, system 600, system 700, system 800, system 900, system 1000, and/or system 1100 use a machine learning training framework and/or other training framework to implement and perform operations described herein to perform an application programming interface (API) to indicate one or more software threads that have been prevented from being performed by one or more processors. In at least one embodiment, as an example, training a neural network model comprises use of a server (e.g., NVIDIA DGX servers) which further includes at least a GPU (e.g., AMD MI200, VEGAL10, VEGO20, AND ARCTURUS), an optimizer (e.g., ADAM OPTIMIZER), or discriminator architecture (e.g., discriminator architecture from face-vid2vid for training with GAN loss)

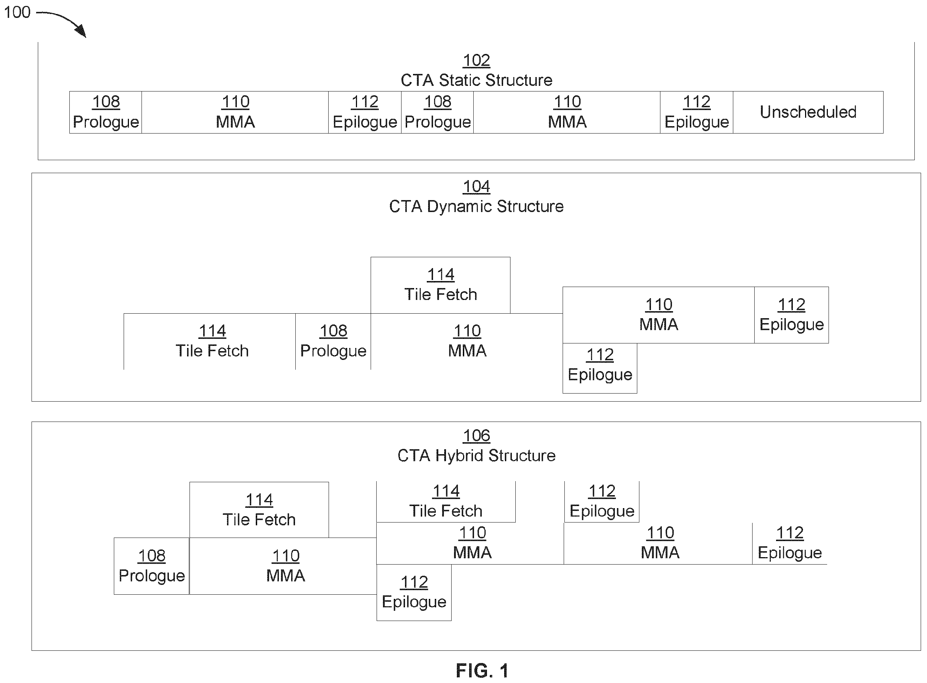

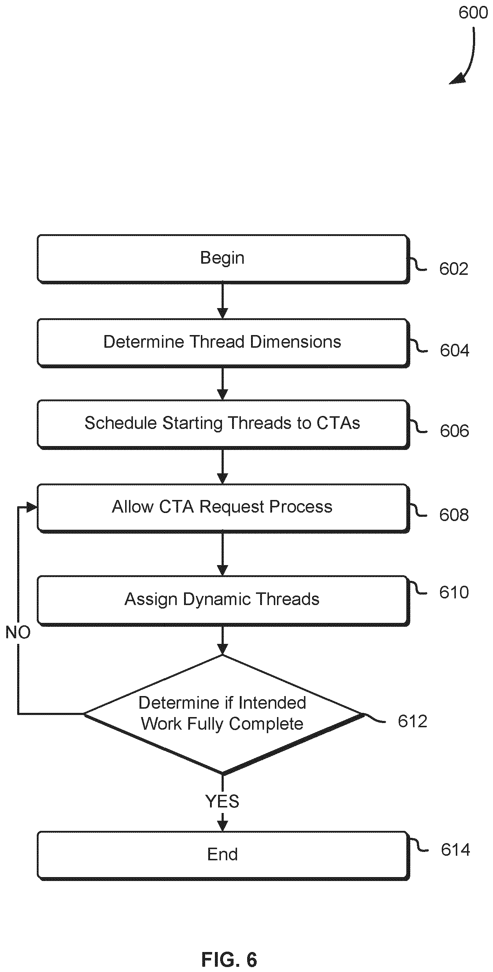

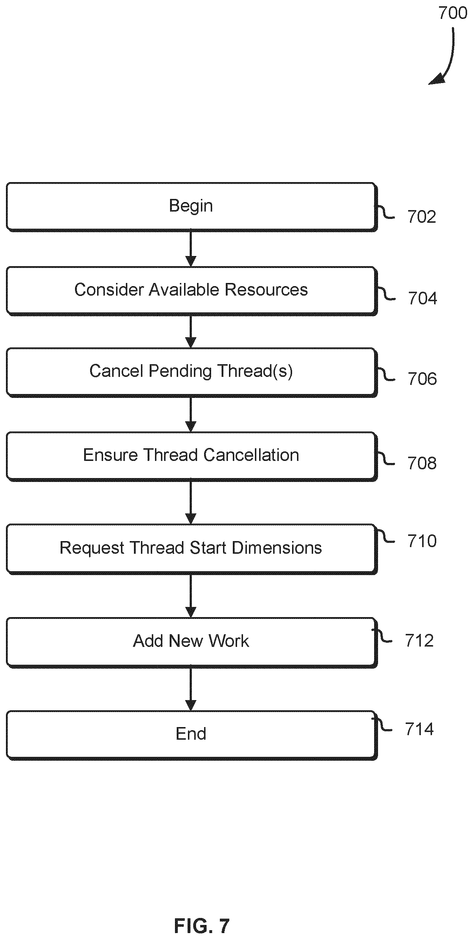

FIG. 1 illustrates examples of scheduled working threads within differentiated scheduling methods, according to at least one embodiment. In at least one embodiment, a system 100 includes a CTA static structure 102, CTA dynamic structure 104, and/or a CTA hybrid structure 106. In at least one embodiment, a CTA static structure 102 is comprised of a prologue 108, MMA 110, Epilogue 112, and/or unscheduled time. In at least one embodiment, a CTA dynamic structure is comprised of prologue 108, MMA 110, epilogue 112, and/or tile fetch 114. In at least one embodiment, a CTA Hybrid Structure is comprised of prologue 108, MMA 110, epilogue 112, and/or tile fetch 114. In at least one embodiment, a system 100 includes example CTA (Cooperative Thread Array) process schedule architecture that may be performed by running a process (e.g., process 600 and/or 700, FIGS. 6 and/or 7).

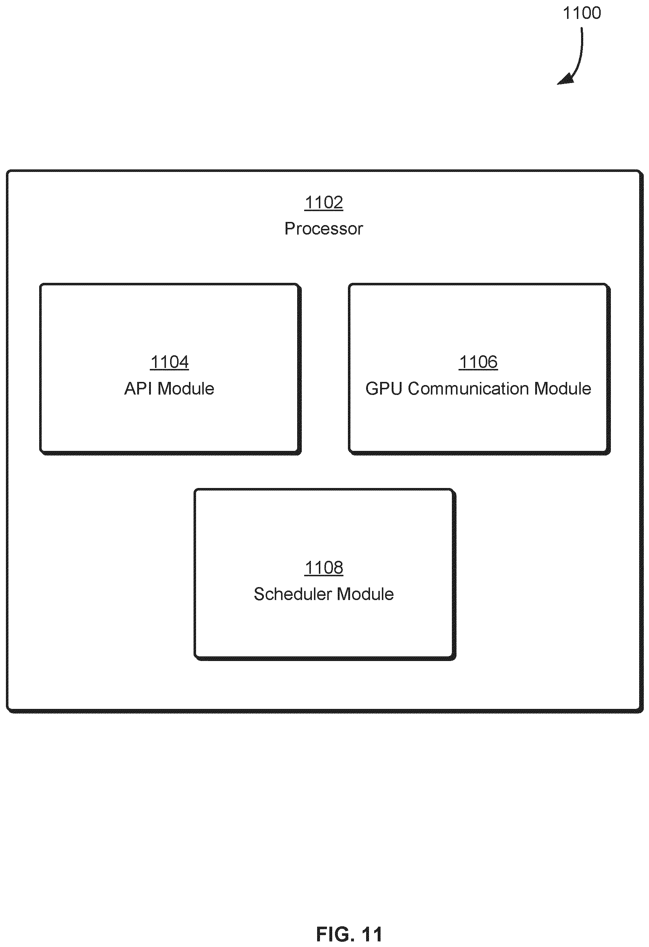

In at least one embodiment, a processor (e.g., processor 1102, FIG. 11) uses CTA static structure 102 to indicate information, such as information indicating an architecture for CTA scheduling based on static scheduling principles. In at least one embodiment, static scheduling refers to scheduling systems wherein work is scheduled to CTAs whenever there is unscheduled work that can be performed by a given CTA, and said CTA is not already performing other work. In at least one embodiment, a CTA static structure 102 is a resultant output of a scheduler after performance of one or more processes (e.g., process 600 and/or process 700, FIGS. 6 and/or 7). In at least one embodiment, a CTA static architecture 102 is recorded in memory as a history of work performed by a given CTA. In at least one embodiment, a CTA static structure 102 may have periods of unscheduled work (e.g., unscheduled in FIG. 1) while other CTAs perform further work.

In at least one embodiment, a processor (e.g., processor 1102, FIG. 11) uses a CTA dynamic structure 104 to indicate information, such as information indicating an architecture for CTA scheduling based on dynamic scheduling principles. In at least one embodiment, dynamic scheduling refers to scheduling systems wherein work is scheduled to CTAs whenever there is work that can be performed by a given CTA, and said CTA is not actively working on MMA (Matrix Multiply Accumulate operations, e.g., operations performed by one or more threads on input data) of already assigned work. In at least one embodiment, dynamic scheduling performs CTA work wherein there is an additional startup period (e.g., Tile Fetch 114) before standard startup procedures (e.g., prologue 108) to allow multiple sets of MMAs to be performed in series without pause, performing prologue 108 and/or epilogue 112 concurrently with proceeding work. In at least one embodiment, a CTA dynamic structure 104 is a resultant output of a scheduler after performance of one or more processes (e.g., process 600 and/or 700, FIGS. 6 and/or 7). In at least one embodiment, a CTA dynamic structure 104 is recorded in memory as a history of work performed by a given CTA.

In at least one embodiment, a processor (e.g., processor 1102, FIG. 11) uses a CTA Hybrid Structure 106 to indicate information, such as information indicating an architecture for CTA scheduling based on both static and dynamic scheduling principles. In at least one embodiment, hybrid scheduling refers to a scheduling system wherein work is scheduled to CTAs first statically, wherein each CTA is assigned a set of work, then dynamically, wherein work is scheduled to CTAs whenever there is work that can be performed by a given CTA, and said CTA is not actively working on MMA of already assigned work. In at least one embodiment, hybrid scheduling performs CTA work wherein there is no additional startup period (Prologue 108) relative to static scheduling, while additional startup period of work (tile fetch 114) of dynamic scheduling happens in parallel with said work of said thread, then dynamic thread assignment carries multiple sets of MMAs to be performed in series without pause, performing prologue 108, epilogue 112, and/or tile fetch 114 concurrently with proceeding work. In at least one embodiment, CTA hybrid structure 106 is a resultant output of a scheduler after performance of one or more processes (e.g., process 600 and/or 700, FIGS. 6 and/or 7). In at least one embodiment, a CTA hybrid structure 106 is recorded in memory as a history of work performed by a given CTA.

In at least one embodiment, CTA static structure 102, CTA dynamic structure 104, and/or CTA hybrid structure 106 (e.g., schedule structures) are image representations of runtime of a single CTA operating as part of a larger processing unit. In at least one embodiment, schedule structures are representations of methodology for assigning thread work amongst available resources. In at least one embodiment, hardware and/or software to schedule thread work use systems represented by scheduling structures to assign thread work. In at least one embodiment, said systems, if static, assign work by assigning a work packet to each available CTA, waiting until work is complete on a given CTA before assigning new work. In at least one embodiment, if all work can be completed on a given set of CTAs (e.g., 10 work packets for 10 CTAs) then static and hybrid systems are indistinguishable, and dynamic systems would act similarly but with potential for additional startup work (e.g., tile fetch 114). In at least one embodiment, if work packets exceed availability of CTA workspace (e.g., 1000 packets with 10 CTAs), then static systems would assign 10 packets to said 10 CTAs, wait for processing to complete, then assign new packets as CTAs become idle. In at least one embodiment, hybrid systems would do this first, then transition to dynamic systems, wherein CTAs would request additional work as they perform, seamlessly transitioning between packets with reduced downtime (e.g., prologue 108, epilogue 112, and/or tile fetch 114). In at least one embodiment, hybrid and dynamic systems, in said indicated examples, would operate similarly to reduce operational downtime, but hybrid reduces startup time by performing requesting work only after assignments have started (e.g., tile fetch 114 is performed concurrently in all CTAs). In at least one embodiment, given examples of CTA schedules would be represented by CTA static structure 102, CTA dynamic structure 104, and/or CTA hybrid structure 106, but entire arrays of CTAs would be multiple of said structures operating in parallel. In at least one embodiment, CTA static structure 102, CTA dynamic structure 104, and/or CTA hybrid structure 106 are indications of potential operation histories, but may include more successive iterations of themselves. In at least one embodiment, CTA dynamic structure 104 and/or CTA hybrid structure 106 may have successive iterations of tile fetch 114 performed in parallel with given MMA 110 to allow for processing of a next MMA 110. In at least one embodiment, said process may be performed any number of times until all work packets have been completed.

In at least one embodiment, a processor (e.g., processor 1102, FIG. 11) uses a prologue 108 to indicate information, such as information indicating a designation of work performed by a CTA as preliminary to planned operations. In at least one embodiment, a prologue 108 is work performed by a CTA prior to beginning MMA work that is considered generic. In at least one embodiment, for example, prologue 108 may contain operations pertaining to self determination, memory access checks, CTA ID checks, corruption checks, and/or any other process required for proper CTA function that is identical or extremely similar regardless of what work is to be performed. In at least one embodiment, prologue 108 is processes of software required for coordinated operations.

In at least one embodiment, a processor (e.g., processor 1102, FIG. 11) uses an MMA 110 to indicate information, such as information indicating a designation of work indicating Matrix Multiply Accumulate, memory reservation, matrix multiplication, arithmetic operations, or any computing operations pertinent and/or required to perform scheduled work for a scheduled GPU process. In at least one embodiment, MMA 110 represents a bulk of work performed by a CTA during processing. In at least one embodiment, MMA 110 represents work performed by a CTA that has intended outputs to be provided externally and saved outside confines of a processing CTA to allow for potential other use or continued processing by similar CTAs. In at least one embodiment, MMA 110 is processes of software required for completion of scheduled GPU work.

In at least one embodiment, a processor (e.g., processor 1102, FIG. 11) uses an epilogue 112 to indicate information, such as information indicating a designation of work performed by a CTA as post-operative to planned operations. In at least one embodiment, an epilogue 112 is work performed by a CTA after completion of MMA work that is required to end CTA processing on given work. In at least one embodiment, for example, epilogue 112 may contain operations to provide designated outputs to memory, release allocated processing resources previously reserved, designate completion of assigned work, and/or any other process required for proper CTA function required for completion of assigned work and/or potential shutdown. In at least one embodiment, epilogue 112 is processes of software required for coordinated operations.

In at least one embodiment, a processor (e.g., processor 1102, FIG. 11) uses a tile fetch 114 to indicate information, such as information indicating a designation of work performed by a CTA as planning operations pertaining to dynamic assignment of work. In at least one embodiment, a tile fetch 114 is work performed by a CTA prior to beginning a given related MMA that pertains to assignment of said MMA to a given CTA. In at least one embodiment, for example, tile fetch 114 may contain operations pertaining to determining potential future work requirements, requesting future work from a scheduling and/or runtime software, determining work assignments, cancelling pending CTA work, determining CTA work was properly cancelled, retrieving starting dimensions for future CTA work, and/or any other process required for proper CTA function required for dynamic assignment of work and/or preliminary operations prior to beginning said work. In at least one embodiment, a given tile fetch 114 is performed prior to a given dynamically assigned MMA 110. In at least one embodiment, tile fetch 114 is processes of software for coordinated operations.

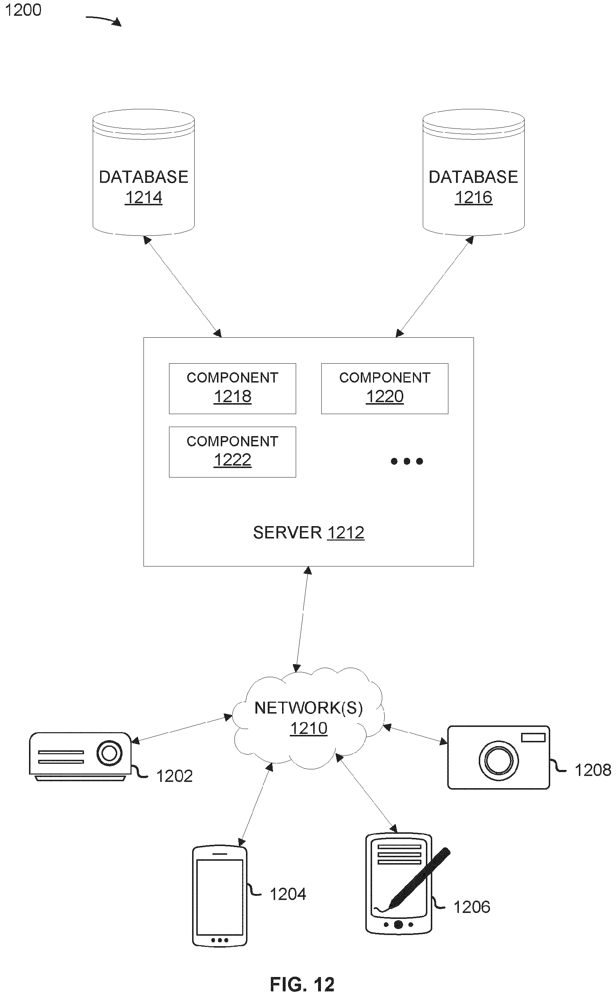

In at least one embodiment, system 100 includes one or more processors to perform an application programming interface (API) to cause one or more software threads identified by the API to be prevented from being performed by one or more processors, and/or otherwise perform operations described herein. In at least one embodiment, system 100 is, is included in, and/or otherwise includes systems illustrated in FIGS. 1-11 to perform an application programming interface (API) to cause one or more software threads identified by the API to be prevented from being performed by one or more processors, and/or otherwise perform operations described herein. In at least one embodiment, system 100 performs one or more processes illustrated in FIGS. 1-11, such as to perform an application programming interface (API) to cause one or more software threads identified by the API to be prevented from being performed by one or more processors. and/or otherwise perform operations described herein. In at least one embodiment, system 100 performs one or more processes illustrated in FIGS. 12-48, such as to perform an application programming interface (API) to cause one or more software threads identified by the API to be prevented from being performed by one or more processors, and/or otherwise perform operations described herein. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, system 100 includes one or more processors to perform an application programming interface (API) to cause one or more processors to indicate whether one or more software threads have been prevented from being performed, and/or otherwise perform operations described herein. In at least one embodiment, system 100 is, is included in, and/or otherwise includes systems illustrated in FIGS. 1-11 to perform an application programming interface (API) to cause one or more processors to indicate whether one or more software threads have been prevented from being performed, and/or otherwise perform operations described herein. In at least one embodiment, system 100 performs one or more processes illustrated in FIGS. 1-11, such as to perform an application programming interface (API) to cause one or more processors to indicate whether one or more software threads have been prevented from being performed. and/or otherwise perform operations described herein. In at least one embodiment, system 100 performs one or more processes illustrated in FIGS. 12-48, such as to perform an application programming interface (API) to cause one or more processors to indicate whether one or more software threads have been prevented from being performed, and/or otherwise perform operations described herein. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, system 100 includes one or more processors to perform an application programming interface (API) to indicate one or more software threads that have been prevented from being performed by one or more processors, and/or otherwise perform operations described herein. In at least one embodiment, system 100 is, is included in, and/or otherwise includes systems illustrated in FIGS. 1-11 to perform an application programming interface (API) to indicate one or more software threads that have been prevented from being performed by one or more processors, and/or otherwise perform operations described herein. In at least one embodiment, system 100 performs one or more processes illustrated in FIGS. 1-11, such as to perform an application programming interface (API) to indicate one or more software threads that have been prevented from being performed by one or more processors . and/or otherwise perform operations described herein. In at least one embodiment, system 100 performs one or more processes illustrated in FIGS. 12-48, such as to perform an application programming interface (API) to indicate one or more software threads that have been prevented from being performed by one or more processors, and/or otherwise perform operations described herein. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

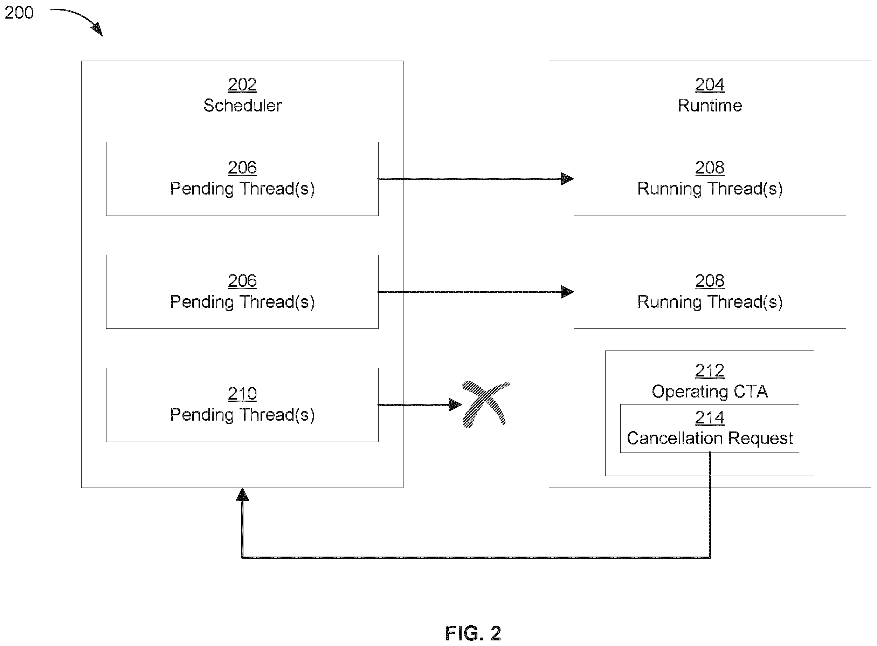

FIG. 2 illustrates an example of an operating CTA requesting a scheduler cancel a pending process thread, according to at least one embodiment. In at least one embodiment, a system 200 includes a scheduler 202 and/or a runtime 204. In at least one embodiment, a scheduler 202 includes one or more pending thread (s) 206 and/or one or more pending thread (s) 210. In at least one embodiment, a runtime 204 includes one or more running thread (s) 208 and/or one or more operating CTA 212. In at least one embodiment, an operating CTA 212 includes generation of a cancellation request 214. In at least one embodiment, a system 200 includes an example usage of one or more APIs to cancel one or more pending threads prepared by a scheduler.

In at least one embodiment, a processor (e.g., processor 1102, FIG. 11) uses a scheduler 202 to indicate information, such as information indicating hardware and/or software that prepares, organizes, and/or assigns work to threads, CTAs, thread blocks, SM (stream multiprocessor), and/or other computational groupings for organized processing. In at least one embodiment, a scheduler 202 receives inputs in a form of work to be performed, potentially separated into manageable pieces prior to reception. In at least one embodiment, a scheduler 202 outputs signals to one or more GPU processing systems in a form of work to be performed, responses to software requests, and/or other signals required for operation of a GPU. In at least one embodiment, a scheduler 202 receives signals comprising one or more cancellation request 214 indicating to cancel one or more pending thread (s) 210. In at least one embodiment, a scheduler 202 may then signal to cancel said one or more pending thread (s) 210, returning one or more CTA IDs to shared memory, indicating said potentially cancelled threads to said operating CTA 212.

In at least one embodiment, a processor (e.g., processor 1102, FIG. 11) uses a runtime 204 to indicate information, such as information indicating hardware and/or software that performs operations via designations (e.g., threads, thread blocks, CTAs, SM, and/or other computational groupings for organized processing) of computational mechanisms separated into operational groups. In at least one embodiment, a runtime 204 contains software and hardware performing one or more running thread (s) 208 and/or one or more operating CTA 212 to complete GPU work. In at least one embodiment, a runtime 204 receives inputs in a form of pending thread (s) 206 designations and identifications to allow for performance of work. In at least one embodiment, a runtime 204 provides outputs in a form of completed work generated by running thread (s) 208 and/or API calls to a scheduler 202. In at least one embodiment, for example, a runtime 204 containing one or more operating CTA 212 may send a cancellation request 214 to a scheduler 202 to cancel a pending thread (s) 210.

In at least one embodiment, a processor (e.g., processor 1102, FIG. 11) uses a pending thread (s) 206 to indicate information, such as information indicating thread identification and/or other identifiers and/or software designations to allow for performance of work. In at least one embodiment, a pending thread (s) 206 is work to be performed by one or more threads that has not yet been scheduled and/or assigned to a processing unit. In at least one embodiment, a pending thread (s) 206 is provided to a runtime 204 to be converted or utilized in initialization of one or more running thread (s) 208. In at least one embodiment, a pending thread is a series of data stored to memory and/or designated software required for one or more threads to be performed.

In at least one embodiment, a processor (e.g., processor 1102, FIG. 11) uses a running thread (s) 208 to indicate information, such as information indicating thread identification and/or other identifiers, software designations, and/or hardware performing work for a designated thread or thread group. In at least one embodiment, a running thread (s) 208 is converted from or initialized by a runtime 204 receiving information contained within a pending thread (s) 206. In at least one embodiment, a running thread (s) 208 performs work to completion once scheduled and/or assigned. **In** at least one embodiment, a running thread (s) 208 outputs computed outputs to shared memory, then performs termination work.

**In** at least one embodiment, a processor (e.g., processor 1102, FIG. 11) uses a pending thread (s) 210 to indicate information, such as information indicating a pending thread (e.g., pending thread (s) 206) that has been indicated to be cancelled by reception of a cancellation request 214 by a scheduler 202. **In** at least one embodiment, a pending thread (s) 210 contains similar or same information as a pending thread (s) 206. **In** at least one embodiment, a pending thread (s) 210 may be cancelled, preventing conversion and/or utilization for one or more running thread (s) 208. **In** at least one embodiment, a pending thread (s) 210 may be indicated to be cancelled but may be prevented from being cancelled. **In** at least one embodiment, for example, a pending thread (s) 210 may, in a period of time between submission of said cancellation request, begin a process to convert or be utilized into a running thread (s) 208, at which point cancellation may be denied. In at least one embodiment, if cancelled, a pending thread (s) 210 may provide indicated information to a scheduler 202 to be provided for one or more operating CTA 212 to begin work indicated by said pending thread (s) 210. In at least one embodiment, if cancelled, pending thread (s) 210 may have an associated thread identification saved to shared memory as an indication to prevent pending thread (s) 210 from being converted and/or utilized to a running thread (s) 208.

In at least one embodiment, a processor (e.g., processor 1102, FIG. 11) uses an operating CTA 210 to indicate information, such as information indicating a group of one or more running threads associated and/or sharing memory with one another to perform relatively associated operations. In at least one embodiment, an operating CTA 212 determines one or more pending thread (s) 210 are within scope to be performed after current work, generating a cancellation request 214 to cancel and assign indicated pending thread (s) 210 and providing said cancellation request 214 to a scheduler 202. In at least one embodiment, an operating CTA then views shared memory with a scheduler 202 to receive indication of reception of cancellation requests. In at least one embodiment, an operating CTA 212 is one or more CTA operating on work (e.g., performing one or more running thread (s) 208) and preparing to take over potential future work upon current work completion.

In at least one embodiment, a processor (e.g., processor 1102, FIG. 11) uses a cancellation request 214 to indicate information, such as information indicating an API call to perform an application programming interface (API) to cause one or more software threads to be prevented from being performed by one or more processors. In at least one embodiment, a cancellation request 214 contains data representing information indicating available resources of corresponding operating CTA 212 requesting more work and a request to cancel and reassign said thread work to a cancellation request 214 corresponding operating CTA 212. In at least one embodiment, a cancellation request 214 indicates available CTA resources and a determination that more work is requested.

In at least one embodiment, system 200 includes one or more processors to perform an application programming interface (API) to cause one or more software threads identified by the API to be prevented from being performed by one or more processors, and/or otherwise perform operations described herein. In at least one embodiment, system 200 is, is included in, and/or otherwise includes systems illustrated in FIGS. 1-11 to perform an application programming interface (API) to cause one or more software threads identified by the API to be prevented from being performed by one or more processors, and/or otherwise perform operations described herein. In at least one embodiment, system 200 performs one or more processes illustrated in FIGS. 1-11, such as to perform an application programming interface (API) to cause one or more software threads identified by the API to be prevented from being performed by one or more processors. and/or otherwise perform operations described herein. In at least one embodiment, system 200 performs one or more processes illustrated in FIGS. 12-48, such as to perform an application programming interface (API) to cause one or more software threads identified by the API to be prevented from being performed by one or more processors, and/or otherwise perform operations described herein. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, system 200 includes one or more processors to perform an application programming interface (API) to cause one or more processors to indicate whether one or more software threads have been prevented from being performed, and/or otherwise perform operations described herein. In at least one embodiment, system 200 is, is included in, and/or otherwise includes systems illustrated in FIGS. 1-11 to perform an application programming interface (API) to cause one or more processors to indicate whether one or more software threads have been prevented from being performed, and/or otherwise perform operations described herein. In at least one embodiment, system 200 performs one or more processes illustrated in FIGS. 1-11, such as to perform an application programming interface (API) to cause one or more processors to indicate whether one or more software threads have been prevented from being performed. and/or otherwise perform operations described herein. In at least one embodiment, system 200 performs one or more processes illustrated in FIGS. 12-48, such as to perform an application programming interface (API) to cause one or more processors to indicate whether one or more software threads have been prevented from being performed, and/or otherwise perform operations described herein. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, system 200 includes one or more processors to perform an application programming interface (API) to indicate one or more software threads that have been prevented from being performed by one or more processors, and/or otherwise perform operations described herein. In at least one embodiment, system 200 is, is included in, and/or otherwise includes systems illustrated in FIGS. 1-11 to perform an application programming interface (API) to indicate one or more software threads that have been prevented from being performed by one or more processors, and/or otherwise perform operations described herein. In at least one embodiment, system 200 performs one or more processes illustrated in FIGS. 1-11, such as to perform an application programming interface (API) to indicate one or more software threads that have been prevented from being performed by one or more processors . and/or otherwise perform operations described herein. In at least one embodiment, system 200 performs one or more processes illustrated in FIGS. 12-48, such as to perform an application programming interface (API) to indicate one or more software threads that have been prevented from being performed by one or more processors, and/or otherwise perform operations described herein. In at least one embodiment, one or more systems depicted in relation to preceding figures are utilized to perform an clusterlaunchcontrol.query_cancel.get_first_ctaid API to request starting thread dimensions in full for indicated threads to be performed after prior cancellation.

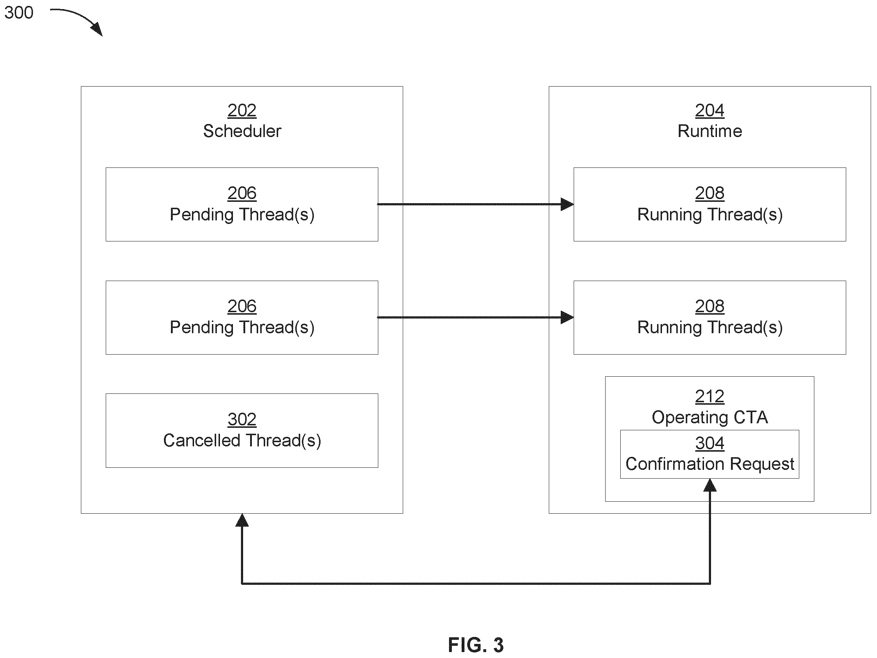

FIG. 3 illustrates an example of an operating CTA confirming a scheduler cancelled a pending process thread, according to at least one embodiment. In at least one embodiment, a system 300 includes a scheduler 202and/or a runtime 204. In at least one embodiment, a scheduler 202 contains one or more pending thread (s) 206 and/or one or more cancelled thread (s) 302. In at least one embodiment, a runtime 204 contains one or more running thread (s) 208 and/or one or more operating CTA 212. In at least one embodiment, an operating CTA 212 includes generation of a confirmation request 304. In at least one embodiment, a system 300 includes an example usage of one or more APIs to confirm cancellation of one or more pending threads prepared by a scheduler.

In at least one embodiment, a processor (e.g., processor 1102, FIG. 11) uses a cancelled thread (s) 302 to indicate information, such as information indicating data representing thread work successfully cancelled by a scheduler (e.g., scheduler 202, FIG. 2) as a result of reception of a cancellation request (e.g., cancellation request 214, FIG. 2). In at least one embodiment, a cancelled thread (s) 302 is a pending thread (e.g., pending thread (s) 210, FIG. 2) that has been indicated to be cancelled and saved to shared memory to indicate cancellation has been attempted. In at least one embodiment, a cancelled thread (s) 302 is also indicated via thread identification within memory to prevent conversion and/or utilization into a running thread (e.g., running thread (s) 208, FIG. 2). In at least one embodiment, a cancelled thread (s) 302 contains information indicating thread work that an operating CTA (e.g., operating CTA 212, FIG. 2) has indicated to have assigned to be performed by itself after completion of current work, in parallel with shutdown work (e.g., epilogue 112, FIG. 1) for said current work.

In at least one embodiment, a processor (e.g., processor 1102, FIG. 11) uses a confirmation request 304 to indicate information, such as information indicating an API call to perform an application programming interface (API) to cause one or more processors to indicate whether one or more software threads have been prevented from being performed. In at least one embodiment, a confirmation request 304 is provided as input to a scheduler (e.g., scheduler 202, FIG. 2) to request indication of which threads previously requested to be cancelled have been successfully completely cancelled. In at least one embodiment, a confirmation request is answered by a scheduler (e.g., scheduler 202, FIG. 2) by returning thread identification for threads cancelled by a prior cancellation request. In at least one embodiment, a confirmation request 304 returns information, such as thread identification for cancelled threads, pertinent to ensure a correlated operating CTA (e.g., operating CTA 212, FIG. 2) does not operate on a same work in parallel with a running thread (e.g., running thread (s) 208, FIG. 2) to produce redundant work and/or outputs.

In at least one embodiment, system 300 includes one or more processors to perform an application programming interface (API) to cause one or more software threads identified by the API to be prevented from being performed by one or more processors, and/or otherwise perform operations described herein. In at least one embodiment, system 300 is, is included in, and/or otherwise includes systems illustrated in FIGS. 1-11 to perform an application programming interface (API) to cause one or more software threads identified by the API to be prevented from being performed by one or more processors, and/or otherwise perform operations described herein. In at least one embodiment, system 300 performs one or more processes illustrated in FIGS. 1-11, such as to perform an application programming interface (API) to cause one or more software threads identified by the API to be prevented from being performed by one or more processors. and/or otherwise perform operations described herein. In at least one embodiment, system 300 performs one or more processes illustrated in FIGS. 12-48, such as to perform an application programming interface (API) to cause one or more software threads identified by the API to be prevented from being performed by one or more processors, and/or otherwise perform operations described herein. In at least one embodiment, one or more systems depicted in relation to preceding figures are utilized to perform an clusterlaunchcontrol.try_cancel API to perform a request to cancel pending process threads to reallocate said thread work to an operating CTA.

In at least one embodiment, system 300 includes one or more processors to perform an application programming interface (API) to cause one or more processors to indicate whether one or more software threads have been prevented from being performed, and/or otherwise perform operations described herein. In at least one embodiment, system 300 is, is included in, and/or otherwise includes systems illustrated in FIGS. 1-11 to perform an application programming interface (API) to cause one or more processors to indicate whether one or more software threads have been prevented from being performed, and/or otherwise perform operations described herein. In at least one embodiment, system 300 performs one or more processes illustrated in FIGS. 1-11, such as to perform an application programming interface (API) to cause one or more processors to indicate whether one or more software threads have been prevented from being performed. and/or otherwise perform operations described herein. In at least one embodiment, system 300 performs one or more processes illustrated in FIGS. 12-48, such as to perform an application programming interface (API) to cause one or more processors to indicate whether one or more software threads have been prevented from being performed, and/or otherwise perform operations described herein. In at least one embodiment, one or more systems depicted in relation to preceding figures are utilized to perform an clusterlaunchcontrol.query_cancel.is_canceled API to query a scheduling hardware and/or software to determine if indicated threads have been successfully cancelled.

In at least one embodiment, system 300 includes one or more processors to perform an application programming interface (API) to indicate one or more software threads that have been prevented from being performed by one or more processors, and/or otherwise perform operations described herein. In at least one embodiment, system 300 is, is included in, and/or otherwise includes systems illustrated in FIGS. 1-11 to perform an application programming interface (API) to indicate one or more software threads that have been prevented from being performed by one or more processors, and/or otherwise perform operations described herein. In at least one embodiment, system 300 performs one or more processes illustrated in FIGS. 1-11, such as to perform an application programming interface (API) to indicate one or more software threads that have been prevented from being performed by one or more processors . and/or otherwise perform operations described herein. In at least one embodiment, system 300 performs one or more processes illustrated in FIGS. 12-48, such as to perform an application programming interface (API) to indicate one or more software threads that have been prevented from being performed by one or more processors, and/or otherwise perform operations described herein. In at least one embodiment, one or more systems depicted in relation to preceding figures are utilized to perform an clusterlaunchcontrol.query_cancel.get_first_ctaid API to request starting thread dimensions in full for indicated threads to be performed after prior cancellation.

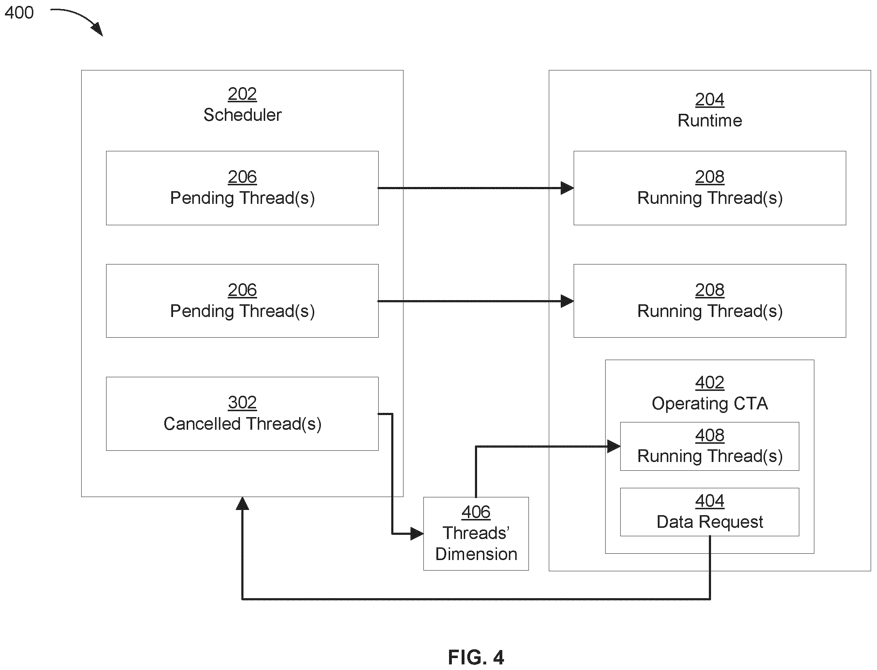

FIG. 4 illustrates an example of an operating CTA requesting a scheduler provide dimensions for a previously cancelled process thread and assuming thread work, according to at least one embodiment. In at least one embodiment, a system 400 includes a scheduler 202, runtime 204, and/or one or more threads' dimension 406. In at least one embodiment, a scheduler 202 includes one or more pending thread (s) 206 and/or one or more cancelled thread (s) 302. In at least one embodiment, a runtime 204 includes one or more running thread (s) 208 and/or one or more operating CTA 402. In at least one embodiment, an operating CTA 402 include one or more running thread (s) 408 and/or generation of a data request 404. In at least one embodiment, a system 400 includes an example usage of one or more APIs to request beginning dimensions of one or more confirmed cancelled threads (e.g., cancelled thread (s) 302, FIG. 3) to begin working on said threads upon completion of current work.

In at least one embodiment, a processor (e.g., processor 1102, FIG. 11) uses an operating CTA 402 to indicate information, such as information indicating a group of one or more running threads associated and/or sharing memory with one another to perform relatively associated operations, including operations of newly assigned work. In at least one embodiment, an operating CTA 402 performs work previously assigned to it by a scheduler (e.g., prior work) and may, in parallel with work execution, request data pertaining to cancelled thread dimensions (e.g., cancelled thread (s) 302, FIG. 3) to begin performing said thread work after completion of currently processing work. In at least one embodiment, an operating CTA 402 generates a data request 404 to request, via one or more API calls, thread dimensions (e.g., threads' dimension 406) to begin work when able.

In at least one embodiment, a processor (e.g., processor 1102, FIG. 11) uses a data request 404 to indicate information, such as information indicating an API call to perform an application programming interface (API) to indicate one or more software threads that have been prevented from being performed by one or more processors . In at least one embodiment, a data request 404 is provided as input to a scheduler (e.g., scheduler 202, FIG. 2) to request beginning dimensions of threads that have been confirmed to be cancelled (e.g., cancelled thread (s) 302, FIG. 3). In at least one embodiment, a data request 404 is answered by a scheduler (e.g., scheduler 202, FIG. 2) by returning beginning dimensions (e.g., threads' dimension 406) of said one or more cancelled threads (e.g., cancelled thread (s) 302, FIG. 3) in to shared memory. In at least one embodiment, a data request 404 returns information, such as individual thread dimensions for beginning cancelled threads, pertinent to ensure a correlated operating CTA (e.g., operating CTA 402) can perform startup work (e.g., prologue 108, FIG. 1) for said new work in parallel with work from already running thread assignments. In at least one embodiment, reception of a data request 404 results in a scheduler (e.g., scheduler 202, FIG. 2) generating and outputting to shared memory one or more threads' dimension 406.

In at least one embodiment, a processor (e.g., processor 1102, FIG. 11) uses a threads' dimension 406 to indicate information, such as information indicating individual dimensions corresponding to X, Y, or Z coordinates for cancelled threads (e.g., cancelled thread (s) 302, FIG. 3) and/or thread identification that may allow one or more CTAs (e.g., operating CTA 402) to perform indicated work of threads correlating to said thread dimensions. In at least one embodiment, thread ID (e.g., thread identification) is algorithmically correlated to said thread dimensions, and/or can be calculated algorithmically using said dimensions. In at least one embodiment, thread dimensions are, as an example, indications of shape, size, and internal location of a first thread within said dimensions. In at least one embodiment, a thread ID is an indication of an index, but does not guarantee unique identifiers, whereas specific thread dimensions are unique to a given thread. In at least one embodiment, threads' dimension 406 may also include memory addresses, special instruction, and/or any other pertinent data required for processing of associated cancelled threads (e.g., cancelled thread (s) 302, FIG. 3). In at least one embodiment, threads' dimension 406 is output by a scheduler (e.g., scheduler 202, FIG. 2) as a result of reception of a data request 404 to shared memory, to allow access by one or more operating CTAs (e.g., operating CTA 402).

In at least one embodiment, a processor (e.g., processor 1102, FIG. 11) uses a running thread (s) 408 to indicate information, such as information indicating thread identification and/or other identifiers, software designations, and/or hardware performing work for a designated thread or thread group that intends to operate on thread work designated by one or more received threads' dimension 406 upon completion of current work. In at least one embodiment, a running thread (s) 408 is functionally identical to any other running thread (e.g., running thread (s) 208, FIG. 2), but has received confirmation of cancelled requested threads and/or thread dimensions (e.g., threads' dimension 406) and has been indicated to operate on said thread work upon completion of current thread work and in parallel with shutdown work (e.g., epilogue 112, FIG. 1) of previous work. In at least one embodiment, a running thread (s) 408, for example, would perform processing on current work in parallel with work required to generate API requests outline further in this document to request more work, as well as preliminary (e.g., prologue 108, FIG. 1) work required to begin processing newly assigned work described by one or more threads' dimension 406.

In at least one embodiment, system 400 includes one or more processors to perform an application programming interface (API) to cause one or more software threads identified by the API to be prevented from being performed by one or more processors, and/or otherwise perform operations described herein. In at least one embodiment, system 400 is, is included in, and/or otherwise includes systems illustrated in FIGS. 1-11 to perform an application programming interface (API) to cause one or more software threads identified by the API to be prevented from being performed by one or more processors, and/or otherwise perform operations described herein. In at least one embodiment, system 400 performs one or more processes illustrated in FIGS. 1-11, such as to perform an application programming interface (API) to cause one or more software threads identified by the API to be prevented from being performed by one or more processors. and/or otherwise perform operations described herein. In at least one embodiment, system 400 performs one or more processes illustrated in FIGS. 12-48, such as to perform an application programming interface (API) to cause one or more software threads identified by the API to be prevented from being performed by one or more processors, and/or otherwise perform operations described herein. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, system 400 includes one or more processors to perform an application programming interface (API) to cause one or more processors to indicate whether one or more software threads have been prevented from being performed, and/or otherwise perform operations described herein. In at least one embodiment, system 400 is, is included in, and/or otherwise includes systems illustrated in FIGS. 1-11 to perform an application programming interface (API) to cause one or more processors to indicate whether one or more software threads have been prevented from being performed, and/or otherwise perform operations described herein. In at least one embodiment, system 400 performs one or more processes illustrated in FIGS. 1-11, such as to perform an application programming interface (API) to cause one or more processors to indicate whether one or more software threads have been prevented from being performed. and/or otherwise perform operations described herein. In at least one embodiment, system 400 performs one or more processes illustrated in FIGS. 12-48, such as to perform an application programming interface (API) to cause one or more processors to indicate whether one or more software threads have been prevented from being performed, and/or otherwise perform operations described herein. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, system 400 includes one or more processors to perform an application programming interface (API) to indicate one or more software threads that have been prevented from being performed by one or more processors, and/or otherwise perform operations described herein. In at least one embodiment, system 400 is, is included in, and/or otherwise includes systems illustrated in FIGS. 1-11 to perform an application programming interface (API) to indicate one or more software threads that have been prevented from being performed by one or more processors, and/or otherwise perform operations described herein. In at least one embodiment, system 400 performs one or more processes illustrated in FIGS. 1-11, such as to perform an application programming interface (API) to indicate one or more software threads that have been prevented from being performed by one or more processors . and/or otherwise perform operations described herein. In at least one embodiment, system 400 performs one or more processes illustrated in FIGS. 12-48, such as to perform an application programming interface (API) to indicate one or more software threads that have been prevented from being performed by one or more processors, and/or otherwise perform operations described herein. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

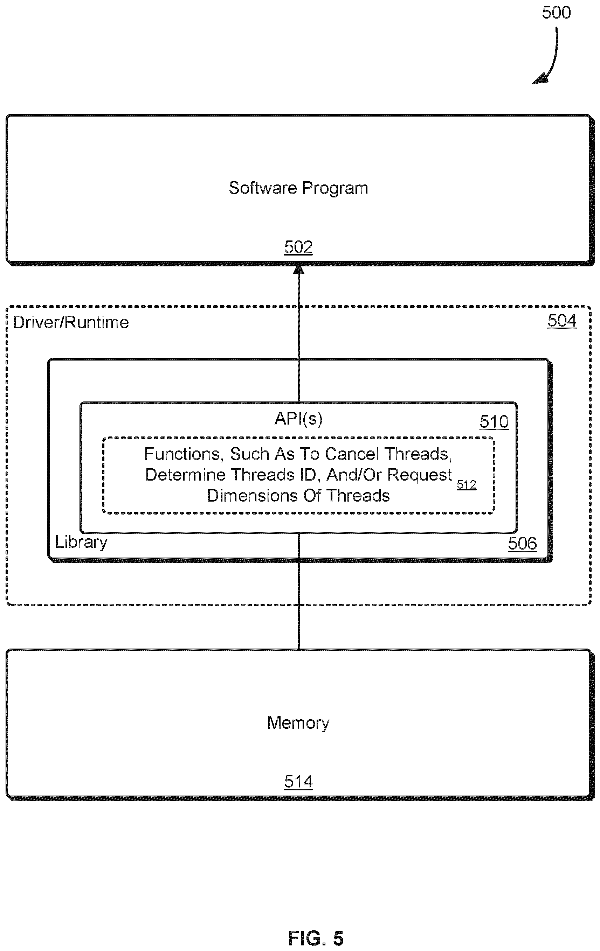

FIG. 5 is a block diagram 500 illustrating a driver and/or runtime comprising one or more libraries to provide one or more application programming interfaces (APIs), in accordance with at least one embodiment. In at least one embodiment, a software program 502 is a software module. In at least one embodiment, software program 502 comprises one or more software modules. In at least one embodiment, a software module is as further described non-exclusively in FIG. 5. In at least one embodiment, one or more APIs 510 are sets of software instructions that, if executed, cause one or more processors (e.g., processor 1102, FIG. 11) to perform one or more computational operations. In at least one embodiment, one or more APIs 510 are distributed or otherwise provided as a part of one or more libraries 506, drivers/runtimes 504, and/or any other grouping of software and/or executable code further described herein. In at least one embodiment, one or more APIs 510 perform one or more computational operations in response to invocation by software programs 502. In at least one embodiment, a software program 502 is a collection of software code, commands, instructions, or other sequences of text to instruct a computing device to perform one or more computational operations and/or invoke one or more other sets of instructions, such as APIs 510 or API functions 512, to be executed. In at least one embodiment, functionality provided by one or more APIs 510 include software functions 512, such as those usable to accelerate one or more portions of software programs 502 using one or more parallel processing units (PPUs), such as graphics processing units (GPUs).

In at least one embodiment, APIs 510 are hardware interfaces to one or more circuits to perform one or more computational operations. In at least one embodiment, one or more software APIs 510 described herein are implemented as one or more circuits to perform one or more techniques described below in conjunction with FIGS. 1-11. In at least one embodiment, one or more software programs 502 comprise instructions that, if executed, cause one or more hardware devices and/or circuits to perform one or more techniques further described in conjunction with FIGS. 1-11.

In at least one embodiment, software programs 502, such as user-implemented software programs, utilize one or more application programming interfaces (APIs) 510 to perform various computing operations, such as memory reservation, matrix multiplication, arithmetic operations, or any computing operation performed by parallel processing units (PPUs), such as graphics processing units (GPUs), as further described herein. In at least one embodiment, one or more APIs 510 provide a set of callable functions 512, referred to herein as APIs, API functions, and/or functions, that individually perform one or more computing operations, such as computing operations related to parallel computing. For example, in an embodiment, one or more APIs 510 provide functions 512 to perform an application programming interface (API) to cause one or more software threads identified by an API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein.

In at least one embodiment, one or more software programs 502 interact or otherwise communicate with one or more APIs 510 to perform one or more computing operations using one or more PPUs, such as GPUs. In at least one embodiment, one or more computing operations using one or more PPUs comprise at least one or more groups of computing operations to be accelerated by execution at least in part by said one or more PPUs. In at least one embodiment, one or more software programs 502 interact with one or more APIs 510 to perform cancellation requests, confirmation requests, and/or data requests related to pending and/or cancelled threads indicated by a scheduler.

In at least one embodiment, an interface is software instructions that, if executed, provide access to one or more functions 512 provided by one or more APIs 510. In at least one embodiment, a software program 502 uses a local interface when a software developer compiles one or more software programs 502 in conjunction with one or more libraries 506 comprising or otherwise providing access to one or more APIs 510. In at least one embodiment, one or more software programs 502 are compiled statically in conjunction with pre-compiled libraries 506 or uncompiled source code comprising instructions to perform one or more APIs 510. In at least one embodiment, one or more software programs 502 are compiled dynamically and said one or more software programs utilize a linker to link to one or more pre-compiled libraries 506 comprising one or more APIs 510.

In at least one embodiment, a software program 502 uses a remote interface when a software developer executes a software program that utilizes or otherwise communicates with a library 506 comprising one or more APIs 510 over a network or other remote communication medium. In at least one embodiment, one or more libraries 506 comprising one or more APIs 510 are to be performed by a remote computing service, such as a computing resource services provider. In another embodiment, one or more libraries 506 comprising one or more APIs 510 are to be performed by any other computing host providing said one or more APIs 510 to one or more software programs 502.

In at least one embodiment, a processor (e.g., processor 1102, FIG. 11) performing or using one or more software programs 502 call, use, perform, or otherwise implement one or more APIs 510 to allocate and otherwise manage memory 514 to be used by said software programs 502. In at least one embodiment, one or more software programs 502 utilize one or more APIs 510 to allocate and otherwise manage memory 514 to be used by one or more portions of said software programs 502 to be accelerated using one or more PPUs, such as GPUs or any other accelerator or processor further described herein.

In at least one embodiment, API 510 is an API to facilitate parallel computing. In at least one embodiment, API 510 is any other API further described herein. In at least one embodiment, API 510 is provided by a driver and/or runtime 504. In at least one embodiment, an API 510 is provided by a CUDA user-mode driver. In at least one embodiment, an API 510 is provided by a CUDA runtime. In at least one embodiment, a driver (e.g., driver/runtime 504) is data values and software instructions that, if executed, perform or otherwise facilitate operation of one or more functions 512 of an API 510 during load and execution of one or more portions of a software program 502. In at least one embodiment, a runtime 504 is data values and software instructions that, if executed, perform or otherwise facilitate operation of one or more functions 512 of an API 510 during execution of a software program 502. In at least one embodiment, one or more software programs 502 utilize one or more APIs 510 implemented or otherwise provided by a driver and/or runtime 504 to perform combined arithmetic operations by said one or more software programs 502 during execution by one or more PPUs, such as GPUs.

In at least one embodiment, one or more software programs 502 utilize one or more APIs 510 provided by a driver and/or runtime 504 to perform combined arithmetic operations of one or more PPUs, such as GPUs. In at least one embodiment, one or more APIs 510 provide combined arithmetic operations through a driver and/or runtime 504, as described above. In at least one embodiment, one or more software programs 502 utilize one or more APIs 510 provided by a driver and/or runtime 504 to allocate or otherwise reserve one or more blocks of memory 514 of one or more PPUs, such as GPUs. In at least one embodiment, one or more software programs 502 utilize one or more APIs 510 provided by a driver and/or runtime 504 to allocate or otherwise reserve blocks of memory 514. In at least one embodiment, one or more processors perform one or more APIs 510 to perform an application programming interface (API) to cause one or more software threads identified by an API to be prevented from being performed by one or more processors, perform an application programming interface (API) to cause one or more processors to indicate whether one or more software threads have been prevented from being performed, and/or perform an application programming interface (API) to indicate one or more software threads that have been prevented from being performed by one or more processors .

To improve software programs 502 usability and/or optimization of one or more portions of said software programs 502 to be accelerated by one or more PPUs, such as GPUs, in an embodiment, one or more APIs 510 provide one or more API functions 512 to perform an application programming interface (API) to cause one or more software threads identified by an API to be prevented from being performed by one or more processors, perform an application programming interface (API) to cause one or more processors to indicate whether one or more software threads have been prevented from being performed, and/or perform an application programming interface (API) to indicate one or more software threads that have been prevented from being performed by one or more processors .

In at least one embodiment, system 500 includes one or more processors to perform an application programming interface (API) to cause one or more software threads identified by the API to be prevented from being performed by one or more processors, and/or otherwise perform operations described herein. In at least one embodiment, system 500 is, is included in, and/or otherwise includes systems illustrated in FIGS. 1-11 to perform an application programming interface (API) to cause one or more software threads identified by the API to be prevented from being performed by one or more processors, and/or otherwise perform operations described herein. In at least one embodiment, system 500 performs one or more processes illustrated in FIGS. 1-11, such as to perform an application programming interface (API) to cause one or more software threads identified by the API to be prevented from being performed by one or more processors. and/or otherwise perform operations described herein. In at least one embodiment, system 500 performs one or more processes illustrated in FIGS. 12-48, such as to perform an application programming interface (API) to cause one or more software threads identified by the API to be prevented from being performed by one or more processors, and/or otherwise perform operations described herein. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, system 500 includes one or more processors to perform an application programming interface (API) to cause one or more processors to indicate whether one or more software threads have been prevented from being performed, and/or otherwise perform operations described herein. In at least one embodiment, system 500 is, is included in, and/or otherwise includes systems illustrated in FIGS. 1-11 to perform an application programming interface (API) to cause one or more processors to indicate whether one or more software threads have been prevented from being performed, and/or otherwise perform operations described herein. In at least one embodiment, system 500 performs one or more processes illustrated in FIGS. 1-11, such as to perform an application programming interface (API) to cause one or more processors to indicate whether one or more software threads have been prevented from being performed. and/or otherwise perform operations described herein. In at least one embodiment, system 500 performs one or more processes illustrated in FIGS. 12-48, such as to perform an application programming interface (API) to cause one or more processors to indicate whether one or more software threads have been prevented from being performed, and/or otherwise perform operations described herein.

In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, system 500 includes one or more processors to perform an application programming interface (API) to indicate one or more software threads that have been prevented from being performed by one or more processors, and/or otherwise perform operations described herein. In at least one embodiment, system 500 is, is included in, and/or otherwise includes systems illustrated in FIGS. 1-11 to perform an application programming interface (API) to indicate one or more software threads that have been prevented from being performed by one or more processors, and/or otherwise perform operations described herein. In at least one embodiment, system 500 performs one or more processes illustrated in FIGS. 1-11, such as to perform an application programming interface (API) to indicate one or more software threads that have been prevented from being performed by one or more processors . and/or otherwise perform operations described herein. In at least one embodiment, system 500 performs one or more processes illustrated in FIGS. 12-48, such as to perform an application programming interface (API) to indicate one or more software threads that have been prevented from being performed by one or more processors, and/or otherwise perform operations described herein. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

FIG. 6 illustrates an example of a flow diagram of process 600 illustrating an example process to dynamically assign work to operating CTAs during active runtime. In at least one embodiment, one or more processors (e.g., processor 1102, FIG. 11) uses a process 600 to allocate work dynamically among active CTA groups. In at least one embodiment, a process 600 involves one or more steps to begin 602, then to determine thread dimensions 604, then to schedule starting threads to CTAs 606, then to allow CTA request processes 608, then to assign dynamic threads 610, then to determine if intended work fully complete 612. In at least one embodiment, if no, then return to allow CTA request process 608. In at least one embodiment, if yes, then proceed to end 614. In at least one embodiment, a process 600 then proceeds to output completed scheduled work.

In at least one embodiment, some or all of process 600 (or any other processes described herein, or variations and/or combinations thereof) is performed under control of one or more computer systems configured with computer executable instructions and is implemented as code (e.g., computer executable instructions, one or more computer programs, or one or more applications) executing collectively on one or more processors (e.g., processor 1102, FIG. 11), by hardware, software, or combinations thereof. In at least one embodiment, code is stored on a computer-readable storage medium representing a computer program comprising a plurality of computer-readable instructions executable by one or more processors. In at least one embodiment, a computer-readable storage medium is a non-transitory computer-readable medium. In at least one embodiment, at least some computer-readable instructions usable to perform process 600 are not stored solely using transitory signals (e.g., a propagating transient electric or electromagnetic transmission). In at least one embodiment, a non-transitory computer-readable medium does not necessarily include non-transitory data storage circuitry (e.g., buffers, caches, and queues) within transceivers of transitory signals. In at least one embodiment, process 600 is performed at least in part on a computer system such as those described elsewhere in this disclosure. In at least one embodiment, logic (e.g., hardware, software, or a combination of hardware and software) performs process 600.

In at least one embodiment, a processor (e.g., processor 1102, FIG. 11) begins 602 a process 600, when invoked, to perform assignment of work between available threads, thread blocks, CTAs, and/or other computational designations. In at least one embodiment, received inputs are using one or more data formats, such that process 600 may then iterate to a next feature (e.g., to indicate a first feature to begin 602). In at least one embodiment, a process 600 proceeds to iterate to determine thread dimensions 604, wherein a scheduler, runtime, or other designation of process organization software and/or hardware (e.g., organizer) determines dimensions of intended work, to allow scheduling threads to perform thread work in a static scheduling method (e.g., CTA static structure 102, FIG. 1). In at least one embodiment, a process 600 then iterates to schedule starting threads to CTAs 606, wherein a designated organizer assigns work to all available CTAs and/or threads to begin processing work. In at least one embodiment, a process 600 then iterates to allow CTA request process 608, wherein a designated organizer allows execution of requests for dynamically assigned work, using a process (e.g., process 700, FIG. 7) wherein CTAs are allowed to request pending threads be cancelled to allow said CTAs to assume said work upon completion of current work. In at least one embodiment, a process 600 may then iterate to assign dynamic threads 610, wherein requested threads cancelled in dynamic thread cancellation and preceding processes (e.g., process 700, FIG. 7) are assigned and beginning thread dimensions (e.g., threads' dimension 406, FIG. 4) are provided to allow for preprocessing (e.g., prologue 108 and/or tile fetch 114, FIG. 1) to be performed in parallel with current work, and to allow said work to be assumed after current work resolves and proceeds to shutdown work (e.g., epilogue 112, FIG. 1). In at least one embodiment, a process 600 may then iterate to determine if intended work fully complete 612, wherein a designated scheduler determines if work has been fully assigned and completed. In at least one embodiment, if no, a process 600 may then iterate back to an allow CTA request process 608 step. In at least one embodiment, if yes, a process 600 may then iterate to end 614, outputting completed work outputs to memory. In at least one embodiment, if a process 600 completes processing of designated thread work, indicates to complete processing of designated thread work, and/or otherwise returns an error, a process 600 may terminate.

In at least one embodiment, processors use a process 600 comprising one or more steps to cause perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, as an example, a machine readable medium having stored therein a set of instructions, which if performed by one or more processors, cause said one or more processors to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, process 600 includes, is included in, and/or otherwise includes systems illustrated in FIGS. 1-11 to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or perform other operations described herein. In at least one embodiment, process 600 is performed by one or more systems illustrated in FIGS. 12-48, such as to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, one or more systems depicted in relation to preceding figures are utilized to perform an clusterlaunchcontrol.try_cancel to perform a request to cancel pending process threads to reallocate said thread work to an operating CTA. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

In at least one embodiment, processors use a process 600 comprising one or more steps to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, as an example, a machine-readable medium having stored thereon a set of instructions, which if performed by one or more processors, cause said one or more processors to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, process 600 includes, is included in, and/or otherwise includes systems illustrated in FIGS. 1-11 to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, process 600 is performed by one or more systems illustrated in FIGS. 1-11, such as to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, process 600 is performed by one or more systems illustrated in FIGS. 12 - 48, such as to cause perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein.

FIG. 7 illustrates an example of a flow diagram of process 700 illustrating an example process wherein a CTA requests more thread work from a scheduler by cancelling pending threads, according to at least one embodiment. In at least one embodiment, one or more processors (e.g., processor 1102, FIG. 11) uses a process 700 to request a pending process thread be cancelled, ensure cancellation was successful, then assume said thread work. In at least one embodiment, a process 700 includes one or more steps to begin 702, then to consider available resources 704, then to cancel pending thread(s) 706, then to ensure thread cancellation 708, then to request thread start dimensions 710, then to assume new work 712, then to end 714. In at least one embodiment, a process 700 then proceeds to inform a designated scheduler of assumed work.

In at least one embodiment, some or all of process 700 (or any other processes described herein, or variations and/or combinations thereof) is performed under control of one or more computer systems configured with computer executable instructions and is implemented as code (e.g., computer executable instructions, one or more computer programs, or one or more applications) executing collectively on one or more processors (e.g., processor 1102, FIG. 11), by hardware, software, or combinations thereof. In at least one embodiment, code is stored on a computer-readable storage medium representing a computer program comprising a plurality of computer-readable instructions executable by one or more processors. In at least one embodiment, a computer-readable storage medium is a non-transitory computer-readable medium. In at least one embodiment, at least some computer-readable instructions usable to perform process 700 are not stored solely using transitory signals (e.g., a propagating transient electric or electromagnetic transmission). In at least one embodiment, a non-transitory computer-readable medium does not necessarily include non-transitory data storage circuitry (e.g., buffers, caches, and queues) within transceivers of transitory signals. In at least one embodiment, process 700 is performed at least in part on a computer system such as those described elsewhere in this disclosure. In at least one embodiment, logic (e.g., hardware, software, or a combination of hardware and software) performs process 700. In at least one embodiment, one or more systems depicted in relation to preceding figures are utilized to perform an clusterlaunchcontrol.try_cancel to perform a request to cancel pending process threads to reallocate said thread work to an operating CTA. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

In at least one embodiment, a processor (e.g., processor 1102, FIG. 11) begins 702 a process 700, when invoked, to perform assuming of cancelled pending thread work. In at least one embodiment, received inputs are using one or more data formats, such that process 700 may then iterate to a next feature (e.g., to indicate a first feature to begin 702). In at least one embodiment, a process 700 proceeds to iterate to consider available resources 704, wherein one or more CTAs performing current work (e.g., Operating CTA 212 and/or 402, FIGS. 2, 3, and/or 4) use internal access to processing resources to determine indications of availability to perform additional and/or successive thread work. In at least one embodiment, a process 700 may then iterate to cancel pending thread(s) 706, wherein said CTA performs an API call to a designated scheduler to request cancellation of one or more threads (e.g., cancellation request 214, FIG. 2) as determined by a scheduler based on available resources to said CTA. In at least one embodiment, a process 700 may then iterate to ensure thread cancellation 708, wherein said threads indicated to be cancelled are determined if cancellation was successful via an API call (e.g., confirmation request 304, FIG. 3) to a designated scheduler, wherein said scheduler indicates cancellation, lack of cancellation, or to wait for further response. In at least one embodiment, a process 700 may then proceed to request start dimensions 710, wherein said one or more CTAs indicate, through an API call (e.g., data request 404, FIG. 4), to provide beginning dimensions (e.g., threads' dimension 406, FIG. 4) and thread identity of previously successfully cancelled threads to allow said one or more CTAs to assume said work. In at least one embodiment, a process 700 may then iterate to assume new work 712, wherein said CTAs perform processes preliminary to beginning indicated previously cancelled thread work (e.g., prologue 108 and/or tile fetch 114, FIG. 1) in parallel with current work to allow for processing of assumed work upon completion of current work. In at least one embodiment, a process 700 may then proceed to end 714, wherein a process 700 may then proceed to output indications of current and assumed work, as well as indications required for organized processing between said CTA and any other CTAs, threads, thread blocks, and/or other designations of processing units. In at least one embodiment, if a process 700 completes cancellation and assuming of pending thread work, indicates to cancel and assume pending thread work, and/or otherwise returns an error, a process 700 may terminate.

In at least one embodiment, processors use a process 700 comprising one or more steps to cause perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, as an example, a machine readable medium having stored therein a set of instructions, which if performed by one or more processors, cause said one or more processors to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, process 700 includes, is included in, and/or otherwise includes systems illustrated in FIGS. 1-11 to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or perform other operations described herein. In at least one embodiment, process 700 is performed by one or more systems illustrated in FIGS. 12-48, such as to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein.

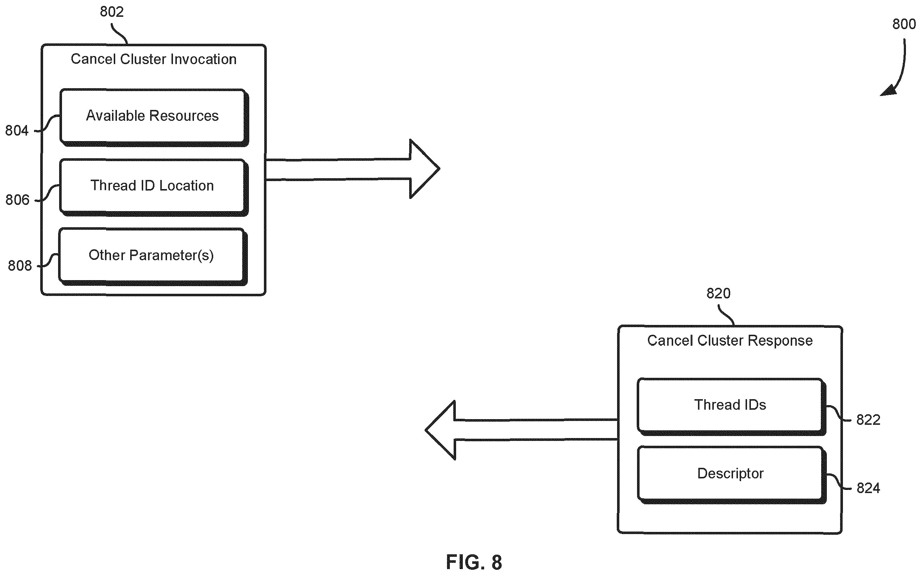

FIG. 8 is a block diagram illustrating a cancel cluster operation 800 ("operation 800"), according to at least one embodiment. In at least one embodiment, an operation 800 is one or more computational operations that, if performed, perform an application programming interface (API) to cause one or more software threads identified by the API to be prevented from being performed by one or more processors as described above in conjunction with FIGS. 1-11.

In at least one embodiment, a cancel cluster invocation 802 ("invocation 802") is a function call to be performed by one or more software programs, such as kernels to be performed by one or more parallel processing units (PPUs), such as graphics processing units (GPUs). In at least one embodiment, invocation 802 is an invocation of an instruction to cause one or more processors to perform one or more computational operations 822, 824, of a cancel cluster response 820 ("response 820"). In at least one embodiment, invocation 802 is an invocation of an API to cause one or more processors to perform one or more computational operations 822, 824 of response 820.

In at least one embodiment, invocation 802 receives, when invoked, one or more parameters 804, 806, 808 to indicate information about computational operations to be performed. In at least one embodiment, invocation 802 receives, when invoked, one or more parameters 804, 806, 808 to indicate information about instructions to be performed.

In at least one embodiment, invocation 802 receives, as input, parameters 804, 806, 808 comprising a one or more available resources 804. In at least one embodiment, Available Resources 804 is data comprising information indicating an identification of resources available to one or more requesting CTAs for processing of work. In at least one embodiment, Available Resources 804 is a pointer to a location in storage where available resources are stored. In at least one embodiment, Available Resources 804 is data to be input to a function call, if said function call is to perform invocation 802. In at least one embodiment, available resources 804 may also indicate specific pending thread identification. In at least one embodiment, Available Resources 804 is data to be input to an API, if said API is to cause invocation 802 to be performed.

In at least one embodiment, invocation 802 receives, as input, parameters 804, 806, 808 comprising a thread ID location 806. In at least one embodiment thread ID location 806 is data comprising information indicating a location where one or more thread IDs identified by response 820 are to be stored. In at least one embodiment, thread ID location 806 is a pointer to a location in storage where a thread ID returned by response 820 is to be stored. In at least one embodiment, thread ID location 806 is data to be input to a function call, if said function call is to perform invocation 802. In at least one embodiment, thread ID location 806 is data to be input to an API, if said API is to cause invocation 802 to be performed.

In at least one embodiment, invocation 802 receives, as input, parameters 804, 806, 808, comprising other parameter(s) 808. In at least one embodiment, other parameter(s) 808 are data comprising any other information usable by operation 800. In at least one embodiment, other parameter(s) 808 are data to be input to a function call, if said function call is to perform invocation 802. In at least one embodiment, other parameter(s) 808 are data to be input to an API, if said API is to cause invocation 802 to be performed.

In at least one embodiment, response 820 generates, as output, parameters 822, 824, comprising one or more Thread IDs 822. In at least one embodiment, Thread IDs 822 is data comprising any other information presented by operation 800. In at least one embodiment, Thread IDs 822 is data to be output in response to a function call, if said function call is to perform invocation 802. In at least one embodiment, thread IDs 822 is data saved to one or more memory locations indicated by thread ID location 808 indicating thread IDs indicated to be cancelled based on indicated Available Resources 804 for which operation 800 was successful. In at least one embodiment, Thread IDs 822 is data to be output by an API, if said API is to cause invocation 802 to be performed. In at least one embodiment, Thread IDs 822 indicates that operation 800 was performed successfully. In at least one embodiment, Thread IDs 822 indicates that operation 800 was not performed successfully, or otherwise failed. In at least one embodiment, response 820 generates additional parameters, other than Thread IDs 822, as output.

In at least one embodiment, response 820 generates, as output, parameters 822, 824,comprising descriptor 824. In at least one embodiment, descriptor 824 is data indicating a memory allocation as described in conjunction with FIGS. 1-11. In at least one embodiment, descriptor 824 is stored by response 820 at a memory address indicted by Thread ID location 806. In at least one embodiment, descriptor 824 is data stored in a memory location indicated by a thread ID location 806 indicating success, failure, and/or pending nature regarding success of operation 800 for a given thread indicated to be cancelled based on indicated Available Resources 804. In at least one embodiment, descriptor 824 is data to be output in response to a function call, if said function call is to perform invocation 802. In at least one embodiment, descriptor 824 is data to be output by an API, if said API is to cause invocation 802 to be performed. In at least one embodiment, descriptor 824 is presented in response to performance of one or more API and/or function calls.

In at least one embodiment, processors use an operation 800 comprising one or more steps to cause perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, as an example, a machine readable medium having stored therein a set of instructions, which if performed by one or more processors, cause said one or more processors to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, operation 800 includes, is included in, and/or otherwise includes systems illustrated in FIGS. 1-11 to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or perform other operations described herein. In at least one embodiment, operation 800 is performed by one or more systems illustrated in FIGS. 12-48, such as to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, one or more systems depicted in relation to preceding figures are utilized to perform an clusterlaunchcontrol.try_cancel to perform a request to cancel pending process threads to reallocate said thread work to an operating CTA.

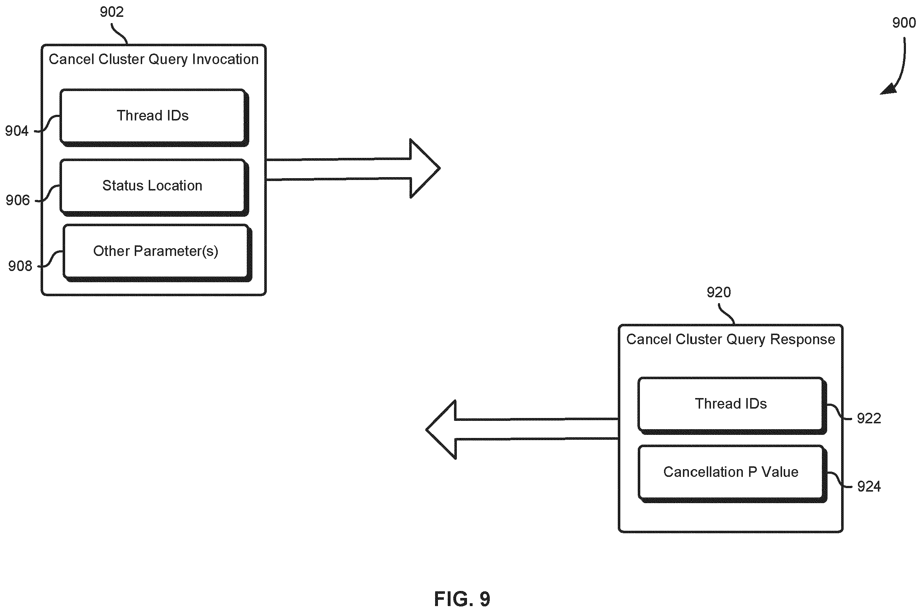

FIG. 9 is a block diagram illustrating a cancel cluster query operation 900 ("operation 900"), according to at least one embodiment. In at least one embodiment, an operation 900 is one or more computational operations that, if performed, perform an application programming interface (API) to cause one or more processors to indicate whether one or more software threads have been prevented from being performed as described above in conjunction with FIGS. 1-11.

In at least one embodiment, a cancel cluster query invocation 902 ("invocation 902") is a function call to be performed by one or more software programs, such as kernels to be performed by one or more parallel processing units (PPUs), such as graphics processing units (GPUs). In at least one embodiment, invocation 902 is an invocation of an instruction to cause one or more processors to perform one or more computational operations 922, 924, of a cancel cluster query response 920 ("response 920"). In at least one embodiment, invocation 902 is an invocation of an API to cause one or more processors to perform one or more computational operations 922, 924 of response 920.

In at least one embodiment, invocation 902 receives, when invoked, one or more parameters 904, 906, 908 to indicate information about computational operations to be performed. In at least one embodiment, invocation 902 receives, when invoked, one or more parameters 904, 906, 908 to indicate information about instructions to be performed.

**In** at least one embodiment, invocation 902 receives, as input, parameters 904, 906, 908 comprising a one or more thread IDs 904. **In** at least one embodiment, Thread IDs 904 is data comprising information indicating an identification for a thread. **In** at least one embodiment, Thread IDs 904 is a pointer to a location in storage where a thread ID is stored. **In** at least one embodiment, Thread IDs 904 is data to be input to a function call, if said function call is to perform invocation 902. **In** at least one embodiment, Thread IDs 904 is data to be input to an API, if said API is to cause invocation 902 to be performed.

**In** at least one embodiment, invocation 902 receives, as input, parameters 904, 906, 908 a status location 906. **In** at least one embodiment status location 906 is data comprising information indicating a location where one or more cancellation P value 924 and/or thread IDs identified by response 920 are to be stored. In at least one embodiment, status location 906 is a pointer to a location in storage where a cancellation P value and/or thread ID returned by response 920 is to be stored. In at least one embodiment, status location 906 is data to be input to a function call, if said function call is to perform invocation 902. In at least one embodiment, status location 906 is data to be input to an API, if said API is to cause invocation 902 to be performed.

In at least one embodiment, invocation 902 receives, as input, parameters 904, 906, 908, comprising other parameter(s) 908. In at least one embodiment, other parameter(s) 908 are data comprising any other information usable by operation 900. In at least one embodiment, other parameter(s) 908 are data to be input to a function call, if said function call is to perform invocation 902. In at least one embodiment, other parameter(s) 908 are data to be input to an API, if said API is to cause invocation 902 to be performed.

In at least one embodiment, response 920 generates, as output, parameters 922, 924, comprising one or more Thread ID 922. In at least one embodiment, Thread ID 922 is data comprising any other information presented by operation 900. In at least one embodiment, Thread ID 922 is data to be output in response to a function call, if said function call is to perform invocation 902. In at least one embodiment, thread ID 922 is data saved to one or more memory locations indicated by status location 906 indicating thread IDs indicated by one or more thread IDs 904 for which operation 900 was successful. In at least one embodiment, Thread ID 922 is data to be output by an API, if said API is to cause invocation 902 to be performed. In at least one embodiment, Thread ID 922 indicates that operation 900 was performed successfully. In at least one embodiment, Thread ID 922 indicates that operation 900 was not performed successfully, or otherwise failed. In at least one embodiment, response 920 generates additional parameters, other than Thread ID 922, as output.

In at least one embodiment, response 920 generates, as output, parameters 922, 924, comprising cancellation P value 924. In at least one embodiment, cancellation P value 924 is data indicating a memory allocation as described in conjunction with FIGS. 1-11. In at least one embodiment, cancellation P value 924 is stored by response 920 at a memory address indicted by status location 906. In at least one embodiment, cancellation P value 924 is data stored in a memory location indicated by a status location 906 indicating success, failure, and/or pending nature regarding success of operation 900 for a given thread indicated by one or more thread IDs 904. In at least one embodiment, cancellation P value 924 is data to be output in response to a function call, if said function call is to perform invocation 902. In at least one embodiment, cancellation P value 924 is data to be output by an API, if said API is to cause invocation 902 to be performed. In at least one embodiment, cancellation P value 924 is presented in response to performance of one or more API and/or function calls.

In at least one embodiment, processors use an operation 900 comprising one or more steps to cause perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, as an example, a machine readable medium having stored therein a set of instructions, which if performed by one or more processors, cause said one or more processors to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, operation 900 includes, is included in, and/or otherwise includes systems illustrated in FIGS. 1-11 to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or perform other operations described herein. In at least one embodiment, operation 900 is performed by one or more systems illustrated in FIGS. 12-48, such as to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

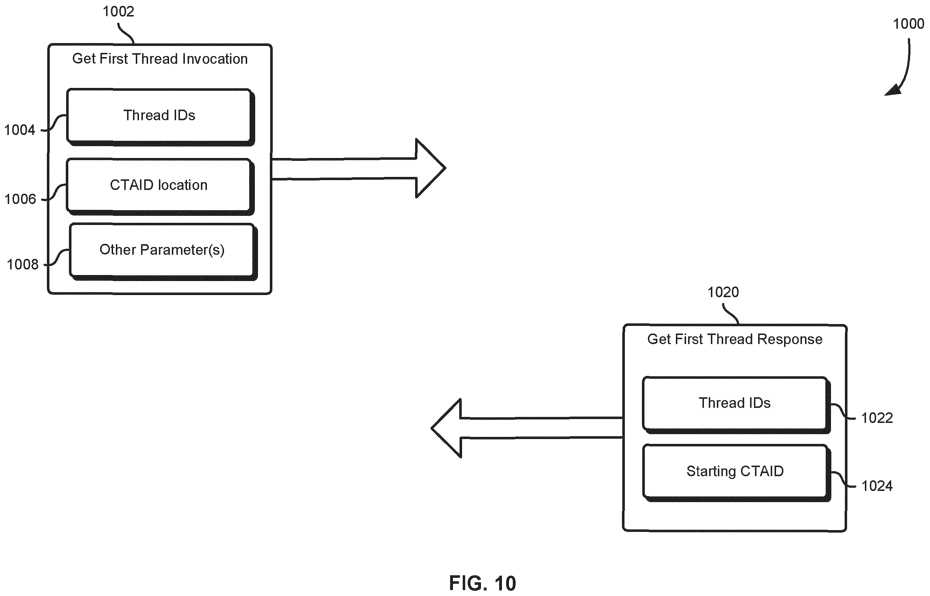

FIG. 10 is a block diagram illustrating a get first thread operation 1000 ("operation 1000"), according to at least one embodiment. In at least one embodiment, an operation 1000 is one or more computational operations that, if performed, perform an application programming interface (API) to indicate one or more software threads that have been prevented from being performed by one or more processors as described above in conjunction with FIGS. 1-11.

In at least one embodiment, a get first thread invocation 1002 ("invocation 1002") is a function call to be performed by one or more software programs, such as kernels to be performed by one or more parallel processing units (PPUs), such as graphics processing units (GPUs). In at least one embodiment, invocation 1002 is an invocation of an instruction to cause one or more processors to perform one or more computational operations 1022, 1024, of a get first thread response 1020 ("response 1020"). In at least one embodiment, invocation 1002 is an invocation of an API to cause one or more processors to perform one or more computational operations 1022, 1024 of response 1020.

In at least one embodiment, invocation 1002 receives, when invoked, one or more parameters 1004, 1006, 1008 to indicate information about computational operations to be performed. In at least one embodiment, invocation 1002 receives, when invoked, one or more parameters 1004, 1006, 1008 to indicate information about instructions to be performed.

In at least one embodiment, invocation 1002 receives, as input, parameters 1004, 1006, 1008 comprising a one or more thread IDs 1004. In at least one embodiment, Thread IDs 1004 is data comprising information indicating an identification for a thread. In at least one embodiment, Thread IDs 1004 is a pointer to a location in storage where a thread ID. In at least one embodiment, Thread IDs 1004 is data to be input to a function call, if said function call is to perform invocation 1002. In at least one embodiment, Thread IDs 1004 is data to be input to an API, if said API is to cause invocation 1002 to be performed.

In at least one embodiment, invocation 1002 receives, as input, parameters 1004, 1006, 1008 a CTAID location 1006. In at least one embodiment CTAID location 1006 is data comprising information indicating a location where one or more starting CTAID 1024 and/or thread IDs identified by response 1020 are to be stored. In at least one embodiment, CTAID location 1006 is a pointer to a location in storage where a starting CTAID and/or thread ID returned by response 1020 is to be stored. In at least one embodiment, CTAID location 1006 is data to be input to a function call, if said function call is to perform invocation 1002. In at least one embodiment, CTAID location 1006 is data to be input to an API, if said API is to cause invocation 1002 to be performed.

In at least one embodiment, invocation 1002 receives, as input, parameters 1004, 1006, 1008, comprising other parameter(s) 1008. In at least one embodiment, other parameter(s) 1008 are data comprising any other information usable by operation 1000. In at least one embodiment, other parameter(s) 1008 are data to be input to a function call, if said function call is to perform invocation 1002. In at least one embodiment, other parameter(s) 1008 are data to be input to an API, if said API is to cause invocation 1002 to be performed.

In at least one embodiment, response 1020 generates, as output, parameters 1022, 1024, comprising one or more Thread IDs 1022. In at least one embodiment, Thread IDs 1022 is data comprising any other information presented by operation 1000. In at least one embodiment, Thread IDs 1022 is data to be output in response to a function call, if said function call is to perform invocation 1002. In at least one embodiment, thread IDs 1022 is data saved to one or more memory locations indicated by CTAID location 1006 indicating thread IDs indicated by one or more thread IDs 1004 for which operation 1000 was successful. In at least one embodiment, Thread IDs 1022 is data to be output by an API, if said API is to cause invocation 1002 to be performed. In at least one embodiment, Thread IDs 1022 indicates that operation 1000 was performed successfully. In at least one embodiment, Thread IDs 1022 indicates that operation 1000 was not performed successfully, or otherwise failed. In at least one embodiment, response 1020 generates additional parameters, other than Thread IDs 1022, as output.

In at least one embodiment, response 1020 generates, as output, parameters 1022, 1024, comprising starting CTAID 1024. In at least one embodiment, starting CTAID 1024 is data indicating a memory allocation as described in conjunction with FIGS. 1-11. In at least one embodiment, starting CTAID 1024 is stored by response 1020 at a memory address indicted by CTAID location 1006. In at least one embodiment, starting CTAID 1024 is data stored in a memory location indicated by a CTAID location 1006 indicating success, failure, and/or pending nature regarding success of operation 1000 for a given thread indicated by one or more thread IDs 1004. In at least one embodiment, starting CTAID 1024 is data to be output in response to a function call, if said function call is to perform invocation 1002. In at least one embodiment, starting CTAID 1024 is data to be output by an API, if said API is to cause invocation 1002 to be performed. In at least one embodiment, starting CTAID 1024 is presented in response to performance of one or more API and/or function calls.

In at least one embodiment, processors use an operation 1000 comprising one or more steps to cause perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, as an example, a machine readable medium having stored therein a set of instructions, which if performed by one or more processors, cause said one or more processors to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, operation 1000 includes, is included in, and/or otherwise includes systems illustrated in FIGS. 1-11 to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or perform other operations described herein. In at least one embodiment, operation 1000 is performed by one or more systems illustrated in FIGS. 12-48, such as to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

FIG. 11 illustrates an example system 1100 of a processor, according to at least one embodiment. In at least one embodiment, a processor 1102 performs one or more processes such as those described herein to perform an application programming interface (API) to cause one or more software threads identified by an API to be prevented from being performed by one or more processors, perform an application programming interface (API) to cause one or more processors to indicate whether one or more software threads have been prevented from being performed, and/or perform an application programming interface (API) to indicate one or more software threads that have been prevented from being performed by one or more processors . In at least one embodiment, processor 1102 performs said process as described in connection with FIG. 1. In at least one embodiment, processor 1102 performs one or more processes such as those described in connection with FIGS. 1-11.

In at least one embodiment, processor 1102 comprises one or more processors such as those described in connection with FIGS. 12-48. In at least one embodiment, processor 1102 is any suitable processing unit and/or combination of processing units, such as one or more CPUs, GPUs, GPGPUs, PPUs, and/or variations thereof. In at least one embodiment, processor 1102 comprises an API module 1104, GPU communication module 1106, and/or a scheduler module 1108. In at least one embodiment, API module 1104, GPU communication module 1106, and/or a scheduler module 1108 are part of processor 1102 and/or one or more other processors. In at least one embodiment, API module 1104, GPU communication module 1106, and/or a scheduler module 1108 are distributed among multiple processors that communicate over a bus, network, by writing to shared memory, and/or any suitable communication process such as those described herein.

In at least one embodiment, as used in any implementation described herein, unless otherwise clear from context or stated explicitly to contrary, a module refers to any combination of software logic, firmware logic, hardware logic, and/or circuitry configured to provide functionality described herein. In at least one embodiment, software may be embodied as a software package, code and/or instruction set or instructions, and "hardware", as used in any implementation described herein, may include, for example, singly or in any combination, hardwired circuitry, programmable circuitry, state machine circuitry, fixed function circuitry, execution unit circuitry, and/or firmware that stores instructions executed by programmable circuitry. In at least one embodiment, modules may, collectively or individually, be embodied as circuitry that forms part of a larger system, for example, an integrated circuit (IC), system on-chip (SoC), and so forth. In at least one embodiment, a module performs one or more processes in connection with any suitable processing unit and/or combination of processing units, such as one or more CPUs, GPUs, GPGPUs, PPUs, and/or variations thereof.

In at least one embodiment, a processor uses API module 1104 to perform API calls between operating CTAs, designated organizers, and/or other pertinent processing entities to allow for communication. In at least one embodiment, a API module 1104 provides outputs to memory, other processor modules, designated organizers, CTAs, and/or other output destinations required to be queried by one or more APIs to allow function of systems described herein in a form of API calls. In at least one embodiment, a API module 1104 receives inputs in a form of answers to output API calls and/or data describing desired API calls. In at least one embodiment, a API module 1104 perform API calls between operating CTAs, designated organizers, and/or other pertinent processing entities to allow for communication in connection with any suitable processing unit and/or combination of processing units, such as one or more CPUs, GPUs, GPGPUs, PPUs, and/or variations thereof.

In at least one embodiment, a processor uses GPU communication module 1106 to communicate between internal processor architecture (for example, communication between operating CTAs and scheduler hardware and/or software) to allow for continued operation of said processor. In at least one embodiment, a GPU communication module 1106 provides outputs to any internal designated part of processing architecture within said processor in a form of data pertinent to communication and operation of internal hardware and software required for processor function. In at least one embodiment, a GPU communication module 1106 receives inputs in a form of data pertinent to communication and operation of internal hardware and software required for processor function. In at least one embodiment, a GPU communication module 1106 communicate between internal processor architecture (for example, communication between operating CTAs and scheduler hardware and/or software) to allow for continued operation of said processor in connection with any suitable processing unit and/or combination of processing units, such as one or more CPUs, GPUs, GPGPUs, PPUs, and/or variations thereof.

In at least one embodiment, a processor uses scheduler module 1108 to perform operations pertinent to scheduling CTA, thread, and/or other designated processing unit work to allow for organized and/or non-redundant processing of designated work. In at least one embodiment, a scheduler module 1108 provides outputs to CTAs, memory, other processor modules, and/or other locations pertinent to scheduling work within a designated processor in a form of data indicating scheduled work, work to be scheduled, identification of given processing units, and/or other data required to schedule and perform designated work. In at least one embodiment, a scheduler module 1108 receives inputs in a form of data indicating scheduled work, work to be scheduled, identification of given processing units, and/or other data required to schedule and perform designated work. In at least one embodiment, a scheduler module 1108 perform operations pertinent to scheduling CTA, thread, and/or other designated processing unit work to allow for organized and/or non-redundant processing of designated work in connection with any suitable processing unit and/or combination of processing units, such as one or more CPUs, GPUs, GPGPUs, PPUs, and/or variations thereof.

In at least one embodiment, system 1100 includes one or more processors to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, system 1100 is, is included in, and/or otherwise includes systems illustrated in FIGS. 1-11 to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, system 1100 performs one or more processes illustrated in FIGS. 1-11, such as to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, system 1100 performs one or more processes illustrated in FIGS. 12 - 48, such as to perform an application programming interface (API) to cause one or more software threads identified by the API to be prevented from being performed by one or more processors, perform an application programming interface (API) to cause one or more processors to indicate whether one or more software threads have been prevented from being performed, perform an application programming interface (API) to indicate one or more software threads that have been prevented from being performed by one or more processors, and/or otherwise perform operations described herein. In at least one embodiment, one or more systems depicted in relation to preceding figures are utilized to perform an clusterlaunchcontrol.try_cancel to perform a request to cancel pending process threads to reallocate said thread work to an operating CTA. In at least one embodiment, one or more systems depicted in relation to preceding figures are utilized to perform an clusterlaunchcontrol. query cancel.is canceled to query a scheduling hardware and/or software to determine if indicated threads have been successfully cancelled. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

In the following description, numerous specific details are set forth to provide a more thorough understanding of at least one embodiment. However, it will be apparent to one skilled in the art that the inventive concepts may be practiced without one or more of these specific details.

### Servers and Data Centers

The following figures set forth, without limitation, exemplary network server and data center based systems that can be used to implement at least one embodiment.

FIG. 12 illustrates a distributed system 1200, in accordance with at least one embodiment. In at least one embodiment, distributed system 1200 includes one or more client computing devices 1202, 1204, 1206, and 1208, which are configured to execute and operate a client application such as a web browser, proprietary client, and/or variations thereof over one or more network(s) 1210. In at least one embodiment, server 1212 may be communicatively coupled with remote client computing devices 1202, 1204, 1206, and 1208 via network 1210.

In at least one embodiment, server 1212 may be adapted to run one or more services or software applications such as services and applications that may manage session activity of single sign-on (SSO) access across multiple data centers. In at least one embodiment, server 1212 may also provide other services or software applications can include non-virtual and virtual environments. In at least one embodiment, these services may be offered as web-based or cloud services or under a Software as a Service (SaaS) model to users of client computing devices 1202, 1204, 1206, and/or 1208. In at least one embodiment, users operating client computing devices 1202, 1204, 1206, and/or 1208 may in turn utilize one or more client applications to interact with server 1212 to utilize services provided by these components.

In at least one embodiment, software components 1218, 1220 and 1222 of system 1200 are implemented on server 1212. In at least one embodiment, one or more components of system 1200 and/or services provided by these components may also be implemented by one or more of client computing devices 1202, 1204, 1206, and/or 1208. In at least one embodiment, users operating client computing devices may then utilize one or more client applications to use services provided by these components. In at least one embodiment, these components may be implemented in hardware, firmware, software, or combinations thereof. It should be appreciated that various different system configurations are possible, which may be different from distributed system 1200. The embodiment shown in FIG. 12 is thus one example of a distributed system for implementing an embodiment system and is not intended to be limiting.

In at least one embodiment, client computing devices 1202, 1204, 1206, and/or 1208 may include various types of computing systems. In at least one embodiment, a client computing device may include portable handheld devices (e.g., an iPhone^{®}, cellular telephone, an iPad^{®}, computing tablet, a personal digital assistant (PDA)) or wearable devices (e.g., a Google Glass^{®} head mounted display), running software such as Microsoft Windows Mobile^{®}, and/or a variety of mobile operating systems such as iOS, Windows Phone, Android, BlackBerry 10, Palm OS, and/or variations thereof. In at least one embodiment, devices may support various applications such as various Internet-related apps, e-mail, short message service (SMS) applications, and may use various other communication protocols. In at least one embodiment, client computing devices may also include general purpose personal computers including, by way of example, personal computers and/or laptop computers running various versions of Microsoft Windows^{®}, Apple Macintosh^{®}, and/or Linux operating systems. In at least one embodiment, client computing devices can be workstation computers running any of a variety of commercially-available UNIX^{®} or UNIX-like operating systems, including without limitation a variety of GNU/Linux operating systems, such as Google Chrome OS. In at least one embodiment, client computing devices may also include electronic devices such as a thin-client computer, an Internet-enabled gaming system (e.g., a Microsoft Xbox gaming console with or without a Kinect^{®} gesture input device), and/or a personal messaging device, capable of communicating over network(s) 1210. Although distributed system 1200 in FIG. 12 is shown with four client computing devices, any number of client computing devices may be supported. Other devices, such as devices with sensors, etc., may interact with server 1212.

In at least one embodiment, network(s) 1210 in distributed system 1200 may be any type of network that can support data communications using any of a variety of available protocols, including without limitation TCP/IP (transmission control protocol/Internet protocol), SNA (systems network architecture), IPX (Internet packet exchange), AppleTalk, and/or variations thereof. In at least one embodiment, network(s) 1210 can be a local area network (LAN), networks based on Ethernet, Token-Ring, a wide-area network, Internet, a virtual network, a virtual private network (VPN), an intranet, an extranet, a public switched telephone network (PSTN), an infrared network, a wireless network (e.g., a network operating under any of the Institute of Electrical and Electronics (IEEE) 802.11 suite of protocols, Bluetooth^{®}, and/or any other wireless protocol), and/or any combination of these and/or other networks.

In at least one embodiment, server 1212 may be composed of one or more general purpose computers, specialized server computers (including, by way of example, PC (personal computer) servers, UNIX^{®} servers, mid-range servers, mainframe computers, rack-mounted servers, etc.), server farms, server clusters, or any other appropriate arrangement and/or combination. In at least one embodiment, server 1212 can include one or more virtual machines running virtual operating systems, or other computing architectures involving virtualization. In at least one embodiment, one or more flexible pools of logical storage devices can be virtualized to maintain virtual storage devices for a server. In at least one embodiment, virtual networks can be controlled by server 1212 using software defined networking. In at least one embodiment, server 1212 may be adapted to run one or more services or software applications.

In at least one embodiment, server 1212 may run any operating system, as well as any commercially available server operating system. In at least one embodiment, server 1212 may also run any of a variety of additional server applications and/or mid-tier applications, including HTTP (hypertext transport protocol) servers, FTP (file transfer protocol) servers, CGI (common gateway interface) servers, JAVA^{®} servers, database servers, and/or variations thereof. In at least one embodiment, exemplary database servers include without limitation those commercially available from Oracle, Microsoft, Sybase, IBM (International Business Machines), and/or variations thereof.

In at least one embodiment, server 1212 may include one or more applications to analyze and consolidate data feeds and/or event updates received from users of client computing devices 1202, 1204, 1206, and 1208. In at least one embodiment, data feeds and/or event updates may include, but are not limited to, Twitter^{®} feeds, Facebook^{®} updates or real-time updates received from one or more third party information sources and continuous data streams, which may include real-time events related to sensor data applications, financial tickers, network performance measuring tools (e.g., network monitoring and traffic management applications), clickstream analysis tools, automobile traffic monitoring, and/or variations thereof. In at least one embodiment, server 1212 may also include one or more applications to display data feeds and/or real-time events via one or more display devices of client computing devices 1202, 1204, 1206, and 1208.

In at least one embodiment, distributed system 1200 may also include one or more databases 1214 and 1216. In at least one embodiment, databases may provide a mechanism for storing information such as user interactions information, usage patterns information, adaptation rules information, and other information. In at least one embodiment, databases 1214 and 1216 may reside in a variety of locations. In at least one embodiment, one or more of databases 1214 and 1216 may reside on a non-transitory storage medium local to (and/or resident in) server 1212. In at least one embodiment, databases 1214 and 1216 may be remote from server 1212 and in communication with server 1212 via a network-based or dedicated connection. In at least one embodiment, databases 1214 and 1216 may reside in a storage-area network (SAN). In at least one embodiment, any necessary files for performing functions attributed to server 1212 may be stored locally on server 1212 and/or remotely, as appropriate. In at least one embodiment, databases 1214 and 1216 may include relational databases, such as databases that are adapted to store, update, and retrieve data in response to SQL-formatted commands.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

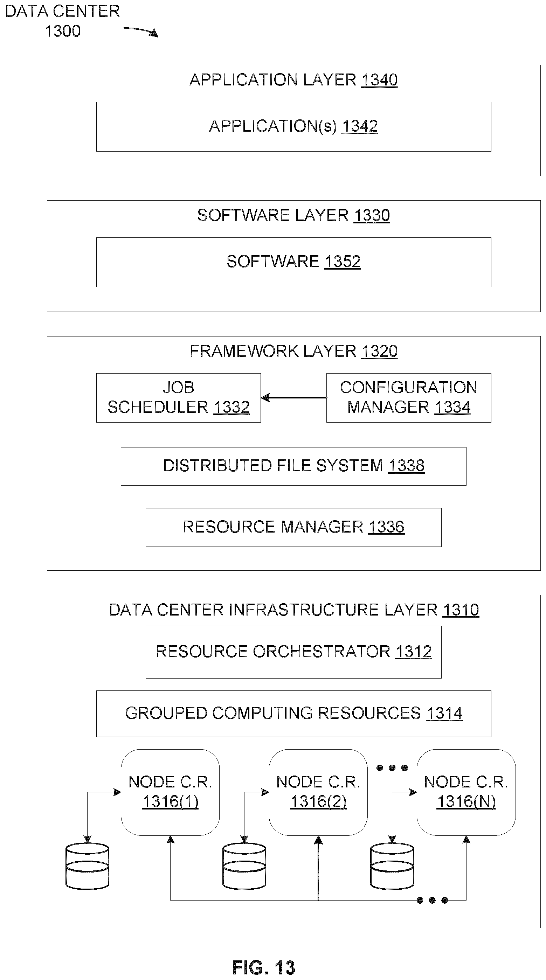

FIG. 13 illustrates an exemplary data center 1300, in accordance with at least one embodiment. In at least one embodiment, data center 1300 includes, without limitation, a data center infrastructure layer 1310, a framework layer 1320, a software layer 1330 and an application layer 1340.

In at least one embodiment, as shown in FIG. 13, data center infrastructure layer 1310 may include a resource orchestrator 1312, grouped computing resources 1314, and node computing resources ("node C.R.s") 1316(1)-1316(N), where "N" represents any whole, positive integer. In at least one embodiment, node C.R.s 1316(1)-1316(N) may include, but are not limited to, any number of central processing units ("CPUs") or other processors (including accelerators, field programmable gate arrays ("FPGAs"), graphics processors, etc.), memory devices (e.g., dynamic read-only memory), storage devices (e.g., solid state or disk drives), network input/output ("NW I/O") devices, network switches, virtual machines ("VMs"), power modules, and cooling modules, etc. In at least one embodiment, one or more node C.R.s from among node C.R.s 1316(1)-1316(N) may be a server having one or more of above-mentioned computing resources.

In at least one embodiment, grouped computing resources 1314 may include separate groupings of node C.R.s housed within one or more racks (not shown), or many racks housed in data centers at various geographical locations (also not shown). Separate groupings of node C.R.s within grouped computing resources 1314 may include grouped compute, network, memory or storage resources that may be configured or allocated to support one or more workloads. In at least one embodiment, several node C.R.s including CPUs or processors may grouped within one or more racks to provide compute resources to support one or more workloads. In at least one embodiment, one or more racks may also include any number of power modules, cooling modules, and network switches, in any combination.

In at least one embodiment, resource orchestrator 1312 may configure or otherwise control one or more node C.R.s 1316(1)-1316(N) and/or grouped computing resources 1314. In at least one embodiment, resource orchestrator 1312 may include a software design infrastructure ("SDI") management entity for data center 1300. In at least one embodiment, resource orchestrator 1312 may include hardware, software or some combination thereof.

In at least one embodiment, as shown in FIG. 13, framework layer 1320 includes, without limitation, a job scheduler 1332, a configuration manager 1334, a resource manager 1336 and a distributed file system 1338. In at least one embodiment, framework layer 1320 may include a framework to support software 1352 of software layer 1330 and/or one or more application(s) 1342 of application layer 1340. In at least one embodiment, software 1352 or application(s) 1342 may respectively include web-based service software or applications, such as those provided by Amazon Web Services, Google Cloud and Microsoft Azure. In at least one embodiment, framework layer 1320 may be, but is not limited to, a type of free and open-source software web application framework such as Apache SparkTM (hereinafter "Spark") that may utilize distributed file system 1338 for large-scale data processing (e.g., "big data"). In at least one embodiment, job scheduler 1332 may include a Spark driver to facilitate scheduling of workloads supported by various layers of data center 1300. In at least one embodiment, configuration manager 1334 may be capable of configuring different layers such as software layer 1330 and framework layer 1320, including Spark and distributed file system 1338 for supporting large-scale data processing. In at least one embodiment, resource manager 1336 may be capable of managing clustered or grouped computing resources mapped to or allocated for support of distributed file system 1338 and job scheduler 1332. In at least one embodiment, clustered or grouped computing resources may include grouped computing resource 1314 at data center infrastructure layer 1310. In at least one embodiment, resource manager 1336 may coordinate with resource orchestrator 1312 to manage these mapped or allocated computing resources.

In at least one embodiment, software 1352 included in software layer 1330 may include software used by at least portions of node C.R.s 1316(1)-1316(N), grouped computing resources 1314, and/or distributed file system 1338 of framework layer 1320. One or more types of software may include, but are not limited to, Internet web page search software, e-mail virus scan software, database software, and streaming video content software.

In at least one embodiment, application(s) 1342 included in application layer 1340 may include one or more types of applications used by at least portions of node C.R.s 1316(1)-1316(N), grouped computing resources 1314, and/or distributed file system 1338 of framework layer 1320. In at least one or more types of applications may include, without limitation, CUDA applications, 5G network applications, artificial intelligence application, data center applications, and/or variations thereof.

In at least one embodiment, any of configuration manager 1334, resource manager 1336, and resource orchestrator 1312 may implement any number and type of self-modifying actions based on any amount and type of data acquired in any technically feasible fashion. In at least one embodiment, self-modifying actions may relieve a data center operator of data center 1300 from making possibly bad configuration decisions and possibly avoiding underutilized and/or poor performing portions of a data center.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

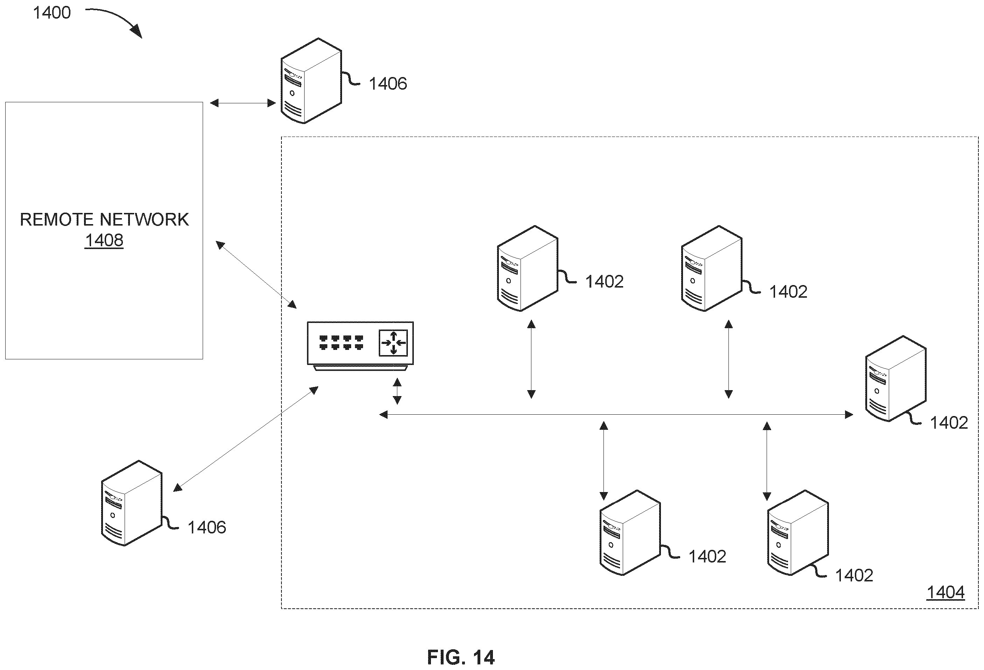

FIG. 14 illustrates a client-server network 1404 formed by a plurality of network server computers 1402 which are interlinked, in accordance with at least one embodiment. In at least one embodiment, in a system 1400, each network server computer 1402 stores data accessible to other network server computers 1402 and to client computers 1406 and networks 1408 which link into a wide area network 1404. In at least one embodiment, configuration of a client-server network 1404 may change over time as client computers 1406 and one or more networks 1408 connect and disconnect from a network 1404, and as one or more trunk line server computers 1402 are added or removed from a network 1404. In at least one embodiment, when a client computer 1406 and a network 1408 are connected with network server computers 1402, client-server network includes such client computer 1406 and network 1408. In at least one embodiment, the term computer includes any device or machine capable of accepting data, applying prescribed processes to data, and supplying results of processes.

In at least one embodiment, client-server network 1404 stores information which is accessible to network server computers 1402, remote networks 1408 and client computers 1406. In at least one embodiment, network server computers 1402 are formed by main frame computers minicomputers, and/or microcomputers having one or more processors each. In at least one embodiment, server computers 1402 are linked together by wired and/or wireless transfer media, such as conductive wire, fiber optic cable, and/or microwave transmission media, satellite transmission media or other conductive, optic or electromagnetic wave transmission media. In at least one embodiment, client computers 1406 access a network server computer 1402 by a similar wired or a wireless transfer medium. In at least one embodiment, a client computer 1406 may link into a client-server network 1404 using a modem and a standard telephone communication network. In at least one embodiment, alternative carrier systems such as cable and satellite communication systems also may be used to link into client-server network 1404. In at least one embodiment, other private or time-shared carrier systems may be used. In at least one embodiment, network 1404 is a global information network, such as the Internet. In at least one embodiment, network is a private intranet using similar protocols as the Internet, but with added security measures and restricted access controls. In at least one embodiment, network 1404 is a private, or semi-private network using proprietary communication protocols.

In at least one embodiment, client computer 1406 is any end user computer, and may also be a mainframe computer, mini-computer or microcomputer having one or more microprocessors. In at least one embodiment, server computer 1402 may at times function as a client computer accessing another server computer 1402. In at least one embodiment, remote network 1408 may be a local area network, a network added into a wide area network through an independent service provider (ISP) for the Internet, or another group of computers interconnected by wired or wireless transfer media having a configuration which is either fixed or changing over time. In at least one embodiment, client computers 1406 may link into and access a network 1404 independently or through a remote network 1408.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

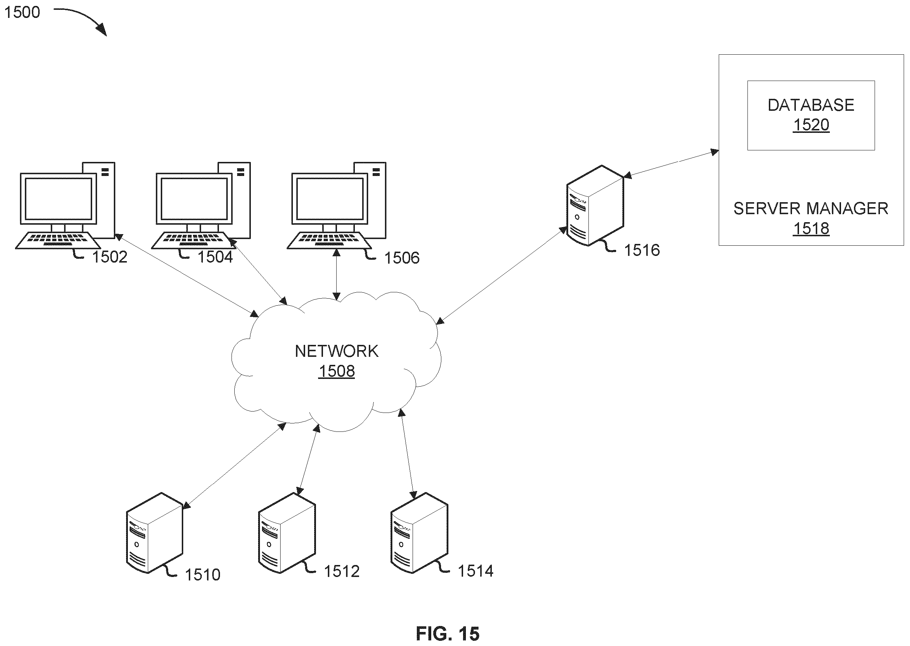

FIG. 15 illustrates an example 1500 of a computer network 1508 connecting one or more computing machines, in accordance with at least one embodiment. In at least one embodiment, network 1508 may be any type of electronically connected group of computers including, for instance, the following networks: Internet, Intranet, Local Area Networks (LAN), Wide Area Networks (WAN) or an interconnected combination of these network types. In at least one embodiment, connectivity within a network 1508 may be a remote modem, Ethernet (IEEE 802.3), Token Ring (IEEE 802.5), Fiber Distributed Datalink Interface (FDDI), Asynchronous Transfer Mode (ATM), or any other communication protocol. In at least one embodiment, computing devices linked to a network may be desktop, server, portable, handheld, set-top box, personal digital assistant (PDA), a terminal, or any other desired type or configuration. In at least one embodiment, depending on their functionality, network connected devices may vary widely in processing power, internal memory, and other performance aspects. In at least one embodiment, communications within a network and to or from computing devices connected to a network may be either wired or wireless. In at least one embodiment, network 1508 may include, at least in part, the world-wide public Internet which generally connects a plurality of users in accordance with a client-server model in accordance with a transmission control protocol/internet protocol (TCP/IP) specification. In at least one embodiment, client-server network is a dominant model for communicating between two computers. In at least one embodiment, a client computer ("client") issues one or more commands to a server computer ("server"). In at least one embodiment, server fulfills client commands by accessing available network resources and returning information to a client pursuant to client commands. In at least one embodiment, client computer systems and network resources resident on network servers are assigned a network address for identification during communications between elements of a network. In at least one embodiment, communications from other network connected systems to servers will include a network address of a relevant server/network resource as part of communication so that an appropriate destination of a data/request is identified as a recipient. In at least one embodiment, when a network 1508 comprises the global Internet, a network address is an IP address in a TCP/IP format which may, at least in part, route data to an e-mail account, a website, or other Internet tool resident on a server. In at least one embodiment, information and services which are resident on network servers may be available to a web browser of a client computer through a domain name (e.g. www.site.com) which maps to an IP address of a network server.

In at least one embodiment, a plurality of clients 1502, 1504, and 1506 are connected to a network 1508 via respective communication links. In at least one embodiment, each of these clients may access a network 1508 via any desired form of communication, such as via a dial-up modem connection, cable link, a digital subscriber line (DSL), wireless or satellite link, or any other form of communication. In at least one embodiment, each client may communicate using any machine that is compatible with a network 1508, such as a personal computer (PC), work station, dedicated terminal, personal data assistant (PDA), or other similar equipment. In at least one embodiment, clients 1502, 1504, and 1506 may or may not be located in a same geographical area.

In at least one embodiment, a plurality of servers 1510, 1512, and 1514 are connected to a network 1508 to serve clients that are in communication with a network 1508. In at least one embodiment, each server is typically a powerful computer or device that manages network resources and responds to client commands. In at least one embodiment, servers include computer readable data storage media such as hard disk drives and RAM memory that store program instructions and data. In at least one embodiment, servers 1510, 1512, 1514 run application programs that respond to client commands. In at least one embodiment, server 1510 may run a web server application for responding to client requests for HTML pages and may also run a mail server application for receiving and routing electronic mail. In at least one embodiment, other application programs, such as an FTP server or a media server for streaming audio/video data to clients may also be running on a server 1510. In at least one embodiment, different servers may be dedicated to performing different tasks. In at least one embodiment, server 1510 may be a dedicated web server that manages resources relating to web sites for various users, whereas a server 1512 may be dedicated to provide electronic mail (email) management. In at least one embodiment, other servers may be dedicated for media (audio, video, etc.), file transfer protocol (FTP), or a combination of any two or more services that are typically available or provided over a network. **In** at least one embodiment, each server may be in a location that is the same as or different from that of other servers. **In** at least one embodiment, there may be multiple servers that perform mirrored tasks for users, thereby relieving congestion or minimizing traffic directed to and from a single server. **In** at least one embodiment, servers 1510, 1512, 1514 are under control of a web hosting provider in a business of maintaining and delivering third party content over a network 1508.

**In** at least one embodiment, web hosting providers deliver services to two different types of clients. **In** at least one embodiment, one type, which may be referred to as a browser, requests content from servers 1510, 1512, 1514 such as web pages, email messages, video clips, etc. **In at** least one embodiment, a second type, which may be referred to as a user, hires a web hosting provider to maintain a network resource such as a web site, and to make it available to browsers. **In** at least one embodiment, users contract with a web hosting provider to make memory space, processor capacity, and communication bandwidth available for their desired network resource in accordance with an amount of server resources a user desires to utilize.

**In** at least one embodiment, in order for a web hosting provider to provide services for both of these clients, application programs which manage a network resources hosted by servers must be properly configured. **In** at least one embodiment, program configuration process involves defining a set of parameters which control, at least in part, an application program's response to browser requests and which also define, at least in part, a server resources available to a particular user.

In one embodiment, an intranet server 1516 is in communication with a network 1508 via a communication link. In at least one embodiment, intranet server 1516 is in communication with a server manager 1518. In at least one embodiment, server manager 1518 comprises a database of an application program configuration parameters which are being utilized in servers 1510, 1512, 1514. In at least one embodiment, users modify a database 1520 via an intranet 1516, and a server manager 1518 interacts with servers 1510, 1512, 1514 to modify application program parameters so that they match a content of a database. In at least one embodiment, a user logs onto an intranet server 1516 by connecting to an intranet 1516 via computer 1502 and entering authentication information, such as a username and password.

In at least one embodiment, when a user wishes to sign up for new service or modify an existing service, an intranet server 1516 authenticates a user and provides a user with an interactive screen display/control panel that allows a user to access configuration parameters for a particular application program. In at least one embodiment, a user is presented with a number of modifiable text boxes that describe aspects of a configuration of a user's web site or other network resource. In at least one embodiment, if a user desires to increase memory space reserved on a server for its web site, a user is provided with a field in which a user specifies a desired memory space. In at least one embodiment, in response to receiving this information, an intranet server 1516 updates a database 1520. In at least one embodiment, server manager 1518 forwards this information to an appropriate server, and a new parameter is used during application program operation. In at least one embodiment, an intranet server 1516 is configured to provide users with access to configuration parameters of hosted network resources (e.g., web pages, email, FTP sites, media sites, etc.), for which a user has contracted with a web hosting service provider.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

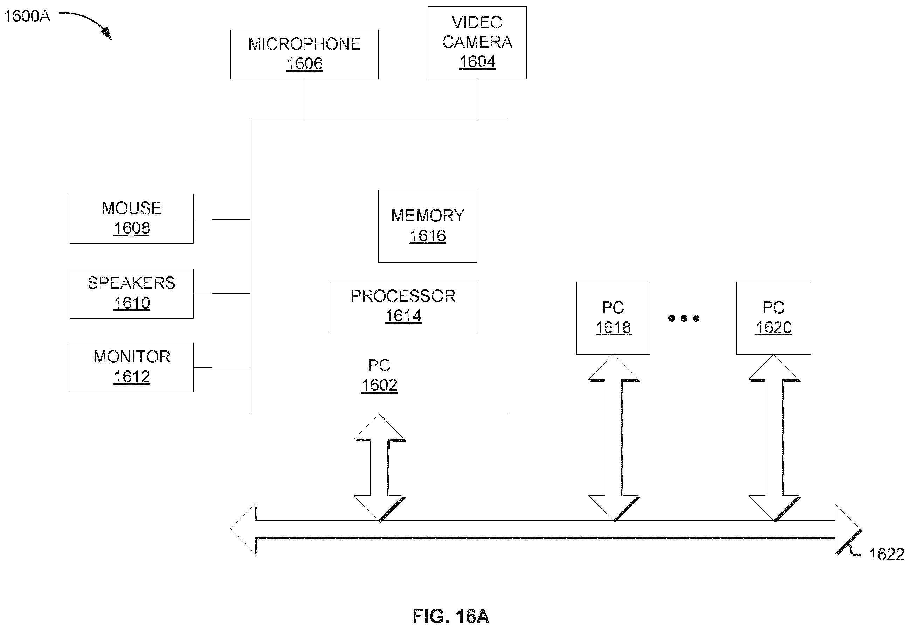

FIG. 16A illustrates a networked computer system 1600A, in accordance with at least one embodiment. In at least one embodiment, networked computer system 1600A comprises a plurality of nodes or personal computers ("PCs") 1602, 1618, 1620. In at least one embodiment, personal computer or node 1602 comprises a processor 1614, memory 1616, video camera 1604, microphone 1606, mouse 1608, speakers 1610, and monitor 1612. In at least one embodiment, PCs 1602, 1618, 1620 may each run one or more desktop servers of an internal network within a given company, for instance, or may be servers of a general network not limited to a specific environment. In at least one embodiment, there is one server per PC node of a network, so that each PC node of a network represents a particular network server, having a particular network URL address. In at least one embodiment, each server defaults to a default web page for that server's user, which may itself contain embedded URLs pointing to further subpages of that user on that server, or to other servers or pages on other servers on a network.

In at least one embodiment, nodes 1602, 1618, 1620 and other nodes of a network are interconnected via medium 1622. In at least one embodiment, medium 1622 may be, a communication channel such as an Integrated Services Digital Network ("ISDN"). In at least one embodiment, various nodes of a networked computer system may be connected through a variety of communication media, including local area networks ("LANs"), plain-old telephone lines ("POTS"), sometimes referred to as public switched telephone networks ("PSTN"), and/or variations thereof. In at least one embodiment, various nodes of a network may also constitute computer system users inter-connected via a network such as the Internet. In at least one embodiment, each server on a network (running from a particular node of a network at a given instance) has a unique address or identification within a network, which may be specifiable in terms of an URL.

In at least one embodiment, a plurality of multi-point conferencing units ("MCUs") may thus be utilized to transmit data to and from various nodes or "endpoints" of a conferencing system. In at least one embodiment, nodes and/or MCUs may be interconnected via an ISDN link or through a local area network ("LAN"), in addition to various other communications media such as nodes connected through the Internet. In at least one embodiment, nodes of a conferencing system may, in general, be connected directly to a communications medium such as a LAN or through an MCU, and that a conferencing system may comprise other nodes or elements such as routers, servers, and/or variations thereof.

In at least one embodiment, processor 1614 is a general-purpose programmable processor. In at least one embodiment, processors of nodes of networked computer system 1600A may also be special-purpose video processors. In at least one embodiment, various peripherals and components of a node such as those of node 1602 may vary from those of other nodes. In at least one embodiment, node 1618 and node 1620 may be configured identically to or differently than node 1602. In at least one embodiment, a node may be implemented on any suitable computer system in addition to PC systems.

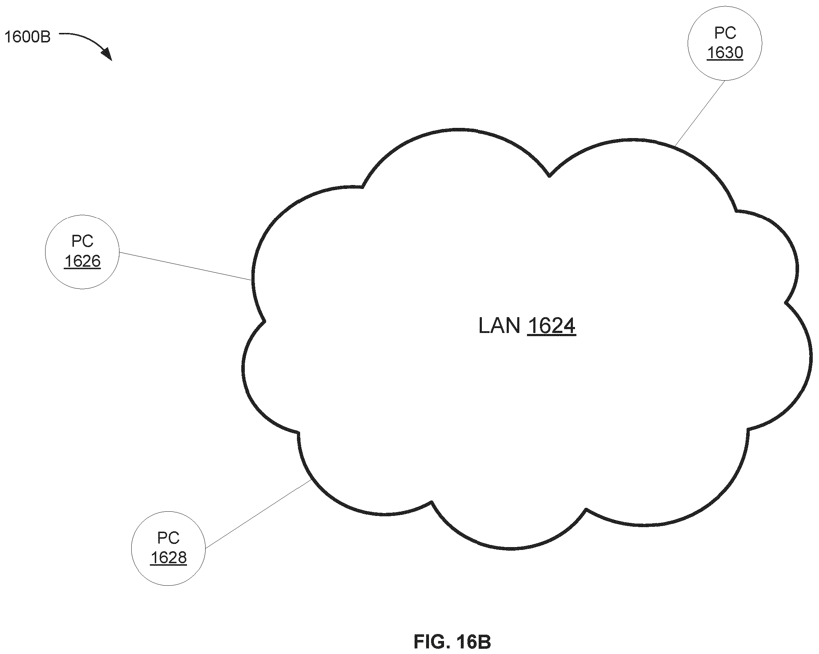

FIG. 16B illustrates a networked computer system 1600B, in accordance with at least one embodiment. In at least one embodiment, system 1600B illustrates a network such as LAN 1624, which may be used to interconnect a variety of nodes that may communicate with each other. In at least one embodiment, attached to LAN 1624 are a plurality of nodes such as PC nodes 1626, 1628, 1630. In at least one embodiment, a node may also be connected to the LAN via a network server or other means. In at least one embodiment, system 1600B comprises other types of nodes or elements, for example including routers, servers, and nodes.

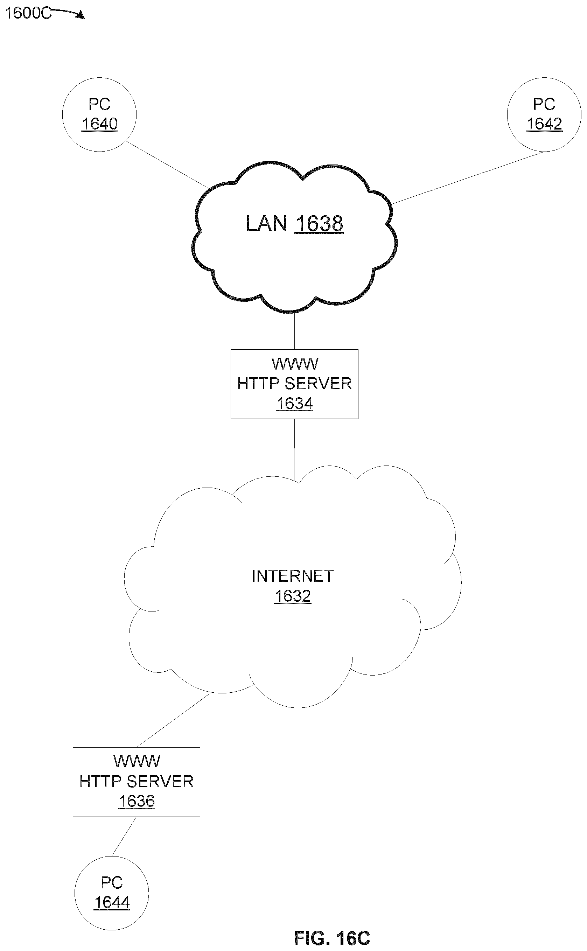

FIG. 16C illustrates a networked computer system 1600C, in accordance with at least one embodiment. In at least one embodiment, system 1600C illustrates a WWW system having communications across a backbone communications network such as Internet 1632, which may be used to interconnect a variety of nodes of a network. In at least one embodiment, WWW is a set of protocols operating on top of the Internet, and allows a graphical interface system to operate thereon for accessing information through the Internet. In at least one embodiment, attached to Internet 1632 in WWW are a plurality of nodes such as PCs 1640, 1642, 1644. In at least one embodiment, a node is interfaced to other nodes of WWW through a WWW HTTP server such as servers 1634, 1636. In at least one embodiment, PC 1644 may be a PC forming a node of network 1632 and itself running its server 1636, although PC 1644 and server 1636 are illustrated separately in FIG. 16C for illustrative purposes.

In at least one embodiment, WWW is a distributed type of application, characterized by WWW HTTP, WWW's protocol, which runs on top of the Internet's transmission control protocol/Internet protocol ("TCP/IP"). In at least one embodiment, WWW may thus be characterized by a set of protocols (i.e., HTTP) running on the Internet as its "backbone."

In at least one embodiment, a web browser is an application running on a node of a network that, in WWW-compatible type network systems, allows users of a particular server or node to view such information and thus allows a user to search graphical and text-based files that are linked together using hypertext links that are embedded in documents or files available from servers on a network that understand HTTP. In at least one embodiment, when a given web page of a first server associated with a first node is retrieved by a user using another server on a network such as the Internet, a document retrieved may have various hypertext links embedded therein and a local copy of a page is created local to a retrieving user. In at least one embodiment, when a user clicks on a hypertext link, locally-stored information related to a selected hypertext link is typically sufficient to allow a user's machine to open a connection across the Internet to a server indicated by a hypertext link.

In at least one embodiment, more than one user may be coupled to each HTTP server, for example through a LAN such as LAN 1638 as illustrated with respect to WWW HTTP server 1634. In at least one embodiment, system 1600C may also comprise other types of nodes or elements. In at least one embodiment, a WWW HTTP server is an application running on a machine, such as a PC. In at least one embodiment, each user may be considered to have a unique "server," as illustrated with respect to PC 1644. In at least one embodiment, a server may be considered to be a server such as WWW HTTP server 1634, which provides access to a network for a LAN or plurality of nodes or plurality of LANs. In at least one embodiment, there are a plurality of users, each having a desktop PC or node of a network, each desktop PC potentially establishing a server for a user thereof. In at least one embodiment, each server is associated with a particular network address or URL, which, when accessed, provides a default web page for that user. In at least one embodiment, a web page may contain further links (embedded URLs) pointing to further subpages of that user on that server, or to other servers on a network or to pages on other servers on a network.

### Cloud Computing and Services

The following figures set forth, without limitation, exemplary cloud-based systems that can be used to implement at least one embodiment.

In at least one embodiment, cloud computing is a style of computing in which dynamically scalable and often virtualized resources are provided as a service over the Internet. In at least one embodiment, users need not have knowledge of, expertise in, or control over technology infrastructure, which can be referred to as "in the cloud," that supports them. In at least one embodiment, cloud computing incorporates infrastructure as a service, platform as a service, software as a service, and other variations that have a common theme of reliance on the Internet for satisfying computing needs of users. In at least one embodiment, a typical cloud deployment, such as in a private cloud (e.g., enterprise network), or a data center (DC) in a public cloud (e.g., Internet) can consist of thousands of servers (or alternatively, VMs), hundreds of Ethernet, Fiber Channel or Fiber Channel over Ethernet (FCoE) ports, switching and storage infrastructure, etc. In at least one embodiment, cloud can also consist of network services infrastructure like IPsec VPN hubs, firewalls, load balancers, wide area network (WAN) optimizers etc. In at least one embodiment, remote subscribers can access cloud applications and services securely by connecting via a VPN tunnel, such as an IPsec VPN tunnel.

In at least one embodiment, cloud computing is a model for enabling convenient, on-demand network access to a shared pool of configurable computing resources (e.g., networks, servers, storage, applications, and services) that can be rapidly provisioned and released with minimal management effort or service provider interaction.

In at least one embodiment, cloud computing is characterized by on-demand self-service, in which a consumer can unilaterally provision computing capabilities, such as server time and network storage, as needed automatically without requiring human inter-action with each service's provider. In at least one embodiment, cloud computing is characterized by broad network access, in which capabilities are available over a network and accessed through standard mechanisms that promote use by heterogeneous thin or thick client platforms (e.g., mobile phones, laptops, and PDAs). In at least one embodiment, cloud computing is characterized by resource pooling, in which a provider's computing resources are pooled to serve multiple consumers using a multi-tenant model, with different physical and virtual resources dynamically as-signed and reassigned according to consumer demand. In at least one embodiment, there is a sense of location independence in that a customer generally has no control or knowledge over an exact location of provided resources, but may be able to specify location at a higher level of abstraction (e.g., country, state, or datacenter). In at least one embodiment, examples of resources include storage, processing, memory, network bandwidth, and virtual machines. In at least one embodiment, cloud computing is characterized by rapid elasticity, in which capabilities can be rapidly and elastically provisioned, in some cases automatically, to quickly scale out and rapidly released to quickly scale in. In at least one embodiment, to a consumer, capabilities available for provisioning often appear to be unlimited and can be purchased in any quantity at any time. In at least one embodiment, cloud computing is characterized by measured service, in which cloud systems automatically control and optimize resource use by leveraging a metering capability at some level of abstraction appropriate to a type of service (e.g., storage, processing, bandwidth, and active user accounts). In at least one embodiment, resource usage can be monitored, controlled, and reported providing transparency for both a provider and consumer of a utilized service.

In at least one embodiment, cloud computing may be associated with various services. In at least one embodiment, cloud Software as a Service (SaaS) may refer to as service in which a capability provided to a consumer is to use a provider's applications running on a cloud infrastructure. In at least one embodiment, applications are accessible from various client devices through a thin client interface such as a web browser (e.g., web-based email). In at least one embodiment, consumer does not manage or control underlying cloud infrastructure including network, servers, operating systems, storage, or even individual application capabilities, with a possible exception of limited user-specific application configuration settings.

In at least one embodiment, cloud Platform as a Service (PaaS) may refer to a service in which a capability provided to a consumer is to deploy onto cloud infrastructure consumer-created or acquired applications created using programming languages and tools supported by a provider. In at least one embodiment, consumer does not manage or control underlying cloud infrastructure including networks, servers, operating systems, or storage, but has control over deployed applications and possibly application hosting environment configurations.

In at least one embodiment, cloud Infrastructure as a Service (IaaS) may refer to a service in which a capability provided to a consumer is to provision processing, storage, networks, and other fundamental computing resources where a consumer is able to deploy and run arbitrary software, which can include operating systems and applications. In at least one embodiment, consumer does not manage or control underlying cloud infrastructure, but has control over operating systems, storage, deployed applications, and possibly limited control of select networking components (e.g., host firewalls).

In at least one embodiment, cloud computing may be deployed in various ways. In at least one embodiment, a private cloud may refer to a cloud infrastructure that is operated solely for an organization. In at least one embodiment, a private cloud may be managed by an organization or a third party and may exist on-premises or off-premises. In at least one embodiment, a community cloud may refer to a cloud infrastructure that is shared by several organizations and supports a specific community that has shared concerns (e.g., mission, security requirements, policy, and compliance considerations). In at least one embodiment, a community cloud may be managed by organizations or a third party and may exist on-premises or off-premises. In at least one embodiment, a public cloud may refer to a cloud infrastructure that is made available to a general public or a large industry group and is owned by an organization providing cloud services. In at least one embodiment, a hybrid cloud may refer to a cloud infrastructure is a composition of two or more clouds (private, community, or public) that remain unique entities, but are bound together by standardized or proprietary technology that enables data and application portability (e.g., cloud bursting for load-balancing between clouds). In at least one embodiment, a cloud computing environment is service oriented with a focus on statelessness, low coupling, modularity, and semantic interoperability.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

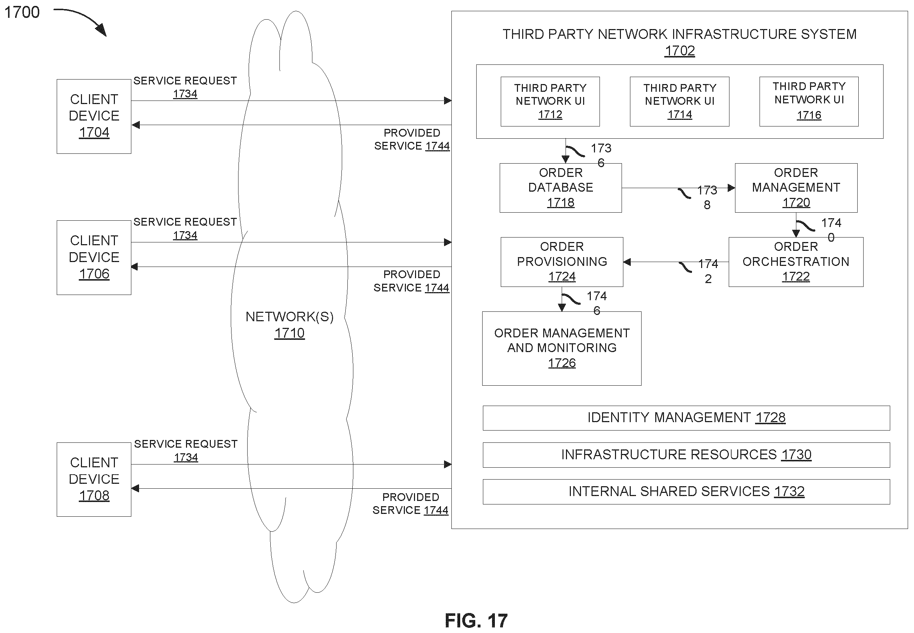

FIG. 17 illustrates one or more components of a system environment 1700 in which services may be offered as third party network services, in accordance with at least one embodiment. In at least one embodiment, a third party network may be referred to as a cloud, cloud network, cloud computing network, and/or variations thereof. In at least one embodiment, system environment 1700 includes one or more client computing devices 1704, 1706, and 1708 that may be used by users to interact with a third party network infrastructure system 1702 that provides third party network services, which may be referred to as cloud computing services. In at least one embodiment, third party network infrastructure system 1702 may comprise one or more computers and/or servers.

It should be appreciated that third party network infrastructure system 1702 depicted in FIG. 17 may have other components than those depicted. Further, FIG. 17 depicts an embodiment of a third party network infrastructure system. In at least one embodiment, third party network infrastructure system 1702 may have more or fewer components than depicted in FIG. 17, may combine two or more components, or may have a different configuration or arrangement of components.

In at least one embodiment, client computing devices 1704, 1706, and 1708 may be configured to operate a client application such as a web browser, a proprietary client application, or some other application, which may be used by a user of a client computing device to interact with third party network infrastructure system 1702 to use services provided by third party network infrastructure system 1702. Although exemplary system environment 1700 is shown with three client computing devices, any number of client computing devices may be supported. In at least one embodiment, other devices such as devices with sensors, etc. may interact with third party network infrastructure system 1702. In at least one embodiment, network(s) 1710 may facilitate communications and exchange of data between client computing devices 1704, 1706, and 1708 and third party network infrastructure system 1702.

In at least one embodiment, services provided by third party network infrastructure system 1702 may include a host of services that are made available to users of a third party network infrastructure system on demand. In at least one embodiment, various services may also be offered including without limitation online data storage and backup solutions, Web-based e-mail services, hosted office suites and document collaboration services, database management and processing, managed technical support services, and/or variations thereof. In at least one embodiment, services provided by a third party network infrastructure system can dynamically scale to meet needs of its users.

In at least one embodiment, a specific instantiation of a service provided by third party network infrastructure system 1702 may be referred to as a "service instance." In at least one embodiment, in general, any service made available to a user via a communication network, such as the Internet, from a third party network service provider's system is referred to as a "third party network service." In at least one embodiment, in a public third party network environment, servers and systems that make up a third party network service provider's system are different from a customer's own on-premises servers and systems. In at least one embodiment, a third party network service provider's system may host an application, and a user may, via a communication network such as the Internet, on demand, order and use an application.

In at least one embodiment, a service in a computer network third party network infrastructure may include protected computer network access to storage, a hosted database, a hosted web server, a software application, or other service provided by a third party network vendor to a user. In at least one embodiment, a service can include password-protected access to remote storage on a third party network through the Internet. In at least one embodiment, a service can include a web service-based hosted relational database and a script-language middleware engine for private use by a networked developer. In at least one embodiment, a service can include access to an email software application hosted on a third party network vendor's web site.

In at least one embodiment, third party network infrastructure system 1702 may include a suite of applications, middleware, and database service offerings that are delivered to a customer in a self-service, subscription-based, elastically scalable, reliable, highly available, and secure manner. In at least one embodiment, third party network infrastructure system 1702 may also provide "big data" related computation and analysis services. In at least one embodiment, term "big data" is generally used to refer to extremely large data sets that can be stored and manipulated by analysts and researchers to visualize large amounts of data, detect trends, and/or otherwise interact with data. In at least one embodiment, big data and related applications can be hosted and/or manipulated by an infrastructure system on many levels and at different scales. In at least one embodiment, tens, hundreds, or thousands of processors linked in parallel can act upon such data in order to present it or simulate external forces on data or what it represents. In at least one embodiment, these data sets can involve structured data, such as that organized in a database or otherwise according to a structured model, and/or unstructured data (e.g., emails, images, data blobs (binary large objects), web pages, complex event processing). In at least one embodiment, by leveraging an ability of an embodiment to relatively quickly focus more (or fewer) computing resources upon an objective, a third party network infrastructure system may be better available to carry out tasks on large data sets based on demand from a business, government agency, research organization, private individual, group of like-minded individuals or organizations, or other entity.

In at least one embodiment, third party network infrastructure system 1702 may be adapted to automatically provision, manage and track a customer's subscription to services offered by third party network infrastructure system 1702. In at least one embodiment, third party network infrastructure system 1702 may provide third party network services via different deployment models. In at least one embodiment, services may be provided under a public third party network model in which third party network infrastructure system 1702 is owned by an organization selling third party network services and services are made available to a general public or different industry enterprises. In at least one embodiment, services may be provided under a private third party network model in which third party network infrastructure system 1702 is operated solely for a single organization and may provide services for one or more entities within an organization. In at least one embodiment, third party network services may also be provided under a community third party network model in which third party network infrastructure system 1702 and services provided by third party network infrastructure system 1702 are shared by several organizations in a related community. In at least one embodiment, third party network services may also be provided under a hybrid third party network model, which is a combination of two or more different models.

In at least one embodiment, services provided by third party network infrastructure system 1702 may include one or more services provided under Software as a Service (SaaS) category, Platform as a Service (PaaS) category, Infrastructure as a Service (IaaS) category, or other categories of services including hybrid services. In at least one embodiment, a customer, via a subscription order, may order one or more services provided by third party network infrastructure system 1702. In at least one embodiment, third party network infrastructure system 1702 then performs processing to provide services in a customer's subscription order.

In at least one embodiment, services provided by third party network infrastructure system 1702 may include, without limitation, application services, platform services and infrastructure services. In at least one embodiment, application services may be provided by a third party network infrastructure system via a SaaS platform. In at least one embodiment, SaaS platform may be configured to provide third party network services that fall under a SaaS category. In at least one embodiment, SaaS platform may provide capabilities to build and deliver a suite of on-demand applications on an integrated development and deployment platform. In at least one embodiment, SaaS platform may manage and control underlying software and infrastructure for providing SaaS services. In at least one embodiment, by utilizing services provided by a SaaS platform, customers can utilize applications executing on a third party network infrastructure system. In at least one embodiment, customers can acquire an application services without a need for customers to purchase separate licenses and support. In at least one embodiment, various different SaaS services may be provided. In at least one embodiment, examples include, without limitation, services that provide solutions for sales performance management, enterprise integration, and business flexibility for large organizations.

In at least one embodiment, platform services may be provided by third party network infrastructure system 1702 via a PaaS platform. In at least one embodiment, PaaS platform may be configured to provide third party network services that fall under a PaaS category. In at least one embodiment, examples of platform services may include without limitation services that enable organizations to consolidate existing applications on a shared, common architecture, as well as an ability to build new applications that leverage shared services provided by a platform. In at least one embodiment, PaaS platform may manage and control underlying software and infrastructure for providing PaaS services. In at least one embodiment, customers can acquire PaaS services provided by third party network infrastructure system 1702 without a need for customers to purchase separate licenses and support.

In at least one embodiment, by utilizing services provided by a PaaS platform, customers can employ programming languages and tools supported by a third party network infrastructure system and also control deployed services. In at least one embodiment, platform services provided by a third party network infrastructure system may include database third party network services, middleware third party network services and third party network services. In at least one embodiment, database third party network services may support shared service deployment models that enable organizations to pool database resources and offer customers a Database as a Service in a form of a database third party network. In at least one embodiment, middleware third party network services may provide a platform for customers to develop and deploy various business applications, and third party network services may provide a platform for customers to deploy applications, in a third party network infrastructure system.

In at least one embodiment, various different infrastructure services may be provided by an IaaS platform in a third party network infrastructure system. In at least one embodiment, infrastructure services facilitate management and control of underlying computing resources, such as storage, networks, and other fundamental computing resources for customers utilizing services provided by a SaaS platform and a PaaS platform.

In at least one embodiment, third party network infrastructure system 1702 may also include infrastructure resources 1730 for providing resources used to provide various services to customers of a third party network infrastructure system. In at least one embodiment, infrastructure resources 1730 may include pre-integrated and optimized combinations of hardware, such as servers, storage, and networking resources to execute services provided by a Paas platform and a Saas platform, and other resources.

In at least one embodiment, resources in third party network infrastructure system 1702 may be shared by multiple users and dynamically re-allocated per demand. In at least one embodiment, resources may be allocated to users in different time zones. In at least one embodiment, third party network infrastructure system 1702 may enable a first set of users in a first time zone to utilize resources of a third party network infrastructure system for a specified number of hours and then enable a re-allocation of same resources to another set of users located in a different time zone, thereby maximizing utilization of resources.

In at least one embodiment, a number of internal shared services 1732 may be provided that are shared by different components or modules of third party network infrastructure system 1702 to enable provision of services by third party network infrastructure system 1702. In at least one embodiment, these internal shared services may include, without limitation, a security and identity service, an integration service, an enterprise repository service, an enterprise manager service, a virus scanning and white list service, a high availability, backup and recovery service, service for enabling third party network support, an email service, a notification service, a file transfer service, and/or variations thereof.

In at least one embodiment, third party network infrastructure system 1702 may provide comprehensive management of third party network services (e.g., SaaS, PaaS, and IaaS services) in a third party network infrastructure system. In at least one embodiment, third party network management functionality may include capabilities for provisioning, managing and tracking a customer's subscription received by third party network infrastructure system 1702, and/or variations thereof.

In at least one embodiment, as depicted in FIG. 17, third party network management functionality may be provided by one or more modules, such as an order management module 1720, an order orchestration module 1722, an order provisioning module 1724, an order management and monitoring module 1726, and an identity management module 1728. In at least one embodiment, these modules may include or be provided using one or more computers and/or servers, which may be general purpose computers, specialized server computers, server farms, server clusters, or any other appropriate arrangement and/or combination.

In at least one embodiment, at step 1734, a customer using a client device, such as client computing devices 1704, 1706 or 1708, may interact with third party network infrastructure system 1702 by requesting one or more services provided by third party network infrastructure system 1702 and placing an order for a subscription for one or more services offered by third party network infrastructure system 1702. In at least one embodiment, a customer may access a third party network User Interface (UI) such as third party network UI 1712, third party network UI 1714 and/or third party network UI 1716 and place a subscription order via these UIs. In at least one embodiment, order information received by third party network infrastructure system 1702 in response to a customer placing an order may include information identifying a customer and one or more services offered by a third party network infrastructure system 1702 that a customer intends to subscribe to.

In at least one embodiment, at step 1736, an order information received from a customer may be stored in an order database 1718. In at least one embodiment, if this is a new order, a new record may be created for an order. In at least one embodiment, order database 1718 can be one of several databases operated by third party network infrastructure system 1718 and operated in conjunction with other system elements.

In at least one embodiment, at step 1738, an order information may be forwarded to an order management module 1720 that may be configured to perform billing and accounting functions related to an order, such as verifying an order, and upon verification, booking an order.

In at least one embodiment, at step 1740, information regarding an order may be communicated to an order orchestration module 1722 that is configured to orchestrate provisioning of services and resources for an order placed by a customer. In at least one embodiment, order orchestration module 1722 may use services of order provisioning module 1724 for provisioning. In at least one embodiment, order orchestration module 1722 enables management of business processes associated with each order and applies business logic to determine whether an order should proceed to provisioning.

In at least one embodiment, at step 1742, upon receiving an order for a new subscription, order orchestration module 1722 sends a request to order provisioning module 1724 to allocate resources and configure resources needed to fulfill a subscription order. In at least one embodiment, order provisioning module 1724 enables an allocation of resources for services ordered by a customer. In at least one embodiment, order provisioning module 1724 provides a level of abstraction between third party network services provided by third party network infrastructure system 1700 and a physical implementation layer that is used to provision resources for providing requested services. In at least one embodiment, this enables order orchestration module 1722 to be isolated from implementation details, such as whether or not services and resources are actually provisioned in real-time or pre-provisioned and only allocated/assigned upon request.

In at least one embodiment, at step 1744, once services and resources are provisioned, a notification may be sent to subscribing customers indicating that a requested service is now ready for use. In at least one embodiment, information (e.g. a link) may be sent to a customer that enables a customer to start using requested services.

In at least one embodiment, at step 1746, a customer's subscription order may be managed and tracked by an order management and monitoring module 1726. **In** at least one embodiment, order management and monitoring module 1726 may be configured to collect usage statistics regarding a customer use of subscribed services. In at least one embodiment, statistics may be collected for an amount of storage used, an amount data transferred, a number of users, and an amount of system up time and system down time, and/or variations thereof.

In at least one embodiment, third party network infrastructure system 1700 may include an identity management module 1728 that is configured to provide identity services, such as access management and authorization services in third party network infrastructure system 1700. In at least one embodiment, identity management module 1728 may control information about customers who wish to utilize services provided by third party network infrastructure system 1702. In at least one embodiment, such information can include information that authenticates identities of such customers and information that describes which actions those customers are authorized to perform relative to various system resources (e.g., files, directories, applications, communication ports, memory segments, etc.). In at least one embodiment, identity management module 1728 may also include management of descriptive information about each customer and about how and by whom that descriptive information can be accessed and modified.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

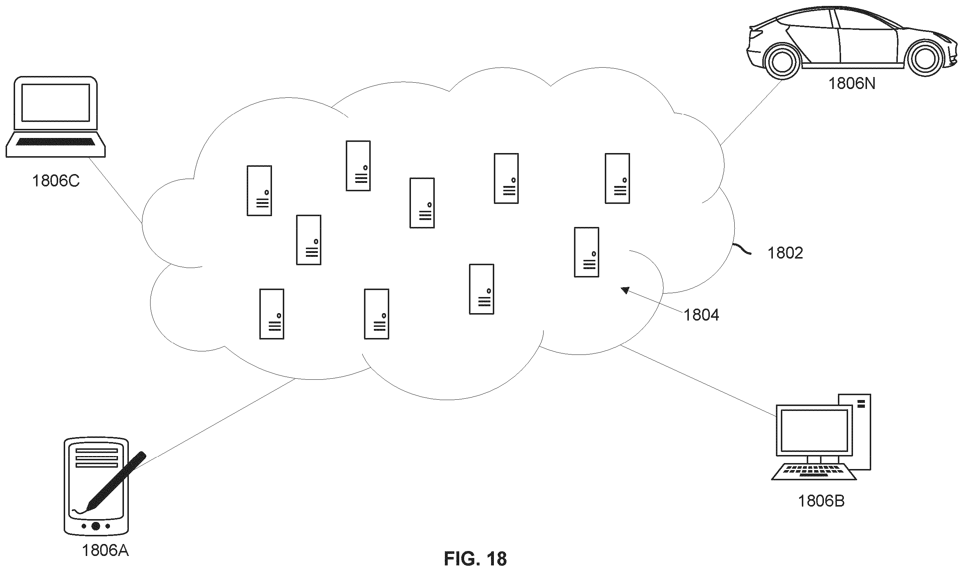

FIG. 18 illustrates a cloud computing environment 1802, in accordance with at least one embodiment. In at least one embodiment, cloud computing environment 1802 comprises one or more computer system/servers 1804 with which computing devices such as, personal digital assistant (PDA) or cellular telephone 1806A, desktop computer 1806B, laptop computer 1806C, and/or automobile computer system 1806N communicate. In at least one embodiment, this allows for infrastructure, platforms and/or software to be offered as services from cloud computing environment 1802, so as to not require each client to separately maintain such resources. It is understood that types of computing devices 1806A-N shown in FIG. 18 are intended to be illustrative only and that cloud computing environment 1802 can communicate with any type of computerized device over any type of network and/or network/addressable connection (e.g., using a web browser).

In at least one embodiment, a computer system/server 1804, which can be denoted as a cloud computing node, is operational with numerous other general purpose or special purpose computing system environments or configurations. In at least one embodiment, examples of computing systems, environments, and/or configurations that may be suitable for use with computer system/server 1804 include, but are not limited to, personal computer systems, server computer systems, thin clients, thick clients, hand-held or laptop devices, multiprocessor systems, microprocessor-based systems, set top boxes, programmable consumer electronics, network PCs, minicomputer systems, mainframe computer systems, and distributed cloud computing environments that include any of the above systems or devices, and/or variations thereof.

In at least one embodiment, computer system/server 1804 may be described in a general context of computer system-executable instructions, such as program modules, being executed by a computer system. In at least one embodiment, program modules include routines, programs, objects, components, logic, data structures, and so on, that perform particular tasks or implement particular abstract data types. In at least one embodiment, exemplary computer system/server 1804 may be practiced in distributed loud computing environments where tasks are performed by remote processing devices that are linked through a communications network. In at least one embodiment, in a distributed cloud computing environment, program modules may be located in both local and remote computer system storage media including memory storage devices.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

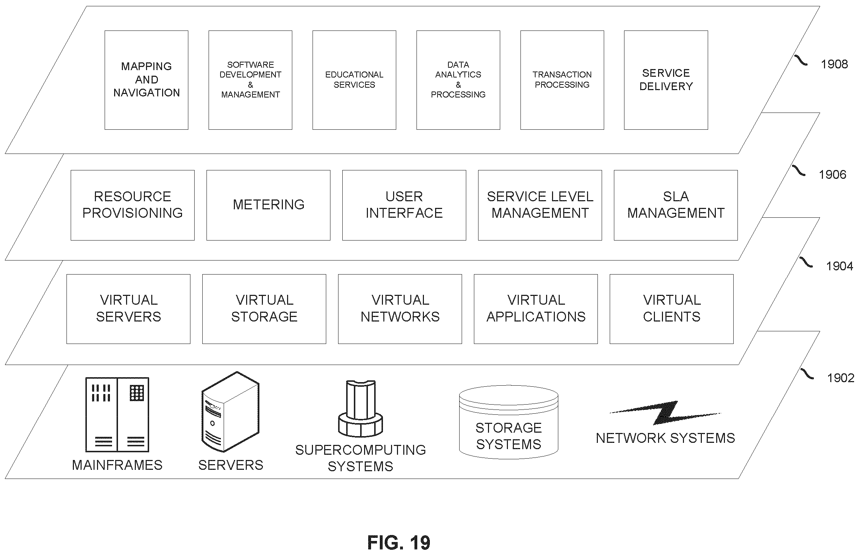

FIG. 19 illustrates a set of functional abstraction layers provided by cloud computing environment 1802 (FIG. 18), in accordance with at least one embodiment. It should be understood in advance that components, layers, and functions shown in FIG. 19 are intended to be illustrative only, and components, layers, and functions may vary.

In at least one embodiment, hardware and software layer 1902 includes hardware and software components. In at least one embodiment, examples of hardware components include mainframes, various RISC (Reduced Instruction Set Computer) architecture based servers, various computing systems, supercomputing systems, storage devices, networks, networking components, and/or variations thereof. In at least one embodiment, examples of software components include network application server software, various application server software, various database software, and/or variations thereof.

In at least one embodiment, virtualization layer 1904 provides an abstraction layer from which following exemplary virtual entities may be provided: virtual servers, virtual storage, virtual networks, including virtual private networks, virtual applications, virtual clients, and/or variations thereof.

In at least one embodiment, management layer 1906 provides various functions. In at least one embodiment, resource provisioning provides dynamic procurement of computing resources and other resources that are utilized to perform tasks within a cloud computing environment. In at least one embodiment, metering provides usage tracking as resources are utilized within a cloud computing environment, and billing or invoicing for consumption of these resources. In at least one embodiment, resources may comprise application software licenses. In at least one embodiment, security provides identity verification for users and tasks, as well as protection for data and other resources. In at least one embodiment, user interface provides access to a cloud computing environment for both users and system administrators. In at least one embodiment, service level management provides cloud computing resource allocation and management such that required service levels are met. In at least one embodiment, Service Level Agreement (SLA) management provides pre-arrangement for, and procurement of, cloud computing resources for which a future requirement is anticipated in accordance with an SLA.

In at least one embodiment, workloads layer 1908 provides functionality for which a cloud computing environment is utilized. In at least one embodiment, examples of workloads and functions which may be provided from this layer include: mapping and navigation, software development and management, educational services, data analytics and processing, transaction processing, and service delivery.

### Supercomputing

The following figures set forth, without limitation, exemplary supercomputer-based systems that can be used to implement at least one embodiment.

In at least one embodiment, a supercomputer may refer to a hardware system exhibiting substantial parallelism and comprising at least one chip, where chips in a system are interconnected by a network and are placed in hierarchically organized enclosures. In at least one embodiment, a large hardware system filling a machine room, with several racks, each containing several boards/rack modules, each containing several chips, all interconnected by a scalable network, is one particular example of a supercomputer. In at least one embodiment, a single rack of such a large hardware system is another example of a supercomputer. In at least one embodiment, a single chip exhibiting substantial parallelism and containing several hardware components can equally be considered to be a supercomputer, since as feature sizes may decrease, an amount of hardware that can be incorporated in a single chip may also increase.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

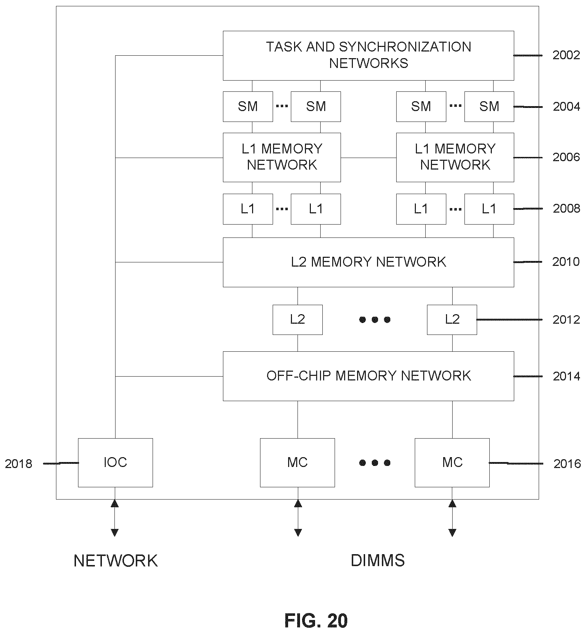

FIG. 20 illustrates a supercomputer at a chip level, in accordance with at least one embodiment. In at least one embodiment, inside an FPGA or ASIC chip, main computation is performed within finite state machines (2004) called thread units. In at least one embodiment, task and synchronization networks (2002) connect finite state machines and are used to dispatch threads and execute operations in correct order. In at least one embodiment, a multi-level partitioned on-chip cache hierarchy (2008, 2012) is accessed using memory networks (2006, 2010). In at least one embodiment, off-chip memory is accessed using memory controllers (2016) and an off-chip memory network (2014). In at least one embodiment, I/O controller (2018) is used for cross-chip communication when a design does not fit in a single logic chip.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

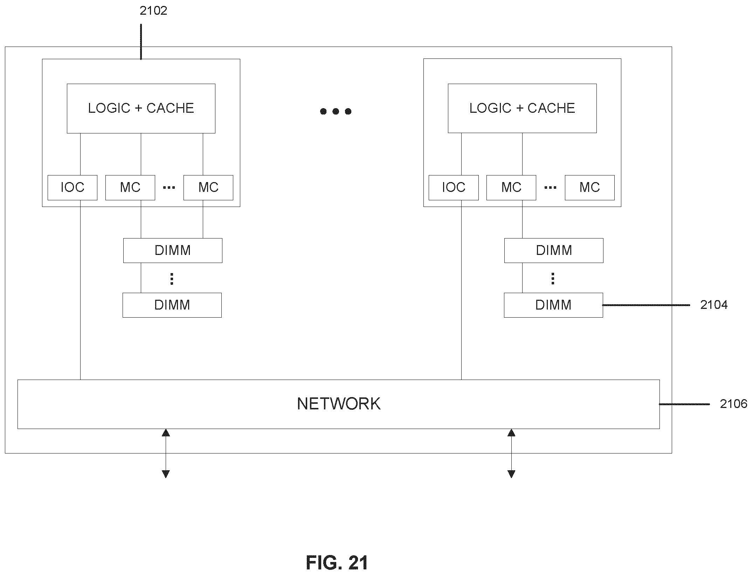

FIG. 21 illustrates a supercomputer at a rock module level, in accordance with at least one embodiment. In at least one embodiment, within a rack module, there are multiple FPGA or ASIC chips (2102) that are connected to one or more DRAM units (2104) which constitute main accelerator memory. In at least one embodiment, each FPGA/ASIC chip is connected to its neighbor FPGA/ASIC chip using wide busses on a board, with differential high speed signaling (2106). In at least one embodiment, each FPGA/ASIC chip is also connected to at least one high-speed serial communication cable.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

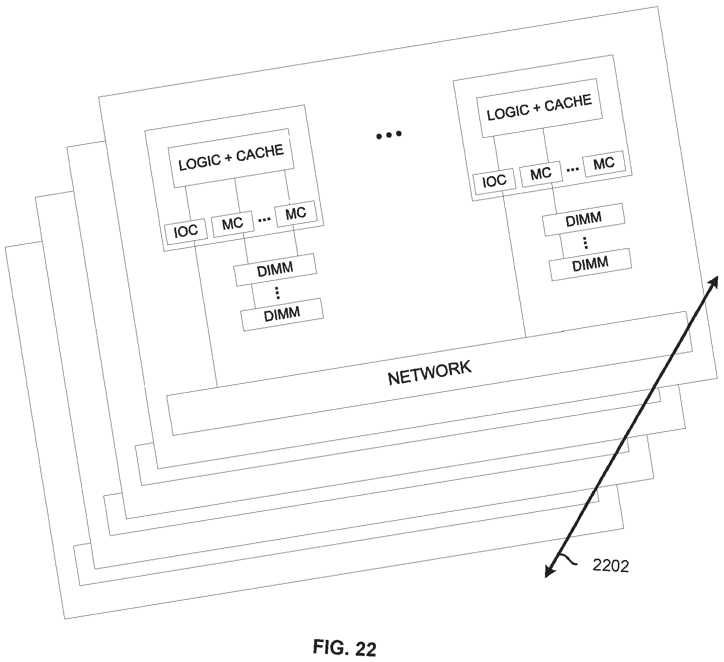

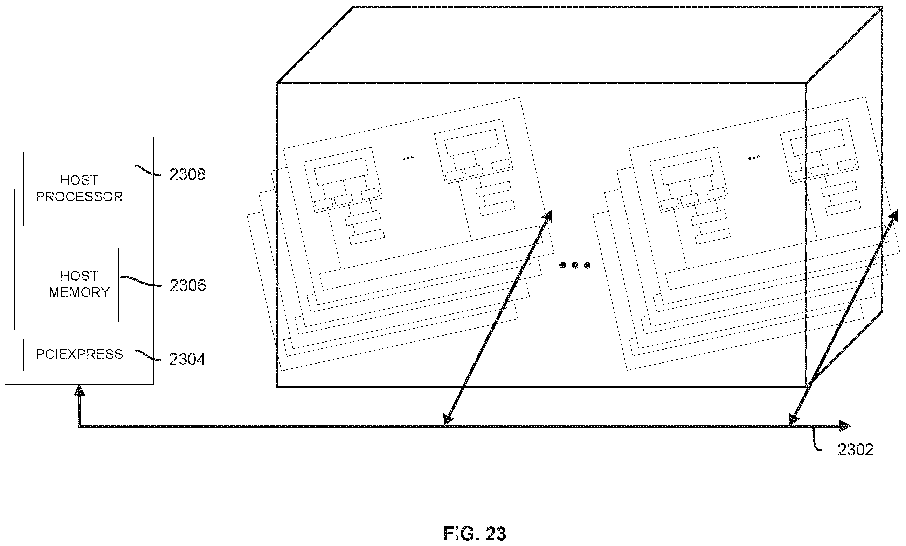

FIG. 22 illustrates a supercomputer at a rack level, in accordance with at least one embodiment. FIG. 23 illustrates a supercomputer at a whole system level, in accordance with at least one embodiment. In at least one embodiment, referring to FIG. 22 and FIG. 23, between rack modules in a rack and across racks throughout an entire system, high-speed serial optical or copper cables (2202, 2302) are used to realize a scalable, possibly incomplete hypercube network. In at least one embodiment, one of FPGA/ASIC chips of an accelerator is connected to a host system through a PCI-Express connection (2304). In at least one embodiment, host system comprises a host microprocessor (2308) that a software part of an application runs on and a memory consisting of one or more host memory DRAM units (2306) that is kept coherent with memory on an accelerator. In at least one embodiment, host system can be a separate module on one of racks, or can be integrated with one of a supercomputer's modules. In at least one embodiment, cube-connected cycles topology provide communication links to create a hypercube network for a large supercomputer. In at least one embodiment, a small group of FPGA/ASIC chips on a rack module can act as a single hypercube node, such that a total number of external links of each group is increased, compared to a single chip. In at least one embodiment, a group contains chips A, B, C and D on a rack module with internal wide differential busses connecting A, B, C and D in a torus organization. In at least one embodiment, there are 12 serial communication cables connecting a rack module to an outside world. In at least one embodiment, chip A on a rack module connects to serial communication cables 0, 1, 2. In at least one embodiment, chip B connects to cables 3, 4, 5. In at least one embodiment, chip C connects to 6, 7, 8. In at least one embodiment, chip D connects to 9, 10, 11. In at least one embodiment, an entire group {A, B, C, D} constituting a rack module can form a hypercube node within a supercomputer system, with up to 212=4096 rack modules (16384 FPGA/ASIC chips). In at least one embodiment, for chip A to send a message out on link 4 of group {A, B, C, D}, a message has to be routed first to chip B with an on-board differential wide bus connection. In at least one embodiment, a message arriving into a group {A, B, C, D} on link 4 (i.e., arriving at B) destined to chip A, also has to be routed first to a correct destination chip (A) internally within a group {A, B, C, D}. In at least one embodiment, parallel supercomputer systems of other sizes may also be implemented.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

### Artificial Intelligence

The following figures set forth, without limitation, exemplary artificial intelligence-based systems that can be used to implement at least one embodiment.

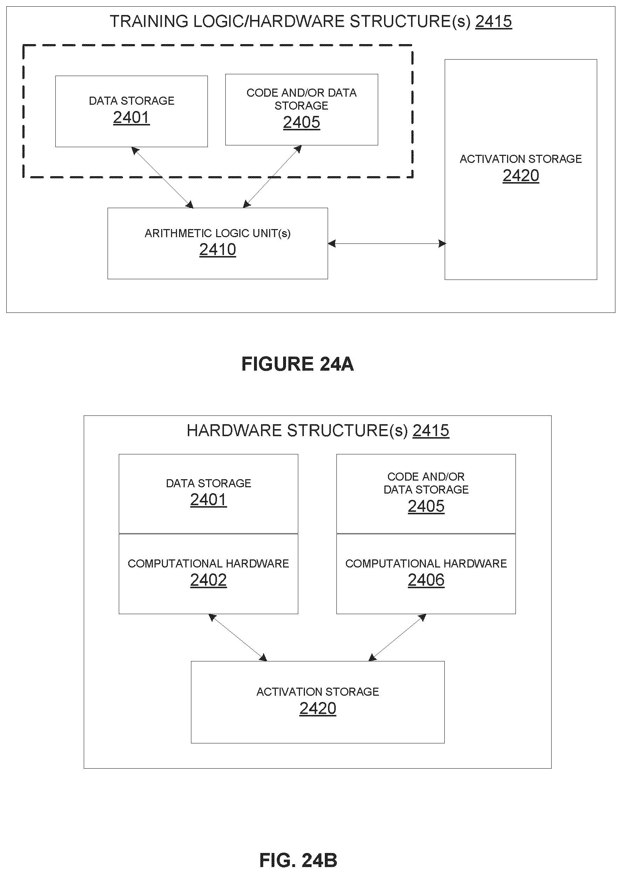

FIG. 24A illustrates inference and/or training logic 2415 used to perform inferencing and/or training operations associated with one or more embodiments. Details regarding inference and/or training logic 2415 are provided below in conjunction with FIGS. 24A and/or 24B.

In at least one embodiment, inference and/or training logic 2415 may include, without limitation, code and/or data storage 2401 to store forward and/or output weight and/or input/output data, and/or other parameters to configure neurons or layers of a neural network trained and/or used for inferencing in aspects of one or more embodiments. In at least one embodiment, training logic 2415 may include, or be coupled to code and/or data storage 2401 to store graph code or other software to control timing and/or order, in which weight and/or other parameter information is to be loaded to configure, logic, including integer and/or floating point units (collectively, arithmetic logic units (ALUs). In at least one embodiment, code, such as graph code, loads weight or other parameter information into processor ALUs based on an architecture of a neural network to which such code corresponds. In at least one embodiment code and/or data storage 2401 stores weight parameters and/or input/output data of each layer of a neural network trained or used in conjunction with one or more embodiments during forward propagation of input/output data and/or weight parameters during training and/or inferencing using aspects of one or more embodiments. In at least one embodiment, any portion of code and/or data storage 2401 may be included with other on-chip or off-chip data storage, including a processor's L1, L2, or L3 cache or system memory.

In at least one embodiment, any portion of code and/or data storage 2401 may be internal or external to one or more processors or other hardware logic devices or circuits. In at least one embodiment, code and/or code and/or data storage 2401 may be cache memory, dynamic randomly addressable memory ("DRAM"), static randomly addressable memory ("SRAM"), non-volatile memory (e.g., flash memory), or other storage. In at least one embodiment, a choice of whether code and/or code and/or data storage 2401 is internal or external to a processor, for example, or comprising DRAM, SRAM, flash or some other storage type may depend on available storage on-chip versus off-chip, latency requirements of training and/or inferencing functions being performed, batch size of data used in inferencing and/or training of a neural network, or some combination of these factors.

In at least one embodiment, inference and/or training logic 2415 may include, without limitation, a code and/or data storage 2405 to store backward and/or output weight and/or input/output data corresponding to neurons or layers of a neural network trained and/or used for inferencing in aspects of one or more embodiments. In at least one embodiment, code and/or data storage 2405 stores weight parameters and/or input/output data of each layer of a neural network trained or used in conjunction with one or more embodiments during backward propagation of input/output data and/or weight parameters during training and/or inferencing using aspects of one or more embodiments. In at least one embodiment, training logic 2415 may include, or be coupled to code and/or data storage 2405 to store graph code or other software to control timing and/or order, in which weight and/or other parameter information is to be loaded to configure, logic, including integer and/or floating point units (collectively, arithmetic logic units (ALUs).

In at least one embodiment, code, such as graph code, causes loading of weight or other parameter information into processor ALUs based on an architecture of a neural network to which such code corresponds. In at least one embodiment, any portion of code and/or data storage 2405 may be included with other on-chip or off-chip data storage, including a processor's L1, L2, or L3 cache or system memory. In at least one embodiment, any portion of code and/or data storage 2405 may be internal or external to one or more processors or other hardware logic devices or circuits. In at least one embodiment, code and/or data storage 2405 may be cache memory, DRAM, SRAM, non-volatile memory (e.g., flash memory), or other storage. In at least one embodiment, a choice of whether code and/or data storage 2405 is internal or external to a processor, for example, or comprising DRAM, SRAM, flash memory or some other storage type may depend on available storage on-chip versus off-chip, latency requirements of training and/or inferencing functions being performed, batch size of data used in inferencing and/or training of a neural network, or some combination of these factors.

In at least one embodiment, code and/or data storage 2401 and code and/or data storage 2405 may be separate storage structures. In at least one embodiment, code and/or data storage 2401 and code and/or data storage 2405 may be a combined storage structure. In at least one embodiment, code and/or data storage 2401 and code and/or data storage 2405 may be partially combined and partially separate. In at least one embodiment, any portion of code and/or data storage 2401 and code and/or data storage 2405 may be included with other on-chip or off-chip data storage, including a processor's L1, L2, or L3 cache or system memory.

In at least one embodiment, inference and/or training logic 2415 may include, without limitation, one or more arithmetic logic unit(s) ("ALU(s)") 2410, including integer and/or floating point units, to perform logical and/or mathematical operations based, at least in part on, or indicated by, training and/or inference code (e.g., graph code), a result of which may produce activations (e.g., output values from layers or neurons within a neural network) stored in an activation storage 2420 that are functions of input/output and/or weight parameter data stored in code and/or data storage 2401 and/or code and/or data storage 2405. In at least one embodiment, activations stored in activation storage 2420 are generated according to linear algebraic and or matrix-based mathematics performed by ALU(s) 2410 in response to performing instructions or other code, wherein weight values stored in code and/or data storage 2405 and/or data storage 2401 are used as operands along with other values, such as bias values, gradient information, momentum values, or other parameters or hyperparameters, any or all of which may be stored in code and/or data storage 2405 or code and/or data storage 2401 or another storage on or off-chip.

In at least one embodiment, ALU(s) 2410 are included within one or more processors or other hardware logic devices or circuits, whereas in another embodiment, ALU(s) 2410 may be external to a processor or other hardware logic device or circuit that uses them (e.g., a coprocessor). In at least one embodiment, ALUs 2410 may be included within a processor's execution units or otherwise within a bank of ALUs accessible by a processor's execution units either within same processor or distributed between different processors of different types (e.g., central processing units, graphics processing units, fixed function units, etc.). In at least one embodiment, code and/or data storage 2401, code and/or data storage 2405, and activation storage 2420 may share a processor or other hardware logic device or circuit, whereas in another embodiment, they may be in different processors or other hardware logic devices or circuits, or some combination of same and different processors or other hardware logic devices or circuits. In at least one embodiment, any portion of activation storage 2420 may be included with other on-chip or off-chip data storage, including a processor's L1, L2, or L3 cache or system memory. Furthermore, inferencing and/or training code may be stored with other code accessible to a processor or other hardware logic or circuit and fetched and/or processed using a processor's fetch, decode, scheduling, execution, retirement and/or other logical circuits.

In at least one embodiment, activation storage 2420 may be cache memory, DRAM, SRAM, non-volatile memory (e.g., flash memory), or other storage. In at least one embodiment, activation storage 2420 may be completely or partially within or external to one or more processors or other logical circuits. In at least one embodiment, a choice of whether activation storage 2420 is internal or external to a processor, for example, or comprising DRAM, SRAM, flash memory or some other storage type may depend on available storage on-chip versus off-chip, latency requirements of training and/or inferencing functions being performed, batch size of data used in inferencing and/or training of a neural network, or some combination of these factors.

In at least one embodiment, inference and/or training logic 2415 illustrated in FIG. 24A may be used in conjunction with an application-specific integrated circuit ("ASIC"), such as a TensorFlow^{®} Processing Unit from Google, an inference processing unit (IPU) from Graphcore^{™}, or a Nervana^{®} (e.g., "Lake Crest") processor from Intel Corp. In at least one embodiment, inference and/or training logic 2415 illustrated in FIG. 24A may be used in conjunction with central processing unit ("CPU") hardware, graphics processing unit ("GPU") hardware or other hardware, such as field programmable gate arrays ("FPGAs").

FIG. 24B illustrates inference and/or training logic 2415, according to at least one embodiment. In at least one embodiment, inference and/or training logic 2415 may include, without limitation, hardware logic in which computational resources are dedicated or otherwise exclusively used in conjunction with weight values or other information corresponding to one or more layers of neurons within a neural network. In at least one embodiment, inference and/or training logic 2415 illustrated in FIG. 24B may be used in conjunction with an application-specific integrated circuit (ASIC), such as TensorFlow^{®} Processing Unit from Google, an inference processing unit (IPU) from Graphcore^{™}, or a Nervana^{®} (e.g., "Lake Crest") processor from Intel Corp. In at least one embodiment, inference and/or training logic 2415 illustrated in FIG. 24B may be used in conjunction with central processing unit (CPU) hardware, graphics processing unit (GPU) hardware or other hardware, such as field programmable gate arrays (FPGAs). In at least one embodiment, inference and/or training logic 2415 includes, without limitation, code and/or data storage 2401 and code and/or data storage 2405, which may be used to store code (e.g., graph code), weight values and/or other information, including bias values, gradient information, momentum values, and/or other parameter or hyperparameter information. In at least one embodiment illustrated in FIG. 24B, each of code and/or data storage 2401 and code and/or data storage 2405 is associated with a dedicated computational resource, such as computational hardware 2402 and computational hardware 2406, respectively. In at least one embodiment, each of computational hardware 2402 and computational hardware 2406 comprises one or more ALUs that perform mathematical functions, such as linear algebraic functions, only on information stored in code and/or data storage 2401 and code and/or data storage 2405, respectively, result of which is stored in activation storage 2420.

In at least one embodiment, each of code and/or data storage 2401 and 2405 and corresponding computational hardware 2402 and 2406, respectively, correspond to different layers of a neural network, such that resulting activation from one storage/computational pair 2401/2402 of code and/or data storage 2401 and computational hardware 2402 is provided as an input to a next storage/computational pair 2405/2406 of code and/or data storage 2405 and computational hardware 2406, in order to mirror a conceptual organization of a neural network. In at least one embodiment, each of storage/computational pairs 2401/2402 and 2405/2406 may correspond to more than one neural network layer. In at least one embodiment, additional storage/computation pairs (not shown) subsequent to or in parallel with storage/computation pairs 2401/2402 and 2405/2406 may be included in inference and/or training logic 2415.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_ first_ctaid to request starting thread dimensions in full for indicated threads to be performed after prior cancellation.

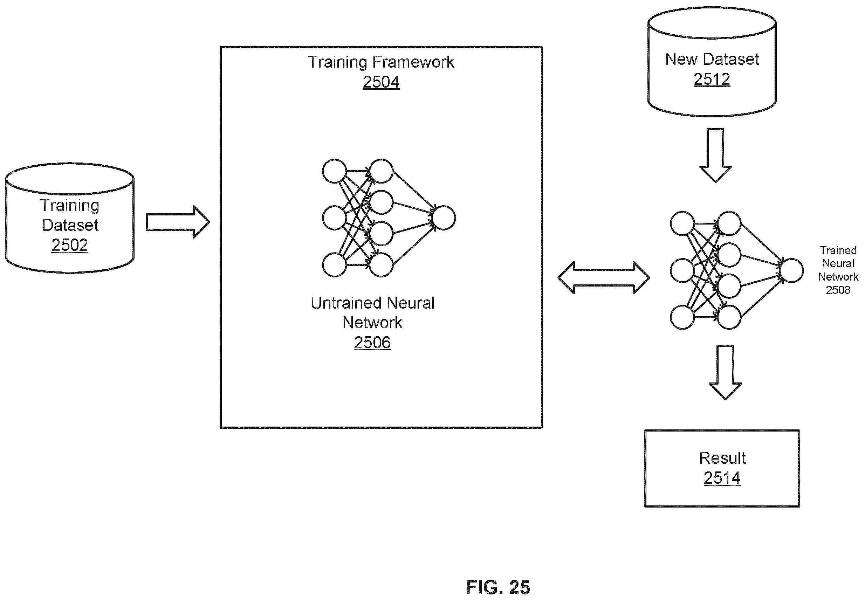

FIG. 25 illustrates training and deployment of a deep neural network, according to at least one embodiment. In at least one embodiment, untrained neural network 2506 is trained using a training dataset 2502. In at least one embodiment, training framework 2504 is a PyTorch framework, whereas in other embodiments, training framework 2504 is a TensorFlow, Boost, Caffe, Microsoft Cognitive Toolkit/CNTK, MXNet, Chainer, Keras, Deeplearning4j, or other training framework. In at least one embodiment, training framework 2504 trains an untrained neural network 2506 and enables it to be trained using processing resources described herein to generate a trained neural network 2508. In at least one embodiment, weights may be chosen randomly or by pre-training using a deep belief network. In at least one embodiment, training may be performed in either a supervised, partially supervised, or unsupervised manner.

In at least one embodiment, untrained neural network 2506 is trained using supervised learning, wherein training dataset 2502 includes an input paired with a desired output for an input, or where training dataset 2502 includes input having a known output and an output of neural network 2506 is manually graded. In at least one embodiment, untrained neural network 2506 is trained in a supervised manner and processes inputs from training dataset 2502 and compares resulting outputs against a set of expected or desired outputs. In at least one embodiment, errors are then propagated back through untrained neural network 2506. In at least one embodiment, training framework 2504 adjusts weights that control untrained neural network 2506. In at least one embodiment, training framework 2504 includes tools to monitor how well untrained neural network 2506 is converging towards a model, such as trained neural network 2508, suitable to generating correct answers, such as in result 2514, based on input data such as a new dataset 2512. In at least one embodiment, training framework 2504 trains untrained neural network 2506 repeatedly while adjust weights to refine an output of untrained neural network 2506 using a loss function and adjustment algorithm, such as stochastic gradient descent. In at least one embodiment, training framework 2504 trains untrained neural network 2506 until untrained neural network 2506 achieves a desired accuracy. In at least one embodiment, trained neural network 2508 can then be deployed to implement any number of machine learning operations.

In at least one embodiment, untrained neural network 2506 is trained using unsupervised learning, wherein untrained neural network 2506 attempts to train itself using unlabeled data. In at least one embodiment, unsupervised learning training dataset 2502 will include input data without any associated output data or "ground truth" data. In at least one embodiment, untrained neural network 2506 can learn groupings within training dataset 2502 and can determine how individual inputs are related to untrained dataset 2502. In at least one embodiment, unsupervised training can be used to generate a self-organizing map in trained neural network 2508 capable of performing operations useful in reducing dimensionality of new dataset 2512. In at least one embodiment, unsupervised training can also be used to perform anomaly detection, which allows identification of data points in new dataset 2512 that deviate from normal patterns of new dataset 2512.

In at least one embodiment, semi-supervised learning may be used, which is a technique in which in training dataset 2502 includes a mix of labeled and unlabeled data. In at least one embodiment, training framework 2504 may be used to perform incremental learning, such as through transferred learning techniques. In at least one embodiment, incremental learning enables trained neural network 2508 to adapt to new dataset 2512 without forgetting knowledge instilled within trained neural network 2508 during initial training.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_ first_ctaid to request starting thread dimensions in full for indicated threads to be performed after prior cancellation.

### 5G Networks

The following figures set forth, without limitation, exemplary 5G network-based systems that can be used to implement at least one embodiment.

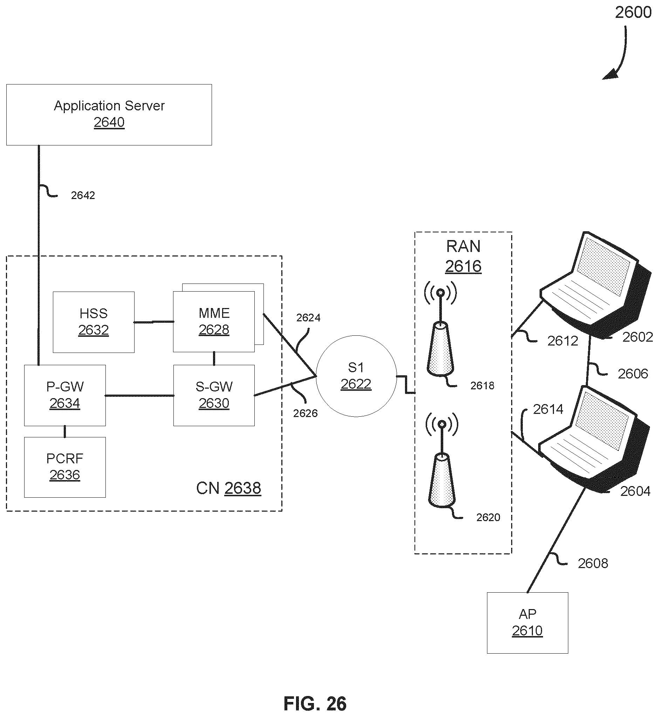

FIG. 26 illustrates an architecture of a system 2600 of a network, in accordance with at least one embodiment. In at least one embodiment, system 2600 is shown to include a user equipment (UE) 2602 and a UE 2604. In at least one embodiment, UEs 2602 and 2604 are illustrated as smartphones (e.g., handheld touchscreen mobile computing devices connectable to one or more cellular networks) but may also comprise any mobile or non-mobile computing device, such as Personal Data Assistants (PDAs), pagers, laptop computers, desktop computers, wireless handsets, or any computing device including a wireless communications interface.

In at least one embodiment, any of UEs 2602 and 2604 can comprise an Internet of Things (IoT) UE, which can comprise a network access layer designed for low-power IoT applications utilizing short-lived UE connections. In at least one embodiment, an IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. In at least one embodiment, a M2M or MTC exchange of data may be a machine-initiated exchange of data. In at least one embodiment, an IoT network describes interconnecting IoT UEs, which may include uniquely identifiable embedded computing devices (within Internet infrastructure), with short-lived connections. In at least one embodiment, an IoT UEs may execute background applications (e.g., keep alive messages, status updates, etc.) to facilitate connections of an IoT network.

In at least one embodiment, UEs 2602 and 2604 may be configured to connect, e.g., communicatively couple, with a radio access network (RAN) 2616. In at least one embodiment, RAN 2616 may be, for example, an Evolved Universal Mobile Telecommunications System (UMTS) Terrestrial Radio Access Network (E-UTRAN), a NextGen RAN (NG RAN), or some other type of RAN. In at least one embodiment, UEs 2602 and 2604 utilize connections 2612 and 2614, respectively, each of which comprises a physical communications interface or layer. In at least one embodiment, connections 2612 and 2614 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth generation (5G) protocol, a New Radio (NR) protocol, and variations thereof.

In at least one embodiment, UEs 2602 and 2604 may further directly exchange communication data via a ProSe interface 2606. In at least one embodiment, ProSe interface 2606 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

In at least one embodiment, UE 2604 is shown to be configured to access an access point (AP) 2610 via connection 2608. In at least one embodiment, connection 2608 can comprise a local wireless connection, such as a connection consistent with any IEEE 802.11 protocol, wherein AP 2610 would comprise a wireless fidelity (WiFi^{®}) router. In at least one embodiment, AP 2610 is shown to be connected to an Internet without connecting to a core network of a wireless system.

In at least one embodiment, RAN 2616 can include one or more access nodes that enable connections 2612 and 2614. In at least one embodiment, these access nodes (ANs) can be referred to as base stations (BSs), NodeBs, evolved NodeBs (eNBs), next Generation NodeBs (gNB), RAN nodes, and so forth, and can comprise ground stations (e.g., terrestrial access points) or satellite stations providing coverage within a geographic area (e.g., a cell). In at least one embodiment, RAN 2616 may include one or more RAN nodes for providing macrocells, e.g., macro RAN node 2618, and one or more RAN nodes for providing femtocells or picocells (e.g., cells having smaller coverage areas, smaller user capacity, or higher bandwidth compared to macrocells), e.g., low power (LP) RAN node 2620.

In at least one embodiment, any of RAN nodes 2618 and 2620 can terminate an air interface protocol and can be a first point of contact for UEs 2602 and 2604. In at least one embodiment, any of RAN nodes 2618 and 2620 can fulfill various logical functions for RAN 2616 including, but not limited to, radio network controller (RNC) functions such as radio bearer management, uplink and downlink dynamic radio resource management and data packet scheduling, and mobility management.

In at least one embodiment, UEs 2602 and 2604 can be configured to communicate using Orthogonal Frequency-Division Multiplexing (OFDM) communication signals with each other or with any of RAN nodes 2618 and 2620 over a multi-carrier communication channel in accordance various communication techniques, such as, but not limited to, an Orthogonal Frequency Division Multiple Access (OFDMA) communication technique (e.g., for downlink communications) or a Single Carrier Frequency Division Multiple Access (SC-FDMA) communication technique (e.g., for uplink and ProSe or sidelink communications), and/or variations thereof. In at least one embodiment, OFDM signals can comprise a plurality of orthogonal sub-carriers.

In at least one embodiment, a downlink resource grid can be used for downlink transmissions from any of RAN nodes 2618 and 2620 to UEs 2602 and 2604, while uplink transmissions can utilize similar techniques. In at least one embodiment, a grid can be a time frequency grid, called a resource grid or time-frequency resource grid, which is a physical resource in a downlink in each slot. In at least one embodiment, such a time frequency plane representation is a common practice for OFDM systems, which makes it intuitive for radio resource allocation. In at least one embodiment, each column and each row of a resource grid corresponds to one OFDM symbol and one OFDM subcarrier, respectively. In at least one embodiment, a duration of a resource grid in a time domain corresponds to one slot in a radio frame. In at least one embodiment, a smallest time-frequency unit in a resource grid is denoted as a resource element. In at least one embodiment, each resource grid comprises a number of resource blocks, which describe a mapping of certain physical channels to resource elements. In at least one embodiment, each resource block comprises a collection of resource elements. In at least one embodiment, in a frequency domain, this may represent a smallest quantity of resources that currently can be allocated. In at least one embodiment, there are several different physical downlink channels that are conveyed using such resource blocks.

In at least one embodiment, a physical downlink shared channel (PDSCH) may carry user data and higher-layer signaling to UEs 2602 and 2604. In at least one embodiment, a physical downlink control channel (PDCCH) may carry information about a transport format and resource allocations related to PDSCH channel, among other things. In at least one embodiment, it may also inform UEs 2602 and 2604 about a transport format, resource allocation, and HARQ (Hybrid Automatic Repeat Request) information related to an uplink shared channel. In at least one embodiment, typically, downlink scheduling (assigning control and shared channel resource blocks to UE 2602 within a cell) may be performed at any of RAN nodes 2618 and 2620 based on channel quality information fed back from any of UEs 2602 and 2604. In at least one embodiment, downlink resource assignment information may be sent on a PDCCH used for (e.g., assigned to) each of UEs 2602 and 2604.

In at least one embodiment, a PDCCH may use control channel elements (CCEs) to convey control information. In at least one embodiment, before being mapped to resource elements, PDCCH complex valued symbols may first be organized into quadruplets, which may then be permuted using a sub-block interleaver for rate matching. In at least one embodiment, each PDCCH may be transmitted using one or more of these CCEs, where each CCE may correspond to nine sets of four physical resource elements known as resource element groups (REGs). In at least one embodiment, four Quadrature Phase Shift Keying (QPSK) symbols may be mapped to each REG. In at least one embodiment, PDCCH can be transmitted using one or more CCEs, depending on a size of a downlink control information (DCI) and a channel condition. In at least one embodiment, there can be four or more different PDCCH formats defined in LTE with different numbers of CCEs (e.g., aggregation level, L=1, 2, 4, or 8).

In at least one embodiment, an enhanced physical downlink control channel (EPDCCH) that uses PDSCH resources may be utilized for control information transmission. In at least one embodiment, EPDCCH may be transmitted using one or more enhanced control channel elements (ECCEs). In at least one embodiment, each ECCE may correspond to nine sets of four physical resource elements known as an enhanced resource element groups (EREGs). In at least one embodiment, an ECCE may have other numbers of EREGs in some situations.

In at least one embodiment, RAN 2616 is shown to be communicatively coupled to a core network (CN) 2638 via an S1 interface 2622. In at least one embodiment, CN 2638 may be an evolved packet core (EPC) network, a NextGen Packet Core (NPC) network, or some other type of CN. In at least one embodiment, S1 interface 2622 is split into two parts: S1-U interface 2626, which carries traffic data between RAN nodes 2618 and 2620 and serving gateway (S-GW) 2630, and a S1-mobility management entity (MME) interface 2624, which is a signaling interface between RAN nodes 2618 and 2620 and MMEs 2628.

In at least one embodiment, CN 2638 comprises MMEs 2628, S-GW 2630, Packet Data Network (PDN) Gateway (P-GW) 2634, and a home subscriber server (HSS) 2632. In at least one embodiment, MMEs 2628 may be similar in function to a control plane of legacy Serving General Packet Radio Service (GPRS) Support Nodes (SGSN). In at least one embodiment, MMEs 2628 may manage mobility aspects in access such as gateway selection and tracking area list management. In at least one embodiment, HSS 2632 may comprise a database for network users, including subscription related information to support a network entities' handling of communication sessions. In at least one embodiment, CN 2638 may comprise one or several HSSs 2632, depending on a number of mobile subscribers, on a capacity of an equipment, on an organization of a network, etc. In at least one embodiment, HSS 2632 can provide support for routing/roaming, authentication, authorization, naming/addressing resolution, location dependencies, etc.

In at least one embodiment, S-GW 2630 may terminate a S1 interface 2622 towards RAN 2616, and routes data packets between RAN 2616 and CN 2638. In at least one embodiment, S-GW 2630 may be a local mobility anchor point for inter-RAN node handovers and also may provide an anchor for inter-3GPP mobility. In at least one embodiment, other responsibilities may include lawful intercept, charging, and some policy enforcement.

In at least one embodiment, P-GW 2634 may terminate an SGi interface toward a PDN. In at least one embodiment, P-GW 2634 may route data packets between an EPC network 2638 and external networks such as a network including application server 2640 (alternatively referred to as application function (AF)) via an Internet Protocol (IP) interface 2642. In at least one embodiment, application server 2640 may be an element offering applications that use IP bearer resources with a core network (e.g., UMTS Packet Services (PS) domain, LTE PS data services, etc.). In at least one embodiment, P-GW 2634 is shown to be communicatively coupled to an application server 2640 via an IP communications interface 2642. In at least one embodiment, application server 2640 can also be configured to support one or more communication services (e.g., Voice-over-Internet Protocol (VoIP) sessions, PTT sessions, group communication sessions, social networking services, etc.) for UEs 2602 and 2604 via CN 2638.

In at least one embodiment, P-GW 2634 may further be a node for policy enforcement and charging data collection. In at least one embodiment, policy and Charging Enforcement Function (PCRF) 2636 is a policy and charging control element of CN 2638. In at least one embodiment, in a non-roaming scenario, there may be a single PCRF in a Home Public Land Mobile Network (HPLMN) associated with a UE's Internet Protocol Connectivity Access Network (IP-CAN) session. In at least one embodiment, in a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). In at least one embodiment, PCRF 2636 may be communicatively coupled to application server 2640 via P-GW 2634. In at least one embodiment, application server 2640 may signal PCRF 2636 to indicate a new service flow and select an appropriate Quality of Service (QoS) and charging parameters. In at least one embodiment, PCRF 2636 may provision this rule into a Policy and Charging Enforcement Function (PCEF) (not shown) with an appropriate traffic flow template (TFT) and QoS class of identifier (QCI), which commences a QoS and charging as specified by application server 2640.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

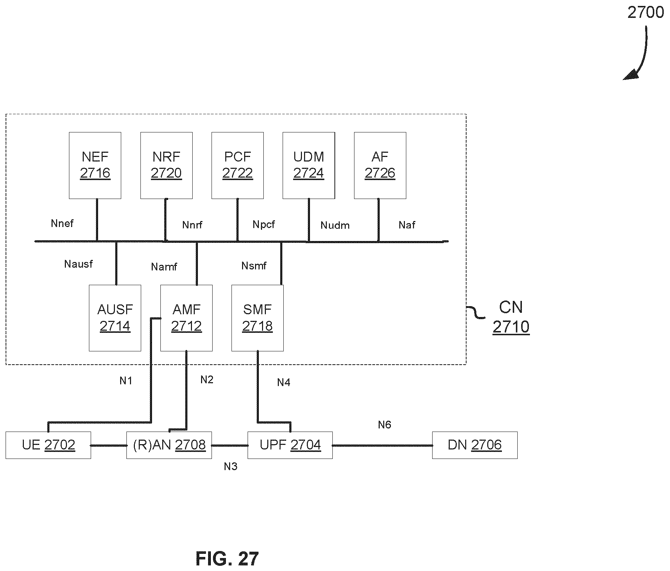

FIG. 27 illustrates an architecture of a system 2700 of a network in accordance with some embodiments. In at least one embodiment, system 2700 is shown to include a UE 2702, a 5G access node or RAN node (shown as (R)AN node 2708), a User Plane Function (shown as UPF 2704), a Data Network (DN 2706), which may be, for example, operator services, Internet access or 3rd party services, and a 5G Core Network (5GC) (shown as CN 2710).

In at least one embodiment, CN 2710 includes an Authentication Server Function (AUSF 2714); a Core Access and Mobility Management Function (AMF 2712); a Session Management Function (SMF 2718); a Network Exposure Function (NEF 2716); a Policy Control Function (PCF 2722); a Network Function (NF) Repository Function (NRF 2720); a Unified Data Management (UDM 2724); and an Application Function (AF 2726). In at least one embodiment, CN 2710 may also include other elements that are not shown, such as a Structured Data Storage network function (SDSF), an Unstructured Data Storage network function (UDSF), and variations thereof.

In at least one embodiment, UPF 2704 may act as an anchor point for intra-RAT and inter-RAT mobility, an external PDU session point of interconnect to DN 2706, and a branching point to support multi-homed PDU session. In at least one embodiment, UPF 2704 may also perform packet routing and forwarding, packet inspection, enforce user plane part of policy rules, lawfully intercept packets (UP collection); traffic usage reporting, perform QoS handling for user plane (e.g. packet filtering, gating, UL/DL rate enforcement), perform Uplink Traffic verification (e.g., SDF to QoS flow mapping), transport level packet marking in uplink and downlink, and downlink packet buffering and downlink data notification triggering. In at least one embodiment, UPF 2704 may include an uplink classifier to support routing traffic flows to a data network. In at least one embodiment, DN 2706 may represent various network operator services, Internet access, or third party services.

In at least one embodiment, AUSF 2714 may store data for authentication of UE 2702 and handle authentication related functionality. In at least one embodiment, AUSF 2714 may facilitate a common authentication framework for various access types.

In at least one embodiment, AMF 2712 may be responsible for registration management (e.g., for registering UE 2702, etc.), connection management, reachability management, mobility management, and lawful interception of AMF-related events, and access authentication and authorization. In at least one embodiment, AMF 2712 may provide transport for SM messages for SMF 2718, and act as a transparent proxy for routing SM messages. In at least one embodiment, AMF 2712 may also provide transport for short message service (SMS) messages between UE 2702 and an SMS function (SMSF) (not shown by FIG. 27). In at least one embodiment, AMF 2712 may act as Security Anchor Function (SEA), which may include interaction with AUSF 2714 and UE 2702 and receipt of an intermediate key that was established as a result of UE 2702 authentication process. In at least one embodiment, where USIM based authentication is used, AMF 2712 may retrieve security material from AUSF 2714. In at least one embodiment, AMF 2712 may also include a Security Context Management (SCM) function, which receives a key from SEA that it uses to derive access-network specific keys. In at least one embodiment, furthermore, AMF 2712 may be a termination point of RAN CP interface (N2 reference point), a termination point of NAS (NI) signaling, and perform NAS ciphering and integrity protection.

In at least one embodiment, AMF 2712 may also support NAS signaling with a UE 2702 over an N3 interworking-function (IWF) interface. In at least one embodiment, N3IWF may be used to provide access to untrusted entities. In at least one embodiment, N3IWF may be a termination point for N2 and N3 interfaces for control plane and user plane, respectively, and as such, may handle N2 signaling from SMF and AMF for PDU sessions and QoS, encapsulate/de-encapsulate packets for IPSec and N3 tunneling, mark N3 user-plane packets in uplink, and enforce QoS corresponding to N3 packet marking taking into account QoS requirements associated to such marking received over N2. In at least one embodiment, N3IWF may also relay uplink and downlink control-plane NAS (NI) signaling between UE 2702 and AMF 2712, and relay uplink and downlink user-plane packets between UE 2702 and UPF 2704. In at least one embodiment, N3IWF also provides mechanisms for IPsec tunnel establishment with UE 2702.

In at least one embodiment, SMF 2718 may be responsible for session management (e.g., session establishment, modify and release, including tunnel maintain between UPF and AN node); UE IP address allocation & management (including optional Authorization); Selection and control of UP function; Configures traffic steering at UPF to route traffic to proper destination; termination of interfaces towards Policy control functions; control part of policy enforcement and QoS; lawful intercept (for SM events and interface to LI System); termination of SM parts of NAS messages; downlink Data Notification; initiator of AN specific SM information, sent via AMF over N2 to AN; determine SSC mode of a session. In at least one embodiment, SMF 2718 may include following roaming functionality: handle local enforcement to apply QoS SLAB (VPLMN); charging data collection and charging interface (VPLMN); lawful intercept (in VPLMN for SM events and interface to LI System); support for interaction with external DN for transport of signaling for PDU session authorization/ authentication by external DN.

In at least one embodiment, NEF 2716 may provide means for securely exposing services and capabilities provided by 3GPP network functions for third party, internal exposure/re-exposure, Application Functions (e.g., AF 2726), edge computing or fog computing systems, etc. In at least one embodiment, NEF 2716 may authenticate, authorize, and/or throttle AFs. In at least one embodiment, NEF 2716 may also translate information exchanged with AF 2726 and information exchanged with internal network functions. In at least one embodiment, NEF 2716 may translate between an AF-Service-Identifier and an internal 5GC information. In at least one embodiment, NEF 2716 may also receive information from other network functions (NFs) based on exposed capabilities of other network functions. In at least one embodiment, this information may be stored at NEF 2716 as structured data, or at a data storage NF using a standardized interfaces. In at least one embodiment, stored information can then be re-exposed by NEF 2716 to other NFs and AFs, and/or used for other purposes such as analytics.

In at least one embodiment, NRF 2720 may support service discovery functions, receive NF Discovery Requests from NF instances, and provide information of discovered NF instances to NF instances. In at least one embodiment, NRF 2720 also maintains information of available NF instances and their supported services.

In at least one embodiment, PCF 2722 may provide policy rules to control plane function(s) to enforce them, and may also support unified policy framework to govern network behavior. In at least one embodiment, PCF 2722 may also implement a front end (FE) to access subscription information relevant for policy decisions in a UDR of UDM 2724.

In at least one embodiment, UDM 2724 may handle subscription-related information to support a network entities' handling of communication sessions, and may store subscription data of UE 2702. In at least one embodiment, UDM 2724 may include two parts, an application FE and a User Data Repository (UDR). In at least one embodiment, UDM may include a UDM FE, which is in charge of processing of credentials, location management, subscription management and so on. In at least one embodiment, several different front ends may serve a same user in different transactions. In at least one embodiment, UDM-FE accesses subscription information stored in an UDR and performs authentication credential processing; user identification handling; access authorization; registration/mobility management; and subscription management. In at least one embodiment, UDR may interact with PCF 2722. In at least one embodiment, UDM 2724 may also support SMS management, wherein an SMS-FE implements a similar application logic as discussed previously.

In at least one embodiment, AF 2726 may provide application influence on traffic routing, access to a Network Capability Exposure (NCE), and interact with a policy framework for policy control. In at least one embodiment, NCE may be a mechanism that allows a 5GC and AF 2726 to provide information to each other via NEF 2716, which may be used for edge computing implementations. In at least one embodiment, network operator and third party services may be hosted close to UE 2702 access point of attachment to achieve an efficient service delivery through a reduced end-to-end latency and load on a transport network. In at least one embodiment, for edge computing implementations, 5GC may select a UPF 2704 close to UE 2702 and execute traffic steering from UPF 2704 to DN 2706 via N6 interface. In at least one embodiment, this may be based on UE subscription data, UE location, and information provided by AF 2726. In at least one embodiment, AF 2726 may influence UPF (re)selection and traffic routing. In at least one embodiment, based on operator deployment, when AF 2726 is considered to be a trusted entity, a network operator may permit AF 2726 to interact directly with relevant NFs.

In at least one embodiment, CN 2710 may include an SMSF, which may be responsible for SMS subscription checking and verification, and relaying SM messages to/from UE 2702 to/from other entities, such as an SMS-GMSC/IWMSC/SMS-router. In at least one embodiment, SMS may also interact with AMF 2712 and UDM 2724 for notification procedure that UE 2702 is available for SMS transfer (e.g., set a UE not reachable flag, and notifying UDM 2724 when UE 2702 is available for SMS).

In at least one embodiment, system 2700 may include following service-based interfaces: Namf: Service-based interface exhibited by AMF; Nsmf: Service-based interface exhibited by SMF; Nnef: Service-based interface exhibited by NEF; Npcf: Service-based interface exhibited by PCF; Nudm: Service-based interface exhibited by UDM; Naf: Service-based interface exhibited by AF; Nnrf: Service-based interface exhibited by NRF; and Nausf: Service-based interface exhibited by AUSF.

In at least one embodiment, system 2700 may include following reference points: N1: Reference point between UE and AMF; N2: Reference point between (R)AN and AMF; N3: Reference point between (R)AN and UPF; N4: Reference point between SMF and UPF; and N6: Reference point between UPF and a Data Network. In at least one embodiment, there may be many more reference points and/or service-based interfaces between a NF services in NFs, however, these interfaces and reference points have been omitted for clarity. In at least one embodiment, an NS reference point may be between a PCF and AF; an N7 reference point may be between PCF and SMF; an N11 reference point between AMF and SMF; etc. In at least one embodiment, CN 2710 may include an Nx interface, which is an inter-CN interface between MME and AMF 2712 in order to enable interworking between CN 2710 and CN 7227.

In at least one embodiment, system 2700 may include multiple RAN nodes (such as (R)AN node 2708) wherein an Xn interface is defined between two or more (R)AN node 2708 (e.g., gNBs) that connecting to 5GC 410, between a (R)AN node 2708 (e.g., gNB) connecting to CN 2710 and an eNB (e.g., a macro RAN node), and/or between two eNBs connecting to CN 2710.

In at least one embodiment, Xn interface may include an Xn user plane (Xn-U) interface and an Xn control plane (Xn-C) interface. In at least one embodiment, Xn-U may provide non-guaranteed delivery of user plane PDUs and support/provide data forwarding and flow control functionality. In at least one embodiment, Xn-C may provide management and error handling functionality, functionality to manage a Xn-C interface; mobility support for UE 2702 in a connected mode (e.g., CM-CONNECTED) including functionality to manage UE mobility for connected mode between one or more (R)AN node 2708. In at least one embodiment, mobility support may include context transfer from an old (source) serving (R)AN node 2708 to new (target) serving (R)AN node 2708; and control of user plane tunnels between old (source) serving (R)AN node 2708 to new (target) serving (R)AN node 2708.

In at least one embodiment, a protocol stack of a Xn-U may include a transport network layer built on Internet Protocol (IP) transport layer, and a GTP-U layer on top of a UDP and/or IP layer(s) to carry user plane PDUs. In at least one embodiment, Xn-C protocol stack may include an application layer signaling protocol (referred to as Xn Application Protocol (Xn-AP)) and a transport network layer that is built on an SCTP layer. In at least one embodiment, SCTP layer may be on top of an IP layer. In at least one embodiment, SCTP layer provides a guaranteed delivery of application layer messages. In at least one embodiment, in a transport IP layer point-to-point transmission is used to deliver signaling PDUs. In at least one embodiment, Xn-U protocol stack and/or a Xn-C protocol stack may be same or similar to an user plane and/or control plane protocol stack(s) shown and described herein.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

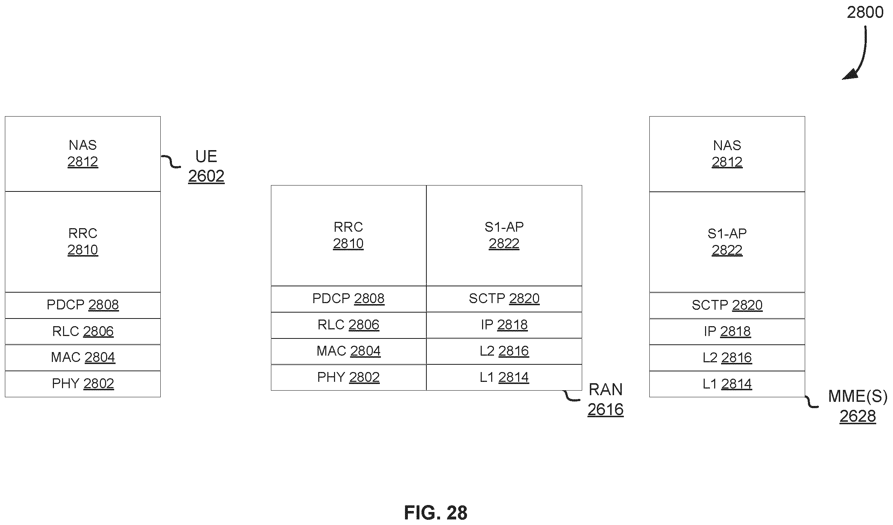

FIG. 28 is an illustration of a control plane protocol stack in accordance with some embodiments. In at least one embodiment, a control plane 2800 is shown as a communications protocol stack between UE 2602 (or alternatively, UE 2604), RAN 2616, and MME(s) 2628.

In at least one embodiment, PHY layer 2802 may transmit or receive information used by MAC layer 2804 over one or more air interfaces. In at least one embodiment, PHY layer 2802 may further perform link adaptation or adaptive modulation and coding (AMC), power control, cell search (e.g., for initial synchronization and handover purposes), and other measurements used by higher layers, such as an RRC layer 2810. In at least one embodiment, PHY layer 2802 may still further perform error detection on transport channels, forward error correction (FEC) coding/de-coding of transport channels, modulation/demodulation of physical channels, interleaving, rate matching, mapping onto physical channels, and Multiple Input Multiple Output (MIMO) antenna processing.

In at least one embodiment, MAC layer 2804 may perform mapping between logical channels and transport channels, multiplexing of MAC service data units (SDUs) from one or more logical channels onto transport blocks (TB) to be delivered to PHY via transport channels, de-multiplexing MAC SDUs to one or more logical channels from transport blocks (TB) delivered from PHY via transport channels, multiplexing MAC SDUs onto TBs, scheduling information reporting, error correction through hybrid automatic repeat request (HARD), and logical channel prioritization.

In at least one embodiment, RLC layer 2806 may operate in a plurality of modes of operation, including: Transparent Mode (TM), Unacknowledged Mode (UM), and Acknowledged Mode (AM). In at least one embodiment, RLC layer 2806 may execute transfer of upper layer protocol data units (PDUs), error correction through automatic repeat request (ARQ) for AM data transfers, and concatenation, segmentation and reassembly of RLC SDUs for UM and AM data transfers. In at least one embodiment, RLC layer 2806 may also execute re-segmentation of RLC data PDUs for AM data transfers, reorder RLC data PDUs for UM and AM data transfers, detect duplicate data for UM and AM data transfers, discard RLC SDUs for UM and AM data transfers, detect protocol errors for AM data transfers, and perform RLC re-establishment.

In at least one embodiment, PDCP layer 2808 may execute header compression and decompression of IP data, maintain PDCP Sequence Numbers (SNs), perform in-sequence delivery of upper layer PDUs at re-establishment of lower layers, eliminate duplicates of lower layer SDUs at re-establishment of lower layers for radio bearers mapped on RLC AM, cipher and decipher control plane data, perform integrity protection and integrity verification of control plane data, control timer-based discard of data, and perform security operations (e.g., ciphering, deciphering, integrity protection, integrity verification, etc.).

In at least one embodiment, main services and functions of a RRC layer 2810 may include broadcast of system information (e.g., included in Master Information Blocks (MIBs) or System Information Blocks (SIBs) related to a non-access stratum (NAS)), broadcast of system information related to an access stratum (AS), paging, establishment, maintenance and release of an RRC connection between an UE and E-UTRAN (e.g., RRC connection paging, RRC connection establishment, RRC connection modification, and RRC connection release), establishment, configuration, maintenance and release of point-to-point radio bearers, security functions including key management, inter radio access technology (RAT) mobility, and measurement configuration for UE measurement reporting. In at least one embodiment, said MIBs and SIBs may comprise one or more information elements (IEs), which may each comprise individual data fields or data structures.

In at least one embodiment, UE 2602 and RAN 2616 may utilize a Uu interface (e.g., an LTE-Uu interface) to exchange control plane data via a protocol stack comprising PHY layer 2802, MAC layer 2804, RLC layer 2806, PDCP layer 2808, and RRC layer 2810.

In at least one embodiment, non-access stratum (NAS) protocols (NAS protocols 2812) form a highest stratum of a control plane between UE 2602 and MME(s) 2628. In at least one embodiment, NAS protocols 2812 support mobility of UE 2602 and session management procedures to establish and maintain IP connectivity between UE 2602 and P-GW 2634.

In at least one embodiment, Si Application Protocol (S1-AP) layer (Si-AP layer 2822) may support functions of a Si interface and comprise Elementary Procedures (EPs). In at least one embodiment, an EP is a unit of interaction between RAN 2616 and CN 2628. In at least one embodiment, S1 -AP layer services may comprise two groups: UE-associated services and non UE-associated services. In at least one embodiment, these services perform functions including, but not limited to: E-UTRAN Radio Access Bearer (E-RAB) management, UE capability indication, mobility, NAS signaling transport, RAN Information Management (RIM), and configuration transfer.

In at least one embodiment, Stream Control Transmission Protocol (SCTP) layer (alternatively referred to as a stream control transmission protocol/internet protocol (SCTP/IP) layer) (SCTP layer 2820) may ensure reliable delivery of signaling messages between RAN 2616 and MME(s) 2628 based, in part, on an IP protocol, supported by an IP layer 2818. In at least one embodiment, L2 layer 2816 and an L1 layer 2814 may refer to communication links (e.g., wired or wireless) used by a RAN node and MME to exchange information.

In at least one embodiment, RAN 2616 and MME(s) 2628 may utilize an S1 -MME interface to exchange control plane data via a protocol stack comprising a L1 layer 2814, L2 layer 2816, IP layer 2818, SCTP layer 2820, and Si -AP layer 2822.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

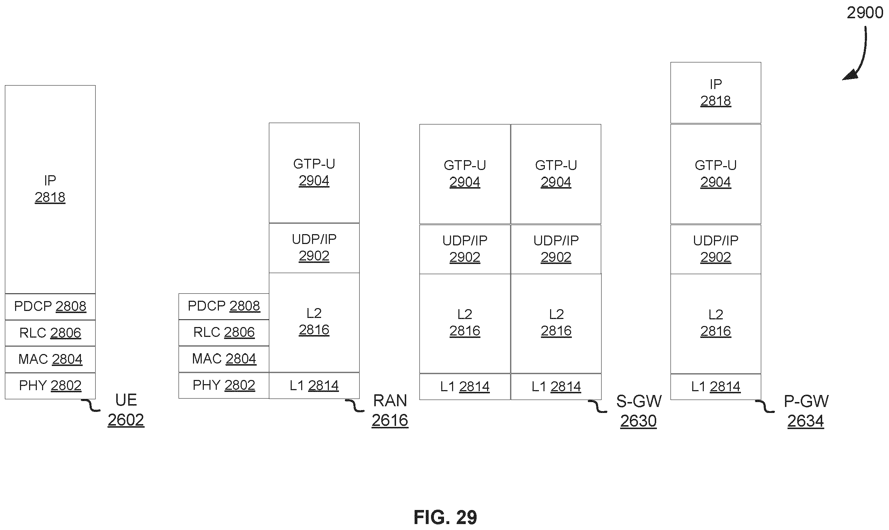

FIG. 29 is an illustration of a user plane protocol stack in accordance with at least one embodiment. In at least one embodiment, a user plane 2900 is shown as a communications protocol stack between a UE 2602, RAN 2616, S-GW 2630, and P-GW 2634. In at least one embodiment, user plane 2900 may utilize a same protocol layers as control plane 2800. In at least one embodiment, for example, UE 2602 and RAN 2616 may utilize a Uu interface (e.g., an LTE-Uu interface) to exchange user plane data via a protocol stack comprising PHY layer 2802, MAC layer 2804, RLC layer 2806, PDCP layer 2808.

In at least one embodiment, General Packet Radio Service (GPRS) Tunneling Protocol for a user plane (GTP-U) layer (GTP-U layer 2904) may be used for carrying user data within a GPRS core network and between a radio access network and a core network. In at least one embodiment, user data transported can be packets in any of IPv4, IPv6, or PPP formats, for example. In at least one embodiment, UDP and IP security (UDP/IP) layer (UDP/IP layer 2902) may provide checksums for data integrity, port numbers for addressing different functions at a source and destination, and encryption and authentication on selected data flows. In at least one embodiment, RAN 2616 and S-GW 2630 may utilize an S1 -U interface to exchange user plane data via a protocol stack comprising L1 layer 2814, L2 layer 2816, UDP/IP layer 2902, and GTP-U layer 2904. In at least one embodiment, S-GW 2630 and P-GW 2634 may utilize an S5/S8a interface to exchange user plane data via a protocol stack comprising L1 layer 2814, L2 layer 2816, UDP/IP layer 2902, and GTP-U layer 2904. In at least one embodiment, as discussed above with respect to FIG. 28, NAS protocols support a mobility of UE 2602 and session management procedures to establish and maintain IP connectivity between UE 2602 and P-GW 2634.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

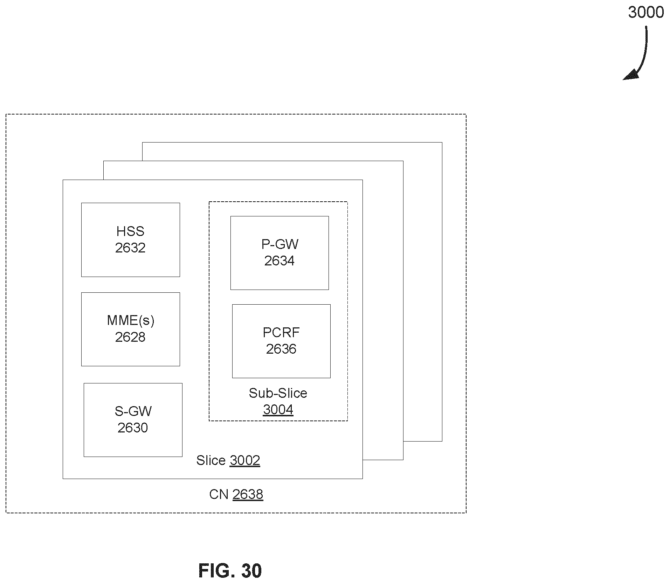

FIG. 30 illustrates components 3000 of a core network in accordance with at least one embodiment. In at least one embodiment, components of CN 2638 may be implemented in one physical node or separate physical nodes including components to read and execute instructions from a machine-readable or computer-readable medium (e.g., a non-transitory machine-readable storage medium). In at least one embodiment, Network Functions Virtualization (NFV) is utilized to virtualize any or all of above described network node functions via executable instructions stored in one or more computer readable storage mediums (described in further detail below). In at least one embodiment, a logical instantiation of CN 2638 may be referred to as a network slice 3002 (e.g., network slice 3002 is shown to include HSS 2632, MME(s) 2628, and S-GW 2630). In at least one embodiment, a logical instantiation of a portion of CN 2638 may be referred to as a network sub-slice 3004 (e.g., network sub-slice 3004 is shown to include P-GW 2634 and PCRF 2636).

In at least one embodiment, NFV architectures and infrastructures may be used to virtualize one or more network functions, alternatively performed by proprietary hardware, onto physical resources comprising a combination of industry-standard server hardware, storage hardware, or switches. In at least one embodiment, NFV systems can be used to execute virtual or reconfigurable implementations of one or more EPC components/functions.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

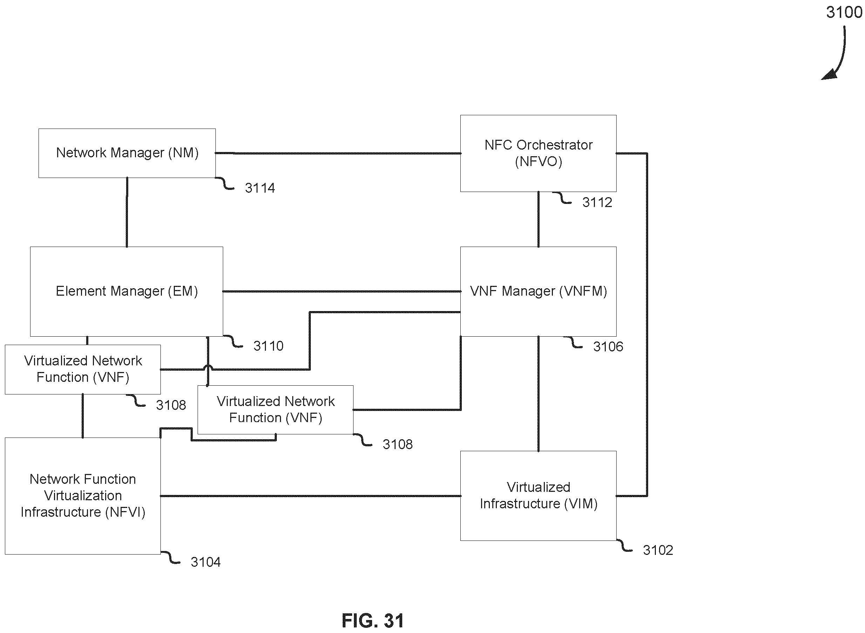

FIG. 31 is a block diagram illustrating components, according to at least one embodiment, of a system 3100 to support network function virtualization (NFV). In at least one embodiment, system 3100 is illustrated as including a virtualized infrastructure manager (shown as VIM 3102), a network function virtualization infrastructure (shown as NFVI 3104), a VNF manager (shown as VNFM 3106), virtualized network functions (shown as VNF 3108), an element manager (shown as EM 3110), an NFV Orchestrator (shown as NFVO 3112), and a network manager (shown as NM 3114).

In at least one embodiment, VIM 3102 manages resources of NFVI 3104. In at least one embodiment, NFVI 3104 can include physical or virtual resources and applications (including hypervisors) used to execute system 3100. In at least one embodiment, VIM 3102 may manage a life cycle of virtual resources with NFVI 3104 (e.g., creation, maintenance, and tear down of virtual machines (VMs) associated with one or more physical resources), track VM instances, track performance, fault and security of VM instances and associated physical resources, and expose VM instances and associated physical resources to other management systems.

In at least one embodiment, VNFM 3106 may manage VNF 3108. In at least one embodiment, VNF 3108 may be used to execute EPC components/ functions. In at least one embodiment, VNFM 3106 may manage a life cycle of VNF 3108 and track performance, fault and security of virtual aspects of VNF 3108. In at least one embodiment, EM 3110 may track performance, fault and security of functional aspects of VNF 3108. In at least one embodiment, tracking data from VNFM 3106 and EM 3110 may comprise, for example, performance measurement (PM) data used by VIM 3102 or NFVI 3104. In at least one embodiment, both VNFM 3106 and EM 3110 can scale up/down a quantity of VNFs of system 3100.

In at least one embodiment, NFVO 3112 may coordinate, authorize, release and engage resources of NFVI 3104 in order to provide a requested service (e.g., to execute an EPC function, component, or slice). In at least one embodiment, NM 3114 may provide a package of end-user functions with responsibility for a management of a network, which may include network elements with VNFs, non-virtualized network functions, or both (management of VNFs may occur via an EM 3110).

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

### Computer-Based Systems

The following figures set forth, without limitation, exemplary computer-based systems that can be used to implement at least one embodiment.

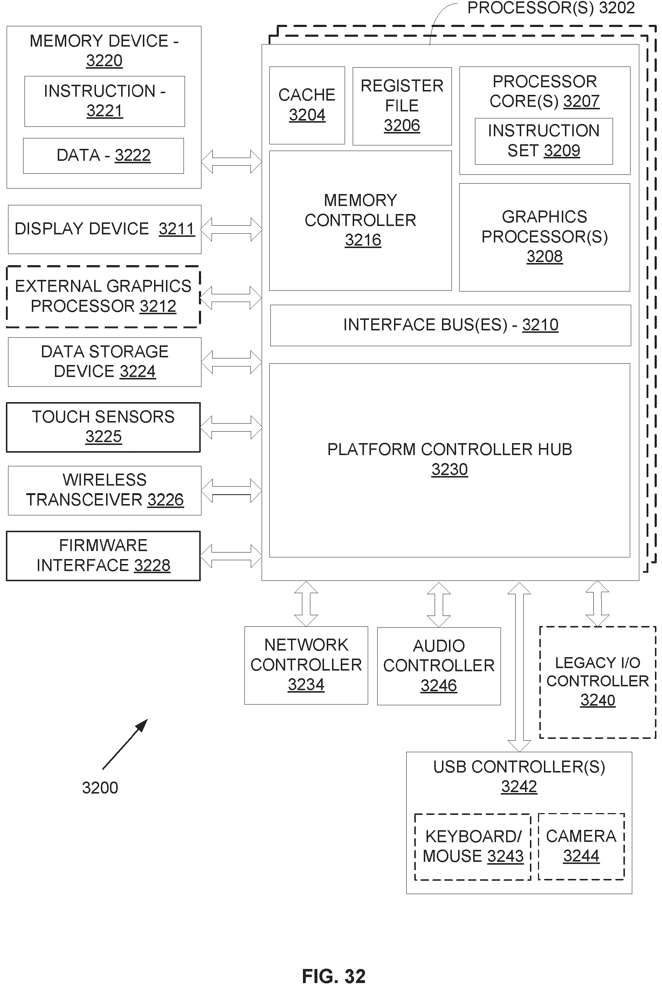

FIG. 32 illustrates a processing system 3200, in accordance with at least one embodiment. In at least one embodiment, processing system 3200 includes one or more processors 3202 and one or more graphics processors 3208, and may be a single processor desktop system, a multiprocessor workstation system, or a server system having a large number of processors 3202 or processor cores 3207. In at least one embodiment, processing system 3200 is a processing platform incorporated within a system-on-a-chip ("SoC") integrated circuit for use in mobile, handheld, or embedded devices.

In at least one embodiment, processing system 3200 can include, or be incorporated within a server-based gaming platform, a game console, a media console, a mobile gaming console, a handheld game console, or an online game console. In at least one embodiment, processing system 3200 is a mobile phone, smart phone, tablet computing device or mobile Internet device. In at least one embodiment, processing system 3200 can also include, couple with, or be integrated within a wearable device, such as a smart watch wearable device, smart eyewear device, augmented reality device, or virtual reality device. In at least one embodiment, processing system 3200 is a television or set top box device having one or more processors 3202 and a graphical interface generated by one or more graphics processors 3208.

In at least one embodiment, one or more processors 3202 each include one or more processor cores 3207 to process instructions which, when executed, perform operations for system and user software. In at least one embodiment, each of one or more processor cores 3207 is configured to process a specific instruction set 3209. In at least one embodiment, instruction set 3209 may facilitate Complex Instruction Set Computing ("CISC"), Reduced Instruction Set Computing ("RISC"), or computing via a Very Long Instruction Word ("VLIW"). In at least one embodiment, processor cores 3207 may each process a different instruction set 3209, which may include instructions to facilitate emulation of other instruction sets. In at least one embodiment, processor core 3207 may also include other processing devices, such as a digital signal processor ("DSP").

In at least one embodiment, processor 3202 includes cache memory ('cache") 3204. In at least one embodiment, processor 3202 can have a single internal cache or multiple levels of internal cache. In at least one embodiment, cache memory is shared among various components of processor 3202. In at least one embodiment, processor 3202 also uses an external cache (e.g., a Level 3 ("L3") cache or Last Level Cache ("LLC")) (not shown), which may be shared among processor cores 3207 using known cache coherency techniques. In at least one embodiment, register file 3206 is additionally included in processor 3202 which may include different types of registers for storing different types of data (e.g., integer registers, floating point registers, status registers, and an instruction pointer register). In at least one embodiment, register file 3206 may include general-purpose registers or other registers.

In at least one embodiment, one or more processor(s) 3202 are coupled with one or more interface bus(es) 3210 to transmit communication signals such as address, data, or control signals between processor 3202 and other components in processing system 3200. In at least one embodiment interface bus 3210, in one embodiment, can be a processor bus, such as a version of a Direct Media Interface ("DMI") bus. In at least one embodiment, interface bus 3210 is not limited to a DMI bus, and may include one or more Peripheral Component Interconnect buses (e.g., "PCI," PCI Express ("PCIe")), memory buses, or other types of interface buses. In at least one embodiment processor(s) 3202 include an integrated memory controller 3216 and a platform controller hub 3230. In at least one embodiment, memory controller 3216 facilitates communication between a memory device and other components of processing system 3200, while platform controller hub ("PCH") 3230 provides connections to Input/Output ("I/O") devices via a local I/O bus.

In at least one embodiment, memory device 3220 can be a dynamic random access memory ("DRAM") device, a static random access memory ("SRAM") device, flash memory device, phase-change memory device, or some other memory device having suitable performance to serve as processor memory. In at least one embodiment memory device 3220 can operate as system memory for processing system 3200, to store data 3222 and instructions 3221 for use when one or more processors 3202 executes an application or process. In at least one embodiment, memory controller 3216 also couples with an optional external graphics processor 3212, which may communicate with one or more graphics processors 3208 in processors 3202 to perform graphics and media operations. In at least one embodiment, a display device 3211 can connect to processor(s) 3202. In at least one embodiment display device 3211 can include one or more of an internal display device, as in a mobile electronic device or a laptop device or an external display device attached via a display interface (e.g., DisplayPort, etc.). In at least one embodiment, display device 3211 can include a head mounted display ("HMD") such as a stereoscopic display device for use in virtual reality ("VR") applications or augmented reality ("AR") applications.

In at least one embodiment, platform controller hub 3230 enables peripherals to connect to memory device 3220 and processor 3202 via a high-speed I/O bus. In at least one embodiment, I/O peripherals include, but are not limited to, an audio controller 3246, a network controller 3234, a firmware interface 3228, a wireless transceiver 3226, touch sensors 3225, a data storage device 3224 (e.g., hard disk drive, flash memory, etc.). In at least one embodiment, data storage device 3224 can connect via a storage interface (e.g., SATA) or via a peripheral bus, such as PCI, or PCIe. In at least one embodiment, touch sensors 3225 can include touch screen sensors, pressure sensors, or fingerprint sensors. In at least one embodiment, wireless transceiver 3226 can be a Wi-Fi transceiver, a Bluetooth transceiver, or a mobile network transceiver such as a 3G, 4G, or Long Term Evolution ("LTE") transceiver. In at least one embodiment, firmware interface 3228 enables communication with system firmware, and can be, for example, a unified extensible firmware interface ("UEFI"). In at least one embodiment, network controller 3234 can enable a network connection to a wired network. In at least one embodiment, a high-performance network controller (not shown) couples with interface bus 3210. In at least one embodiment, audio controller 3246 is a multi-channel high definition audio controller. In at least one embodiment, processing system 3200 includes an optional legacy I/O controller 3240 for coupling legacy (e.g., Personal System 2 ("PS/2")) devices to processing system 3200. In at least one embodiment, platform controller hub 3230 can also connect to one or more Universal Serial Bus ("USB") controllers 3242 connect input devices, such as keyboard and mouse 3243 combinations, a camera 3244, or other USB input devices.

In at least one embodiment, an instance of memory controller 3216 and platform controller hub 3230 may be integrated into a discreet external graphics processor, such as external graphics processor 3212. In at least one embodiment, platform controller hub 3230 and/or memory controller 3216 may be external to one or more processor(s) 3202. For example, in at least one embodiment, processing system 3200 can include an external memory controller 3216 and platform controller hub 3230, which may be configured as a memory controller hub and peripheral controller hub within a system chipset that is in communication with processor(s) 3202.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_ first_ctaid to request starting thread dimensions in full for indicated threads to be performed after prior cancellation.

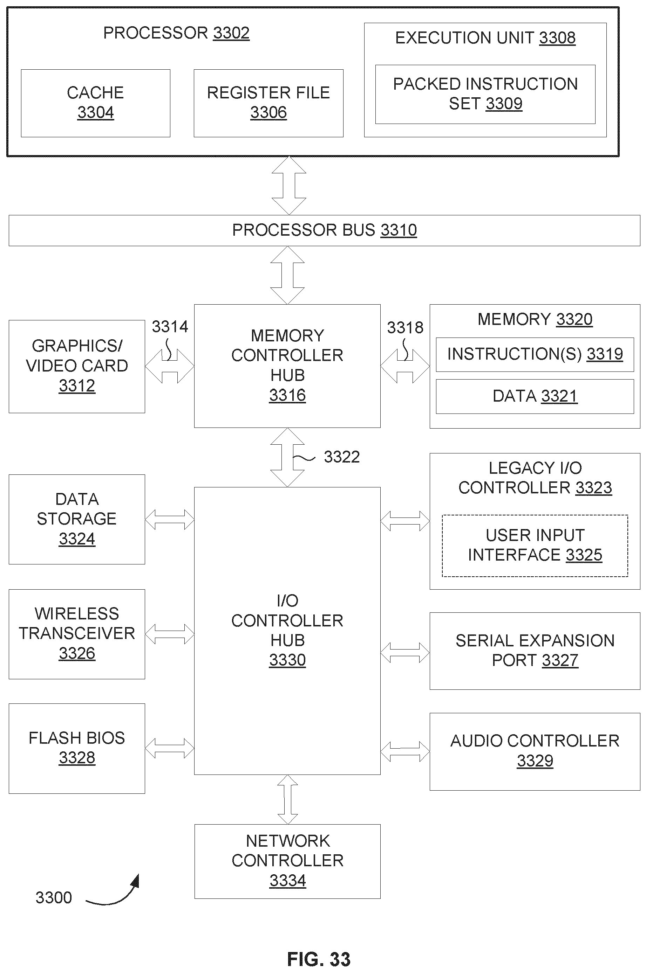

FIG. 33 illustrates a computer system 3300, in accordance with at least one embodiment. In at least one embodiment, computer system 3300 may be a system with interconnected devices and components, an SOC, or some combination. In at least on embodiment, computer system 3300 is formed with a processor 3302 that may include execution units to execute an instruction. In at least one embodiment, computer system 3300 may include, without limitation, a component, such as processor 3302 to employ execution units including logic to perform algorithms for processing data. In at least one embodiment, computer system 3300 may include processors, such as PENTIUM^{®} Processor family, XeonTM, Itanium^{®}, XScaleTM and/or StrongARMTM, Intel^{®} Core^{™}, or Intel^{®} Nervana^{™} microprocessors available from Intel Corporation of Santa Clara, California, although other systems (including PCs having other microprocessors, engineering workstations, set-top boxes and like) may also be used. In at least one embodiment, computer system 3300 may execute a version of WINDOWS' operating system available from Microsoft Corporation of Redmond, Wash., although other operating systems (UNIX and Linux for example), embedded software, and/or graphical user interfaces, may also be used.

In at least one embodiment, computer system 3300 may be used in other devices such as handheld devices and embedded applications. Some examples of handheld devices include cellular phones, Internet Protocol devices, digital cameras, personal digital assistants ("PDAs"), and handheld PCs. In at least one embodiment, embedded applications may include a microcontroller, a digital signal processor (DSP), an SoC, network computers ("NetPCs"), set-top boxes, network hubs, wide area network ("WAN") switches, or any other system that may perform one or more instructions.

In at least one embodiment, computer system 3300 may include, without limitation, processor 3302 that may include, without limitation, one or more execution units 3308 that may be configured to execute a Compute Unified Device Architecture ("CUDA") (CUDA^{®} is developed by NVIDIA Corporation of Santa Clara, CA) program. In at least one embodiment, a CUDA program is at least a portion of a software application written in a CUDA programming language. In at least one embodiment, computer system 3300 is a single processor desktop or server system. In at least one embodiment, computer system 3300 may be a multiprocessor system. In at least one embodiment, processor 3302 may include, without limitation, a CISC microprocessor, a RISC microprocessor, a VLIW microprocessor, a processor implementing a combination of instruction sets, or any other processor device, such as a digital signal processor, for example. In at least one embodiment, processor 3302 may be coupled to a processor bus 3310 that may transmit data signals between processor 3302 and other components in computer system 3300.

In at least one embodiment, processor 3302 may include, without limitation, a Level 1 ("L1") internal cache memory ("cache") 3304. In at least one embodiment, processor 3302 may have a single internal cache or multiple levels of internal cache. In at least one embodiment, cache memory may reside external to processor 3302. In at least one embodiment, processor 3302 may also include a combination of both internal and external caches. In at least one embodiment, a register file 3306 may store different types of data in various registers including, without limitation, integer registers, floating point registers, status registers, and instruction pointer register.

In at least one embodiment, execution unit 3308, including, without limitation, logic to perform integer and floating point operations, also resides in processor 3302. Processor 3302 may also include a microcode ("ucode") read only memory ("ROM") that stores microcode for certain macro instructions. In at least one embodiment, execution unit 3308 may include logic to handle a packed instruction set 3309. In at least one embodiment, by including packed instruction set 3309 in an instruction set of a general-purpose processor 3302, along with associated circuitry to execute instructions, operations used by many multimedia applications may be performed using packed data in a general-purpose processor 3302. In at least one embodiment, many multimedia applications may be accelerated and executed more efficiently by using full width of a processor's data bus for performing operations on packed data, which may eliminate a need to transfer smaller units of data across a processor's data bus to perform one or more operations one data element at a time.

In at least one embodiment, execution unit 3308 may also be used in microcontrollers, embedded processors, graphics devices, DSPs, and other types of logic circuits. In at least one embodiment, computer system 3300 may include, without limitation, a memory 3320. In at least one embodiment, memory 3320 may be implemented as a DRAM device, an SRAM device, flash memory device, or other memory device. Memory 3320 may store instruction(s) 3319 and/or data 3321 represented by data signals that may be executed by processor 3302.

In at least one embodiment, a system logic chip may be coupled to processor bus 3310 and memory 3320. In at least one embodiment, a system logic chip may include, without limitation, a memory controller hub ("MCH") 3316, and processor 3302 may communicate with MCH 3316 via processor bus 3310. In at least one embodiment, MCH 3316 may provide a high bandwidth memory path 3318 to memory 3320 for instruction and data storage and for storage of graphics commands, data and textures. In at least one embodiment, MCH 3316 may direct data signals between processor 3302, memory 3320, and other components in computer system 3300 and to bridge data signals between processor bus 3310, memory 3320, and a system I/O 3322. In at least one embodiment, system logic chip may provide a graphics port for coupling to a graphics controller. In at least one embodiment, MCH 3316 may be coupled to memory 3320 through high bandwidth memory path 3318 and graphics/video card 3312 may be coupled to MCH 3316 through an Accelerated Graphics Port ("AGP") interconnect 3314.

In at least one embodiment, computer system 3300 may use system I/O 3322 that is a proprietary hub interface bus to couple MCH 3316 to I/O controller hub ("ICH") 3330. In at least one embodiment, ICH 3330 may provide direct connections to some I/O devices via a local I/O bus. In at least one embodiment, local I/O bus may include, without limitation, a high-speed I/O bus for connecting peripherals to memory 3320, a chipset, and processor 3302. Examples may include, without limitation, an audio controller 3329, a firmware hub ("flash BIOS") 3328, a wireless transceiver 3326, a data storage 3324, a legacy I/O controller 3323 containing a user input interface 3325 and a keyboard interface, a serial expansion port 3327, such as a USB, and a network controller 3334. Data storage 3324 may comprise a hard disk drive, a floppy disk drive, a CD-ROM device, a flash memory device, or other mass storage device.

In at least one embodiment, FIG. 33 illustrates a system, which includes interconnected hardware devices or "chips." In at least one embodiment, FIG. 33 may illustrate an exemplary SoC. In at least one embodiment, devices illustrated in FIG. 33 may be interconnected with proprietary interconnects, standardized interconnects (e.g., PCIe), or some combination thereof. In at least one embodiment, one or more components of system 3300 are interconnected using compute express link ("CXL") interconnects.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

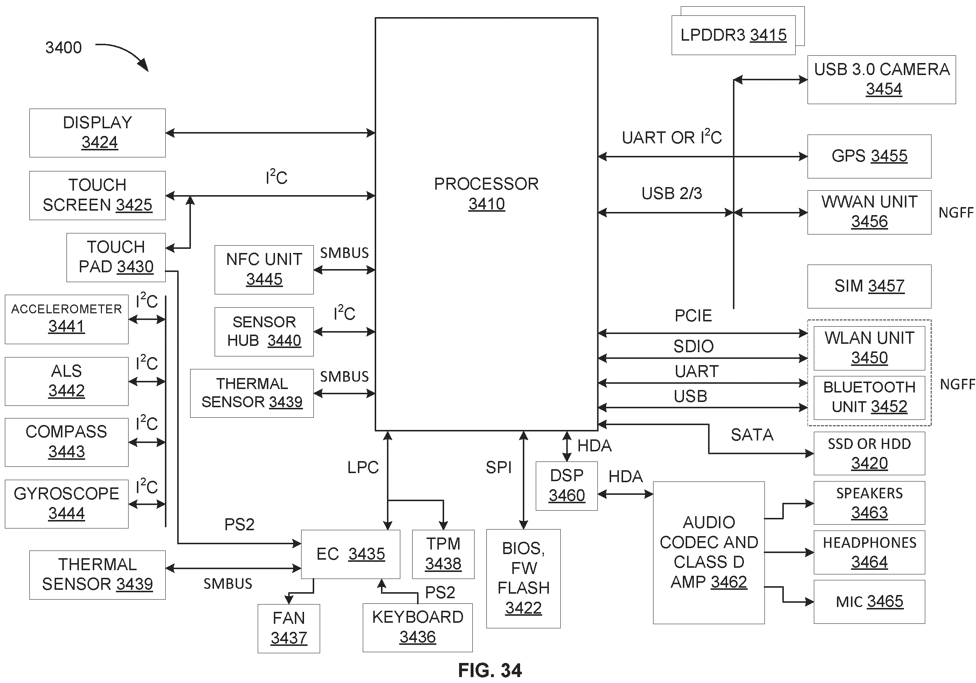

FIG. 34 illustrates a system 3400, in accordance with at least one embodiment. In at least one embodiment, system 3400 is an electronic device that utilizes a processor 3410. In at least one embodiment, system 3400 may be, for example and without limitation, a notebook, a tower server, a rack server, a blade server, a laptop, a desktop, a tablet, a mobile device, a phone, an embedded computer, or any other suitable electronic device.

In at least one embodiment, system 3400 may include, without limitation, processor 3410 communicatively coupled to any suitable number or kind of components, peripherals, modules, or devices. In at least one embodiment, processor 3410 is coupled using a bus or interface, such as an I²C bus, a System Management Bus ("SMBus"), a Low Pin Count ("LPC") bus, a Serial Peripheral Interface ("SPI"), a High Definition Audio ("HDA") bus, a Serial Advance Technology Attachment ("SATA") bus, a USB (versions 1, 2, 3), or a Universal Asynchronous Receiver/Transmitter ("UART") bus. In at least one embodiment, FIG. 34 illustrates a system which includes interconnected hardware devices or "chips." In at least one embodiment, FIG. 34 may illustrate an exemplary SoC. In at least one embodiment, devices illustrated in FIG. 34 may be interconnected with proprietary interconnects, standardized interconnects (e.g., PCIe) or some combination thereof. In at least one embodiment, one or more components of FIG. 34 are interconnected using CXL interconnects.

In at least one embodiment, FIG 34 may include a display 3424, a touch screen 3425, a touch pad 3430, a Near Field Communications unit ("NFC") 3445, a sensor hub 3440, a thermal sensor 3446, an Express Chipset ("EC") 3435, a Trusted Platform Module ("TPM") 3438, BIOS/firmware/flash memory ("BIOS, FW Flash") 3422, a DSP 3460, a Solid State Disk ("SSD") or Hard Disk Drive ("HDD") 3420, a wireless local area network unit ("WLAN") 3450, a Bluetooth unit 3452, a Wireless Wide Area Network unit ("WWAN") 3456, a Global Positioning System ("GPS") 3455, a camera ("USB 3.0 camera") 3454 such as a USB 3.0 camera, or a Low Power Double Data Rate ("LPDDR") memory unit ("LPDDR3") 3415 implemented in, for example, LPDDR3 standard. These components may each be implemented in any suitable manner.

In at least one embodiment, other components may be communicatively coupled to processor 3410 through components discussed above. In at least one embodiment, an accelerometer 3441, an Ambient Light Sensor ("ALS") 3442, a compass 3443, and a gyroscope 3444 may be communicatively coupled to sensor hub 3440. In at least one embodiment, a thermal sensor 3439, a fan 3437, a keyboard 3446, and a touch pad 3430 may be communicatively coupled to EC 3435. In at least one embodiment, a speaker 3463, a headphones 3464, and a microphone ("mic") 3465 may be communicatively coupled to an audio unit ("audio codec and class d amp") 3464, which may in turn be communicatively coupled to DSP 3460. In at least one embodiment, audio unit 3464 may include, for example and without limitation, an audio coder/decoder ("codec") and a class D amplifier. In at least one embodiment, a SIM card ("SIM") 3457 may be communicatively coupled to WWAN unit 3456. In at least one embodiment, components such as WLAN unit 3450 and Bluetooth unit 3452, as well as WWAN unit 3456 may be implemented in a Next Generation Form Factor ("NGFF").

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

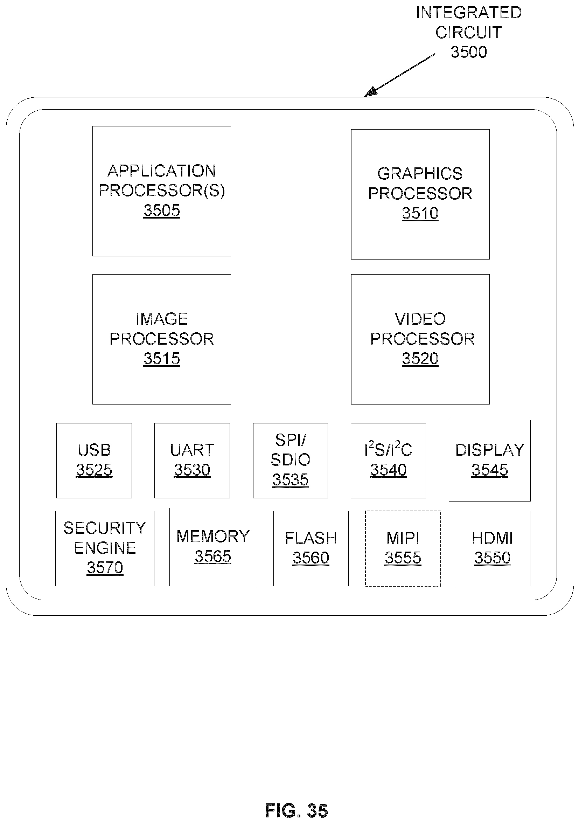

FIG. 35 illustrates an exemplary integrated circuit 3500, in accordance with at least one embodiment. In at least one embodiment, exemplary integrated circuit 3500 is an SoC that may be fabricated using one or more IP cores. In at least one embodiment, integrated circuit 3500 includes one or more application processor(s) 3505 (e.g., CPUs), at least one graphics processor 3510, and may additionally include an image processor 3515 and/or a video processor 3520, any of which may be a modular IP core. In at least one embodiment, integrated circuit 3500 includes peripheral or bus logic including a USB controller 3525, a UART controller 3530, an SPI/SDIO controller 3535, and an I²S/I²C controller 3540. In at least one embodiment, integrated circuit 3500 can include a display device 3545 coupled to one or more of a high-definition multimedia interface ("HDMI") controller 3550 and a mobile industry processor interface ("MIPI") display interface 3555. In at least one embodiment, storage may be provided by a flash memory subsystem 3560 including flash memory and a flash memory controller. In at least one embodiment, a memory interface may be provided via a memory controller 3565 for access to SDRAM or SRAM memory devices. In at least one embodiment, some integrated circuits additionally include an embedded security engine 3570.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

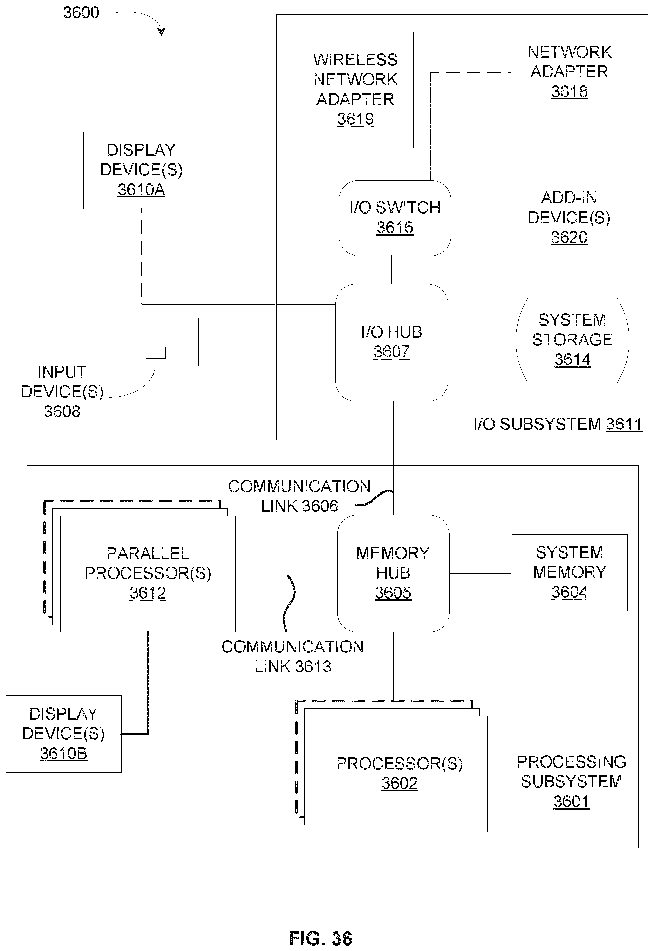

FIG. 36 illustrates a computing system 3600, according to at least one embodiment; In at least one embodiment, computing system 3600 includes a processing subsystem 3601 having one or more processor(s) 3602 and a system memory 3604 communicating via an interconnection path that may include a memory hub 3605. In at least one embodiment, memory hub 3605 may be a separate component within a chipset component or may be integrated within one or more processor(s) 3602. In at least one embodiment, memory hub 3605 couples with an I/O subsystem 3611 via a communication link 3606. In at least one embodiment, I/O subsystem 3611 includes an I/O hub 3607 that can enable computing system 3600 to receive input from one or more input device(s) 3608. In at least one embodiment, I/O hub 3607 can enable a display controller, which may be included in one or more processor(s) 3602, to provide outputs to one or more display device(s) 3610A. In at least one embodiment, one or more display device(s) 3610A coupled with I/O hub 3607 can include a local, internal, or embedded display device.

In at least one embodiment, processing subsystem 3601 includes one or more parallel processor(s) 3612 coupled to memory hub 3605 via a bus or other communication link 3613. In at least one embodiment, communication link 3613 may be one of any number of standards based communication link technologies or protocols, such as, but not limited to PCIe, or may be a vendor specific communications interface or communications fabric. In at least one embodiment, one or more parallel processor(s) 3612 form a computationally focused parallel or vector processing system that can include a large number of processing cores and/or processing clusters, such as a many integrated core processor. In at least one embodiment, one or more parallel processor(s) 3612 form a graphics processing subsystem that can output pixels to one of one or more display device(s) 3610A coupled via I/O Hub 3607. In at least one embodiment, one or more parallel processor(s) 3612 can also include a display controller and display interface (not shown) to enable a direct connection to one or more display device(s) 3610B.

In at least one embodiment, a system storage unit 3614 can connect to I/O hub 3607 to provide a storage mechanism for computing system 3600. In at least one embodiment, an I/O switch 3616 can be used to provide an interface mechanism to enable connections between I/O hub 3607 and other components, such as a network adapter 3618 and/or wireless network adapter 3619 that may be integrated into a platform, and various other devices that can be added via one or more add-in device(s) 3620. In at least one embodiment, network adapter 3618 can be an Ethernet adapter or another wired network adapter. In at least one embodiment, wireless network adapter 3619 can include one or more of a Wi-Fi, Bluetooth, NFC, or other network device that includes one or more wireless radios.

In at least one embodiment, computing system 3600 can include other components not explicitly shown, including USB or other port connections, optical storage drives, video capture devices, and/or variations thereof, that may also be connected to I/O hub 3607. In at least one embodiment, communication paths interconnecting various components in FIG. 36 may be implemented using any suitable protocols, such as PCI based protocols (e.g., PCIe), or other bus or point-to-point communication interfaces and/or protocol(s), such as NVLink high-speed interconnect, or interconnect protocols.

In at least one embodiment, one or more parallel processor(s) 3612 incorporate circuitry optimized for graphics and video processing, including, for example, video output circuitry, and constitutes a graphics processing unit ("GPU"). In at least one embodiment, one or more parallel processor(s) 3612 incorporate circuitry optimized for general purpose processing. In at least embodiment, components of computing system 3600 may be integrated with one or more other system elements on a single integrated circuit. For example, in at least one embodiment, one or more parallel processor(s) 3612, memory hub 3605, processor(s) 3602, and I/O hub 3607 can be integrated into a SoC integrated circuit. In at least one embodiment, components of computing system 3600 can be integrated into a single package to form a system in package ("SIP") configuration. In at least one embodiment, at least a portion of components of computing system 3600 can be integrated into a multi-chip module ("MCM"), which can be interconnected with other multi-chip modules into a modular computing system. In at least one embodiment, I/O subsystem 3611 and display devices 3610B are omitted from computing system 3600.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get first ctaid to request starting thread dimensions in full for indicated threads to be performed after prior cancellation.

### Processing Systems

The following figures set forth, without limitation, exemplary processing systems that can be used to implement at least one embodiment.

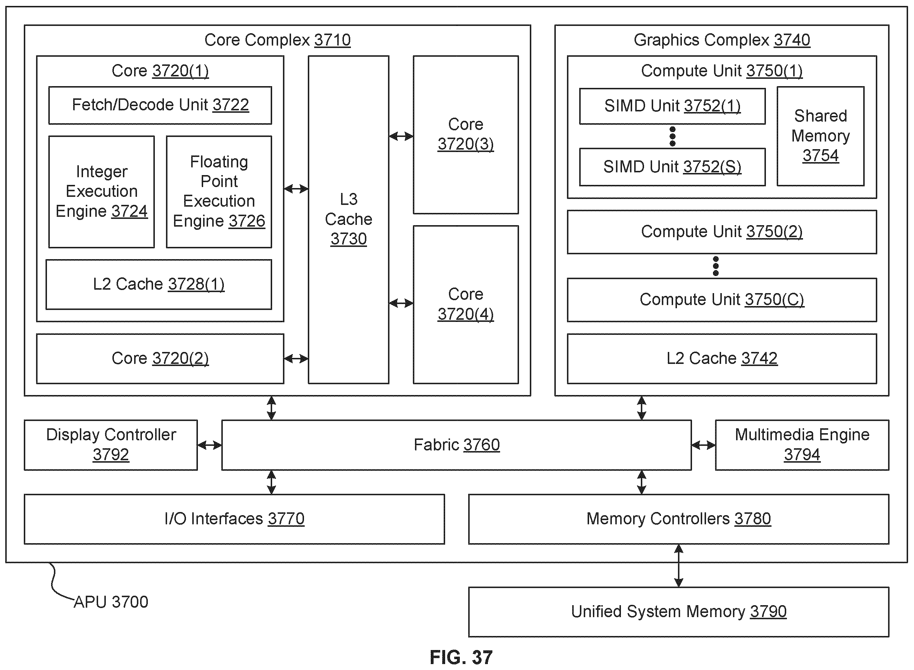

FIG. 37 illustrates an accelerated processing unit ("APU") 3700, in accordance with at least one embodiment. In at least one embodiment, APU 3700 is developed by AMD Corporation of Santa Clara, CA. In at least one embodiment, APU 3700 can be configured to execute an application program, such as a CUDA program. In at least one embodiment, APU 3700 includes, without limitation, a core complex 3710, a graphics complex 3740, fabric 3760, I/O interfaces 3770, memory controllers 3780, a display controller 3792, and a multimedia engine 3794. In at least one embodiment, APU 3700 may include, without limitation, any number of core complexes 3710, any number of graphics complexes 3740, any number of display controllers 3792, and any number of multimedia engines 3794 in any combination. For explanatory purposes, multiple instances of like objects are denoted herein with reference numbers identifying an object and parenthetical numbers identifying an instance where needed.

In at least one embodiment, core complex 3710 is a CPU, graphics complex 3740 is a GPU, and APU 3700 is a processing unit that integrates, without limitation, 3710 and 3740 onto a single chip. In at least one embodiment, some tasks may be assigned to core complex 3710 and other tasks may be assigned to graphics complex 3740. In at least one embodiment, core complex 3710 is configured to execute main control software associated with APU 3700, such as an operating system. In at least one embodiment, core complex 3710 is a master processor of APU 3700, controlling and coordinating operations of other processors. In at least one embodiment, core complex 3710 issues commands that control an operation of graphics complex 3740. In at least one embodiment, core complex 3710 can be configured to execute host executable code derived from CUDA source code, and graphics complex 3740 can be configured to execute device executable code derived from CUDA source code.

In at least one embodiment, core complex 3710 includes, without limitation, cores 3720(1)-3720(4) and an L3 cache 3730. In at least one embodiment, core complex 3710 may include, without limitation, any number of cores 3720 and any number and type of caches in any combination. In at least one embodiment, cores 3720 are configured to execute instructions of a particular instruction set architecture ("ISA"). In at least one embodiment, each core 3720 is a CPU core.

In at least one embodiment, each core 3720 includes, without limitation, a fetch/decode unit 3722, an integer execution engine 3724, a floating point execution engine 3726, and an L2 cache 3728. In at least one embodiment, fetch/decode unit 3722 fetches instructions, decodes such instructions, generates micro-operations, and dispatches separate micro-instructions to integer execution engine 3724 and floating point execution engine 3726. In at least one embodiment, fetch/decode unit 3722 can concurrently dispatch one micro-instruction to integer execution engine 3724 and another micro-instruction to floating point execution engine 3726. In at least one embodiment, integer execution engine 3724 executes, without limitation, integer and memory operations. In at least one embodiment, floating point engine 3726 executes, without limitation, floating point and vector operations. In at least one embodiment, fetch-decode unit 3722 dispatches micro-instructions to a single execution engine that replaces both integer execution engine 3724 and floating point execution engine 3726.

In at least one embodiment, each core 3720(i), where i is an integer representing a particular instance of core 3720, may access L2 cache 3728(i) included in core 3720(i). In at least one embodiment, each core 3720 included in core complex 3710(j), where j is an integer representing a particular instance of core complex 3710, is connected to other cores 3720 included in core complex 3710(j) via L3 cache 3730(j) included in core complex 3710(j). In at least one embodiment, cores 3720 included in core complex 3710(j), where j is an integer representing a particular instance of core complex 3710, can access all of L3 cache 3730(j) included in core complex 3710(j). In at least one embodiment, L3 cache 3730 may include, without limitation, any number of slices.

In at least one embodiment, graphics complex 3740 can be configured to perform compute operations in a highly-parallel fashion. In at least one embodiment, graphics complex 3740 is configured to execute graphics pipeline operations such as draw commands, pixel operations, geometric computations, and other operations associated with rendering an image to a display. In at least one embodiment, graphics complex 3740 is configured to execute operations unrelated to graphics. In at least one embodiment, graphics complex 3740 is configured to execute both operations related to graphics and operations unrelated to graphics.

In at least one embodiment, graphics complex 3740 includes, without limitation, any number of compute units 3750 and an L2 cache 3742. In at least one embodiment, compute units 3750 share L2 cache 3742. In at least one embodiment, L2 cache 3742 is partitioned. In at least one embodiment, graphics complex 3740 includes, without limitation, any number of compute units 3750 and any number (including zero) and type of caches. In at least one embodiment, graphics complex 3740 includes, without limitation, any amount of dedicated graphics hardware.

In at least one embodiment, each compute unit 3750 includes, without limitation, any number of SIMD units 3752 and a shared memory 3754. In at least one embodiment, each SIMD unit 3752 implements a SIMD architecture and is configured to perform operations in parallel. In at least one embodiment, each compute unit 3750 may execute any number of thread blocks, but each thread block executes on a single compute unit 3750. In at least one embodiment, a thread block includes, without limitation, any number of threads of execution. In at least one embodiment, a workgroup is a thread block. In at least one embodiment, each SIMD unit 3752 executes a different warp. In at least one embodiment, a warp is a group of threads (e.g., 16 threads), where each thread in a warp belongs to a single thread block and is configured to process a different set of data based on a single set of instructions. In at least one embodiment, predication can be used to disable one or more threads in a warp. In at least one embodiment, a lane is a thread. In at least one embodiment, a work item is a thread. In at least one embodiment, a wavefront is a warp. In at least one embodiment, different wavefronts in a thread block may synchronize together and communicate via shared memory 3754.

In at least one embodiment, fabric 3760 is a system interconnect that facilitates data and control transmissions across core complex 3710, graphics complex 3740, I/O interfaces 3770, memory controllers 3780, display controller 3792, and multimedia engine 3794. In at least one embodiment, APU 3700 may include, without limitation, any amount and type of system interconnect in addition to or instead of fabric 3760 that facilitates data and control transmissions across any number and type of directly or indirectly linked components that may be internal or external to APU 3700. In at least one embodiment, I/O interfaces 3770 are representative of any number and type of I/O interfaces (e.g., PCI, PCI-Extended ("PCI-X"), PCIe, gigabit Ethernet ("GBE"), USB, etc.). In at least one embodiment, various types of peripheral devices are coupled to I/O interfaces 3770 In at least one embodiment, peripheral devices that are coupled to I/O interfaces 3770 may include, without limitation, keyboards, mice, printers, scanners, joysticks or other types of game controllers, media recording devices, external storage devices, network interface cards, and so forth.

In at least one embodiment, display controller AMD92 displays images on one or more display device(s), such as a liquid crystal display ("LCD") device. In at least one embodiment, multimedia engine 3794 includes, without limitation, any amount and type of circuitry that is related to multimedia, such as a video decoder, a video encoder, an image signal processor, etc. In at least one embodiment, memory controllers 3780 facilitate data transfers between APU 3700 and a unified system memory 3790. In at least one embodiment, core complex 3710 and graphics complex 3740 share unified system memory 3790.

In at least one embodiment, APU 3700 implements a memory subsystem that includes, without limitation, any amount and type of memory controllers 3780 and memory devices (e.g., shared memory 3754) that may be dedicated to one component or shared among multiple components. In at least one embodiment, APU 3700 implements a cache subsystem that includes, without limitation, one or more cache memories (e.g., L2 caches 3828, L3 cache 3730, and L2 cache 3742) that may each be private to or shared between any number of components (e.g., cores 3720, core complex 3710, SIMD units 3752, compute units 3750, and graphics complex 3740).

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_ first_ctaid to request starting thread dimensions in full for indicated threads to be performed after prior cancellation.

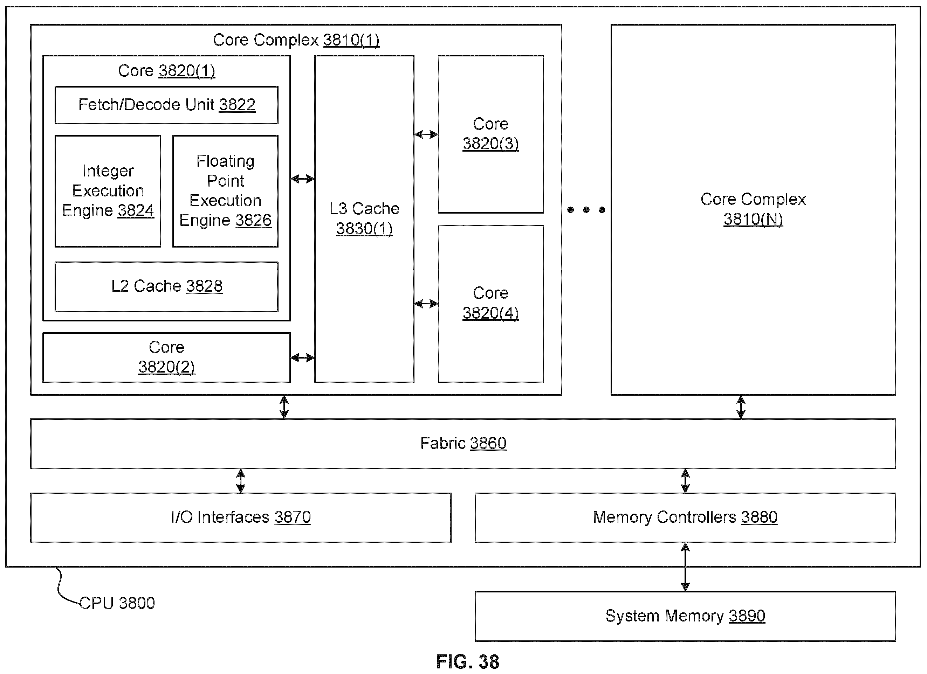

FIG. 38 illustrates a CPU 3800, in accordance with at least one embodiment. In at least one embodiment, CPU 3800 is developed by AMD Corporation of Santa Clara, CA. In at least one embodiment, CPU 3800 can be configured to execute an application program. In at least one embodiment, CPU 3800 is configured to execute main control software, such as an operating system. In at least one embodiment, CPU 3800 issues commands that control an operation of an external GPU (not shown). In at least one embodiment, CPU 3800 can be configured to execute host executable code derived from CUDA source code, and an external GPU can be configured to execute device executable code derived from such CUDA source code. In at least one embodiment, CPU 3800 includes, without limitation, any number of core complexes 3810, fabric 3860, I/O interfaces 3870, and memory controllers 3880.

In at least one embodiment, core complex 3810 includes, without limitation, cores 3820(1)-3820(4) and an L3 cache 3830. In at least one embodiment, core complex 3810 may include, without limitation, any number of cores 3820 and any number and type of caches in any combination. In at least one embodiment, cores 3820 are configured to execute instructions of a particular ISA. In at least one embodiment, each core 3820 is a CPU core.

In at least one embodiment, each core 3820 includes, without limitation, a fetch/decode unit 3822, an integer execution engine 3824, a floating point execution engine 3826, and an L2 cache 3828. In at least one embodiment, fetch/decode unit 3822 fetches instructions, decodes such instructions, generates micro-operations, and dispatches separate micro-instructions to integer execution engine 3824 and floating point execution engine 3826. In at least one embodiment, fetch/decode unit 3822 can concurrently dispatch one micro-instruction to integer execution engine 3824 and another micro-instruction to floating point execution engine 3826. In at least one embodiment, integer execution engine 3824 executes, without limitation, integer and memory operations. In at least one embodiment, floating point engine 3826 executes, without limitation, floating point and vector operations. In at least one embodiment, fetch-decode unit 3822 dispatches micro-instructions to a single execution engine that replaces both integer execution engine 3824 and floating point execution engine 3826.

In at least one embodiment, each core 3820(i), where i is an integer representing a particular instance of core 3820, may access L2 cache 3828(i) included in core 3820(i). In at least one embodiment, each core 3820 included in core complex 3810(j), where j is an integer representing a particular instance of core complex 3810, is connected to other cores 3820 in core complex 3810(j) via L3 cache 3830(j) included in core complex 3810(j). In at least one embodiment, cores 3820 included in core complex 3810(j), where j is an integer representing a particular instance of core complex 3810, can access all of L3 cache 3830(j) included in core complex 3810(j). In at least one embodiment, L3 cache 3830 may include, without limitation, any number of slices.

In at least one embodiment, fabric 3860 is a system interconnect that facilitates data and control transmissions across core complexes 3810(1)-3810(N) (where N is an integer greater than zero), I/O interfaces 3870, and memory controllers 3880. In at least one embodiment, CPU 3800 may include, without limitation, any amount and type of system interconnect in addition to or instead of fabric 3860 that facilitates data and control transmissions across any number and type of directly or indirectly linked components that may be internal or external to CPU 3800. In at least one embodiment, I/O interfaces 3870 are representative of any number and type of I/O interfaces (e.g., PCI, PCI-X, PCIe, GBE, USB, etc.). In at least one embodiment, various types of peripheral devices are coupled to I/O interfaces 3870 In at least one embodiment, peripheral devices that are coupled to I/O interfaces 3870 may include, without limitation, displays, keyboards, mice, printers, scanners, joysticks or other types of game controllers, media recording devices, external storage devices, network interface cards, and so forth.

In at least one embodiment, memory controllers 3880 facilitate data transfers between CPU 3800 and a system memory 3890. In at least one embodiment, core complex 3810 and graphics complex 3840 share system memory 3890. In at least one embodiment, CPU 3800 implements a memory subsystem that includes, without limitation, any amount and type of memory controllers 3880 and memory devices that may be dedicated to one component or shared among multiple components. In at least one embodiment, CPU 3800 implements a cache subsystem that includes, without limitation, one or more cache memories (e.g., L2 caches 3828 and L3 caches 3830) that may each be private to or shared between any number of components (e.g., cores 3820 and core complexes 3810).

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_ first_ctaid to request starting thread dimensions in full for indicated threads to be performed after prior cancellation.

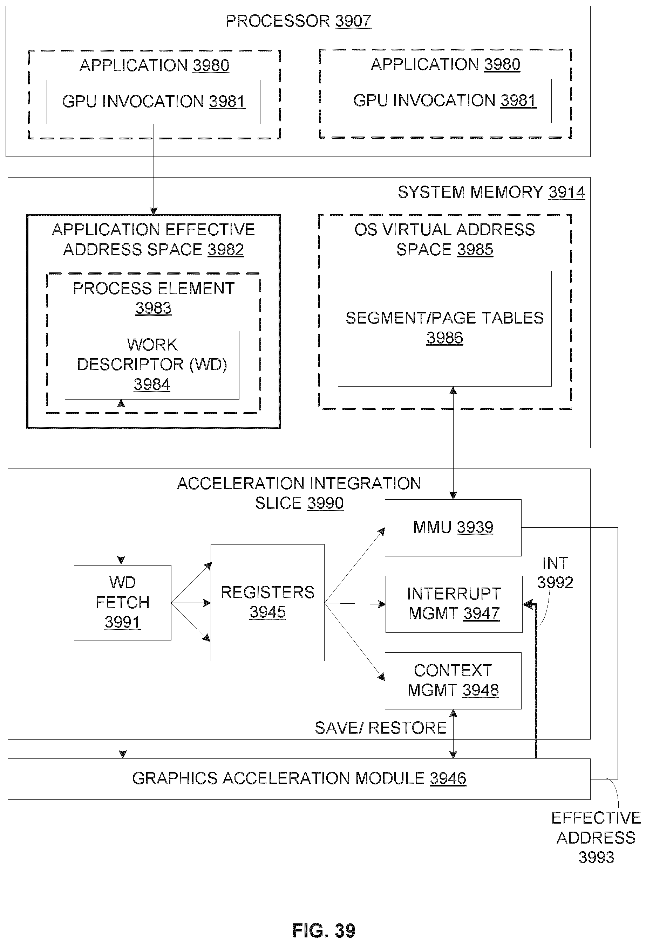

FIG. 39 illustrates an exemplary accelerator integration slice 3990, in accordance with at least one embodiment. As used herein, a "slice" comprises a specified portion of processing resources of an accelerator integration circuit. In at least one embodiment, an accelerator integration circuit provides cache management, memory access, context management, and interrupt management services on behalf of multiple graphics processing engines included in a graphics acceleration module. Graphics processing engines may each comprise a separate GPU. Alternatively, graphics processing engines may comprise different types of graphics processing engines within a GPU such as graphics execution units, media processing engines (e.g., video encoders/decoders), samplers, and blit engines. In at least one embodiment, a graphics acceleration module may be a GPU with multiple graphics processing engines. In at least one embodiment, graphics processing engines may be individual GPUs integrated on a common package, line card, or chip.

An application effective address space 3982 within system memory 3914 stores process elements 3983. In one embodiment, process elements 3983 are stored in response to GPU invocations 3981 from applications 3980 executed on processor 3907. A process element 3983 contains process state for corresponding application 3980. A work descriptor ("WD") 3984 contained in process element 3983 can be a single job requested by an application or may contain a pointer to a queue of jobs. In at least one embodiment, WD 3984 is a pointer to a job request queue in application effective address space 3982.

Graphics acceleration module 3946 and/or individual graphics processing engines can be shared by all or a subset of processes in a system. In at least one embodiment, an infrastructure for setting up process state and sending WD 3984 to graphics acceleration module 3946 to start a job in a virtualized environment may be included.

In at least one embodiment, a dedicated-process programming model is implementation-specific. In this model, a single process owns graphics acceleration module 3946 or an individual graphics processing engine. Because graphics acceleration module 3946 is owned by a single process, a hypervisor initializes an accelerator integration circuit for an owning partition and an operating system initializes accelerator integration circuit for an owning process when graphics acceleration module 3946 is assigned.

In operation, a WD fetch unit 3991 in accelerator integration slice 3990 fetches next WD 3984 which includes an indication of work to be done by one or more graphics processing engines of graphics acceleration module 3946. Data from WD 3984 may be stored in registers 3945 and used by a memory management unit ("MMU") 3939, interrupt management circuit 3947 and/or context management circuit 3948 as illustrated. For example, one embodiment of MMU 3939 includes segment/page walk circuitry for accessing segment/page tables 3986 within OS virtual address space 3985. Interrupt management circuit 3947 may process interrupt events ("INT") 3992 received from graphics acceleration module 3946. When performing graphics operations, an effective address 3993 generated by a graphics processing engine is translated to a real address by MMU 3939.

In one embodiment, a same set of registers 3945 are duplicated for each graphics processing engine and/or graphics acceleration module 3946 and may be initialized by a hypervisor or operating system. Each of these duplicated registers may be included in accelerator integration slice 3990. Exemplary registers that may be initialized by a hypervisor are shown in Table 1.

**Table 1 -Hypervisor Initialized Registers**

| | |
|---|---|
| 1 | Slice Control Register |
| 2 | Real Address (RA) Scheduled Processes Area Pointer |
| 3 | Authority Mask Override Register |
| 4 | Interrupt Vector Table Entry Offset |
| 5 | Interrupt Vector Table Entry Limit |
| 6 | State Register |
| 7 | Logical Partition ID |
| 8 | Real address (RA) Hypervisor Accelerator Utilization Record Pointer |
| 9 | Storage Description Register |

Exemplary registers that may be initialized by an operating system are shown in Table 2.

**Table 2 -Operating System Initialized Registers**

| | |
|---|---|
| 1 | Process and Thread Identification |
| 2 | Effective Address (EA) Context Save/Restore Pointer |
| 3 | Virtual Address (VA) Accelerator Utilization Record Pointer |
| 4 | Virtual Address (VA) Storage Segment Table Pointer |
| 5 | Authority Mask |
| 6 | Work descriptor |

In one embodiment, each WD 3984 is specific to a particular graphics acceleration module 3946 and/or a particular graphics processing engine. It contains all information required by a graphics processing engine to do work or it can be a pointer to a memory location where an application has set up a command queue of work to be completed.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_ first_ctaid to request starting thread dimensions in full for indicated threads to be performed after prior cancellation.

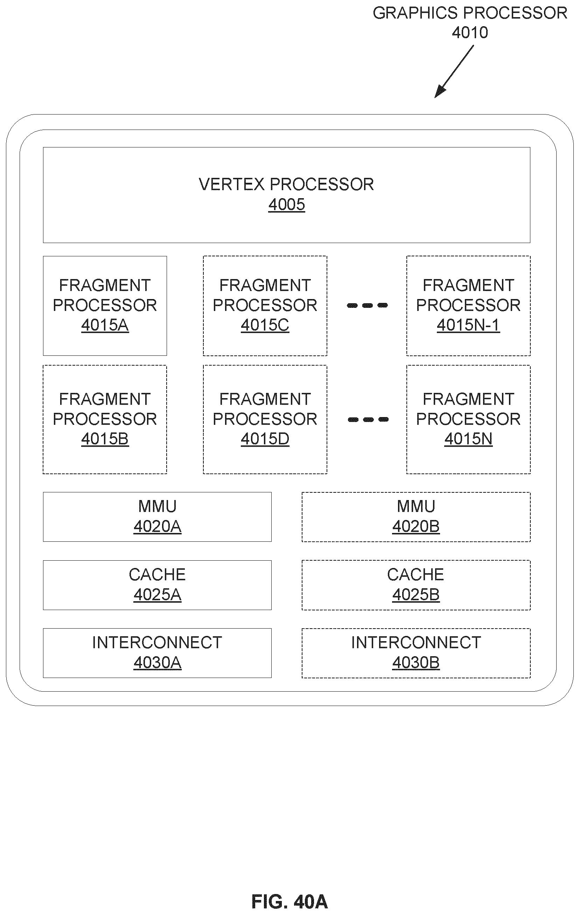

FIGS. 40A-40B illustrate exemplary graphics processors, in accordance with at least one embodiment. In at least one embodiment, any of the exemplary graphics processors may be fabricated using one or more IP cores. In addition to what is illustrated, other logic and circuits may be included in at least one embodiment, including additional graphics processors/cores, peripheral interface controllers, or general-purpose processor cores. In at least one embodiment, the exemplary graphics processors are for use within an SoC.

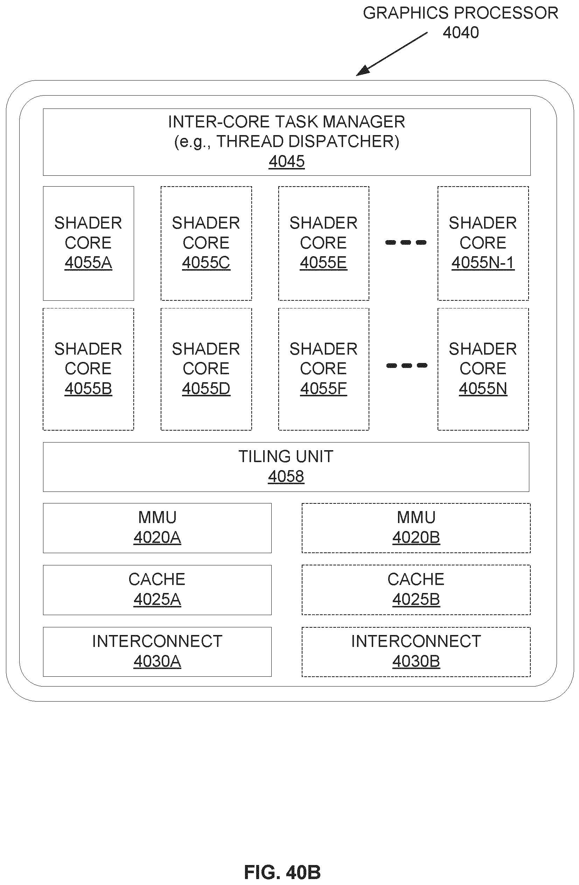

FIG. 40A illustrates an exemplary graphics processor 4010 of an SoC integrated circuit that may be fabricated using one or more IP cores, in accordance with at least one embodiment. FIG. 40B illustrates an additional exemplary graphics processor 4040 of an SoC integrated circuit that may be fabricated using one or more IP cores, in accordance with at least one embodiment. In at least one embodiment, graphics processor 4010 of FIG. 40A is a low power graphics processor core. In at least one embodiment, graphics processor 4040 of FIG. 40B is a higher performance graphics processor core. In at least one embodiment, each of graphics processors 4010, 4040 can be variants of graphics processor 1610 of FIG. 16.

In at least one embodiment, graphics processor 4010 includes a vertex processor 4005 and one or more fragment processor(s) 4015A-4015N (e.g., 4015A, 4015B, 4015C, 4015D, through 4015N-1, and 4015N). In at least one embodiment, graphics processor 4010 can execute different shader programs via separate logic, such that vertex processor 4005 is optimized to execute operations for vertex shader programs, while one or more fragment processor(s) 4015A-4015N execute fragment (e.g., pixel) shading operations for fragment or pixel shader programs. In at least one embodiment, vertex processor 4005 performs a vertex processing stage of a 3D graphics pipeline and generates primitives and vertex data. In at least one embodiment, fragment processor(s) 4015A-4015N use primitive and vertex data generated by vertex processor 4005 to produce a framebuffer that is displayed on a display device. In at least one embodiment, fragment processor(s) 4015A-4015N are optimized to execute fragment shader programs as provided for in an OpenGL API, which may be used to perform similar operations as a pixel shader program as provided for in a Direct 3D API.

In at least one embodiment, graphics processor 4010 additionally includes one or more MMU(s) 4020A-4020B, cache(s) 4025A-4025B, and circuit interconnect(s) 4030A-4030B. In at least one embodiment, one or more MMU(s) 4020A-4020B provide for virtual to physical address mapping for graphics processor 4010, including for vertex processor 4005 and/or fragment processor(s) 4015A-4015N, which may reference vertex or image/texture data stored in memory, in addition to vertex or image/texture data stored in one or more cache(s) 4025A-4025B. In at least one embodiment, one or more MMU(s) 4020A-4020B may be synchronized with other MMUs within a system, including one or more MMUs associated with one or more application processor(s) 1605, image processors 1615, and/or video processors 1620 of FIG. 16, such that each processor 1605-1620 can participate in a shared or unified virtual memory system. In at least one embodiment, one or more circuit interconnect(s) 4030A-4030B enable graphics processor 4010 to interface with other IP cores within an SoC, either via an internal bus of an SoC or via a direct connection.

In at least one embodiment, graphics processor 4040 includes one or more MMU(s) 4020A-4020B, caches 4025A-4025B, and circuit interconnects 4030A-4030B of graphics processor 4010 of FIG. 40A. In at least one embodiment, graphics processor 4040 includes one or more shader core(s) 4055A-4055N (e.g., 4055A, 4055B, 4055C, 4055D, 4055E, 4055F, through 4055N-1, and 4055N), which provides for a unified shader core architecture in which a single core or type or core can execute all types of programmable shader code, including shader program code to implement vertex shaders, fragment shaders, and/or compute shaders. In at least one embodiment, a number of shader cores can vary. In at least one embodiment, graphics processor 4040 includes an inter-core task manager 4045, which acts as a thread dispatcher to dispatch execution threads to one or more shader cores 4055A-4055N and a tiling unit 4058 to accelerate tiling operations for tile-based rendering, in which rendering operations for a scene are subdivided in image space, for example to exploit local spatial coherence within a scene or to optimize use of internal caches.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_ first_ctaid to request starting thread dimensions in full for indicated threads to be performed after prior cancellation.

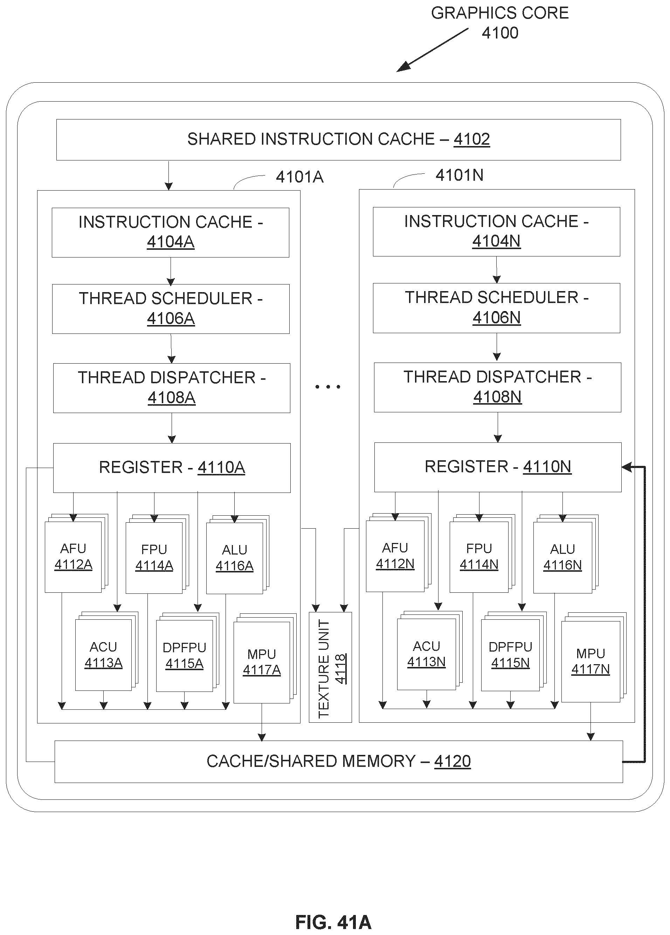

FIG. 41A illustrates a graphics core 4100, in accordance with at least one embodiment. In at least one embodiment, graphics core 4100 may be included within graphics processor 3510 of FIG. 35. In at least one embodiment, graphics core 4100 may be a unified shader core 4055A-4055N as in FIG. 40B. In at least one embodiment, graphics core 4100 includes a shared instruction cache 4102, a texture unit 4118, and a cache/shared memory 4120 that are common to execution resources within graphics core 4100. In at least one embodiment, graphics core 4100 can include multiple slices 4101A-4101N or partition for each core, and a graphics processor can include multiple instances of graphics core 4100. Slices 4101A-4101N can include support logic including a local instruction cache 4104A-4104N, a thread scheduler 4106A-4106N, a thread dispatcher 4108A-4108N, and a set of registers 4110A-4110N. In at least one embodiment, slices 4101A-4101N can include a set of additional function units ("AFUs") 4112A-4112N, floating-point units ("FPUs") 4114A-4114N, integer arithmetic logic units ("ALUs") 4116-4116N, address computational units ("ACUs") 4113A-4113N, double-precision floating-point units ("DPFPUs") 4115A-4115N, and matrix processing units ("MPUs") 4117A-4117N.

In at least one embodiment, FPUs 4114A-4114N can perform single-precision (32-bit) and half-precision (16-bit) floating point operations, while DPFPUs 4115A-4115N perform double precision (64-bit) floating point operations. In at least one embodiment, ALUs 4116A-4116N can perform variable precision integer operations at 8-bit, 16-bit, and 32-bit precision, and can be configured for mixed precision operations. In at least one embodiment, MPUs 4117A-4117N can also be configured for mixed precision matrix operations, including half-precision floating point and 8-bit integer operations. In at least one embodiment, MPUs 4117-4117N can perform a variety of matrix operations to accelerate CUDA programs, including enabling support for accelerated general matrix to matrix multiplication ("GEMM"). In at least one embodiment, AFUs 4112A-4112N can perform additional logic operations not supported by floating-point or integer units, including trigonometric operations (e.g., Sine, Cosine, etc.).

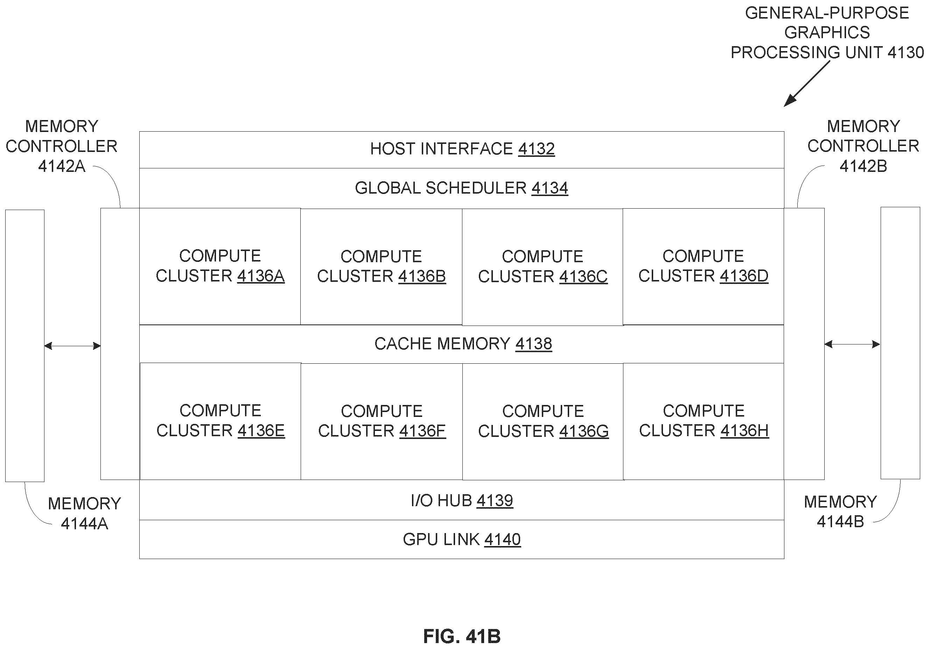

FIG. 41B illustrates a general-purpose graphics processing unit ("GPGPU") 4130, in accordance with at least one embodiment. In at least one embodiment, GPGPU 4130 is highly-parallel and suitable for deployment on a multi-chip module. In at least one embodiment, GPGPU 4130 can be configured to enable highly-parallel compute operations to be performed by an array of GPUs. In at least one embodiment, GPGPU 4130 can be linked directly to other instances of GPGPU 4130 to create a multi-GPU cluster to improve execution time for CUDA programs. In at least one embodiment, GPGPU 4130 includes a host interface 4132 to enable a connection with a host processor. In at least one embodiment, host interface 4132 is a PCIe interface. In at least one embodiment, host interface 4132 can be a vendor specific communications interface or communications fabric. In at least one embodiment, GPGPU 4130 receives commands from a host processor and uses a global scheduler 4134 to distribute execution threads associated with those commands to a set of compute clusters 4136A-4136H. In at least one embodiment, compute clusters 4136A-4136H share a cache memory 4138. In at least one embodiment, cache memory 4138 can serve as a higher-level cache for cache memories within compute clusters 4136A-4136H.

In at least one embodiment, GPGPU 4130 includes memory 4144A-4144B coupled with compute clusters 4136A-4136H via a set of memory controllers 4142A-4142B. In at least one embodiment, memory 4144A-4144B can include various types of memory devices including DRAM or graphics random access memory, such as synchronous graphics random access memory ("SGRAM"), including graphics double data rate ("GDDR") memory.

In at least one embodiment, compute clusters 4136A-4136H each include a set of graphics cores, such as graphics core 4100 of FIG. 41A, which can include multiple types of integer and floating point logic units that can perform computational operations at a range of precisions including suited for computations associated with CUDA programs. For example, in at least one embodiment, at least a subset of floating point units in each of compute clusters 4136A-4136H can be configured to perform 16-bit or 32-bit floating point operations, while a different subset of floating point units can be configured to perform 64-bit floating point operations.

In at least one embodiment, multiple instances of GPGPU 4130 can be configured to operate as a compute cluster. In at least one embodiment, compute clusters 4136A-4136H may implement any technically feasible communication techniques for synchronization and data exchange. In at least one embodiment, multiple instances of GPGPU 4130 communicate over host interface 4132. In at least one embodiment, GPGPU 4130 includes an I/O hub 4139 that couples GPGPU 4130 with a GPU link 4140 that enables a direct connection to other instances of GPGPU 4130. In at least one embodiment, GPU link 4140 is coupled to a dedicated GPU-to-GPU bridge that enables communication and synchronization between multiple instances of GPGPU 4130. In at least one embodiment GPU link 4140 couples with a high speed interconnect to transmit and receive data to other GPGPUs 4130 or parallel processors. In at least one embodiment, multiple instances of GPGPU 4130 are located in separate data processing systems and communicate via a network device that is accessible via host interface 4132. In at least one embodiment GPU link 4140 can be configured to enable a connection to a host processor in addition to or as an alternative to host interface 4132. In at least one embodiment, GPGPU 4130 can be configured to execute a CUDA program.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_ first_ctaid to request starting thread dimensions in full for indicated threads to be performed after prior cancellation.

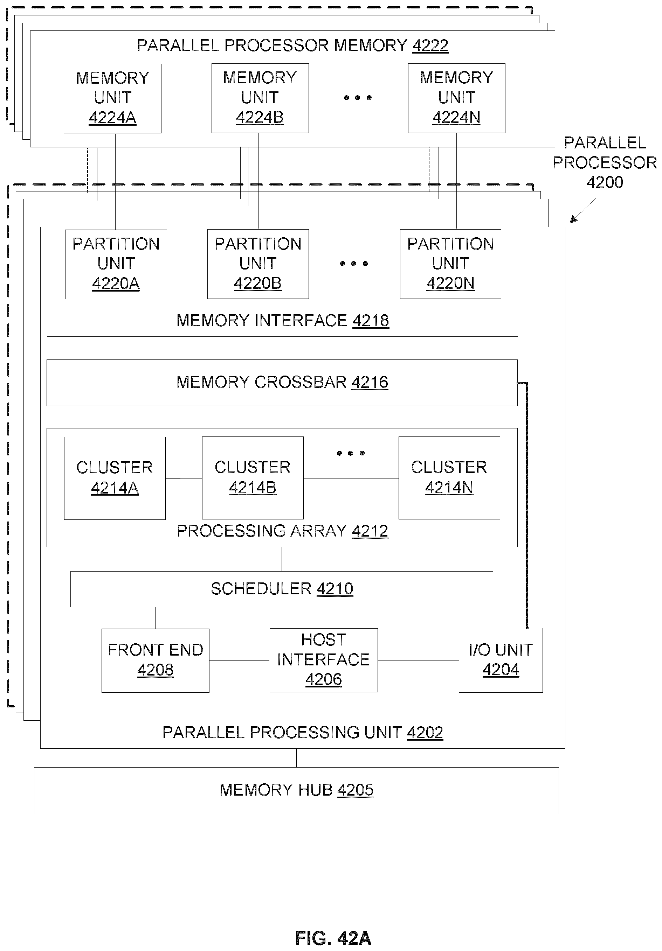

FIG. 42A illustrates a parallel processor 4200, in accordance with at least one embodiment. In at least one embodiment, various components of parallel processor 4200 may be implemented using one or more integrated circuit devices, such as programmable processors, application specific integrated circuits ("ASICs"), or FPGAs.

In at least one embodiment, parallel processor 4200 includes a parallel processing unit 4202. In at least one embodiment, parallel processing unit 4202 includes an I/O unit 4204 that enables communication with other devices, including other instances of parallel processing unit 4202. In at least one embodiment, I/O unit 4204 may be directly connected to other devices. In at least one embodiment, I/O unit 4204 connects with other devices via use of a hub or switch interface, such as memory hub 1705. In at least one embodiment, connections between memory hub 1705 and I/O unit 4204 form a communication link. In at least one embodiment, I/O unit 4204 connects with a host interface 4206 and a memory crossbar 4216, where host interface 4206 receives commands directed to performing processing operations and memory crossbar 4216 receives commands directed to performing memory operations.

In at least one embodiment, when host interface 4206 receives a command buffer via I/O unit 4204, host interface 4206 can direct work operations to perform those commands to a front end 4208. In at least one embodiment, front end 4208 couples with a scheduler 4210, which is configured to distribute commands or other work items to a processing array 4212. In at least one embodiment, scheduler 4210 ensures that processing array 4212 is properly configured and in a valid state before tasks are distributed to processing array 4212. In at least one embodiment, scheduler 4210 is implemented via firmware logic executing on a microcontroller. In at least one embodiment, microcontroller implemented scheduler 4210 is configurable to perform complex scheduling and work distribution operations at coarse and fine granularity, enabling rapid preemption and context switching of threads executing on processing array 4212. In at least one embodiment, host software can prove workloads for scheduling on processing array 4212 via one of multiple graphics processing doorbells. In at least one embodiment, workloads can then be automatically distributed across processing array 4212 by scheduler 4210 logic within a microcontroller including scheduler 4210.

In at least one embodiment, processing array 4212 can include up to "N" clusters (e.g., cluster 4214A, cluster 4214B, through cluster 4214N). In at least one embodiment, each cluster 4214A-4214N of processing array 4212 can execute a large number of concurrent threads. In at least one embodiment, scheduler 4210 can allocate work to clusters 4214A-4214N of processing array 4212 using various scheduling and/or work distribution algorithms, which may vary depending on a workload arising for each type of program or computation. In at least one embodiment, scheduling can be handled dynamically by scheduler 4210, or can be assisted in part by compiler logic during compilation of program logic configured for execution by processing array 4212. In at least one embodiment, different clusters 4214A-4214N of processing array 4212 can be allocated for processing different types of programs or for performing different types of computations.

In at least one embodiment, processing array 4212 can be configured to perform various types of parallel processing operations. In at least one embodiment, processing array 4212 is configured to perform general-purpose parallel compute operations. For example, in at least one embodiment, processing array 4212 can include logic to execute processing tasks including filtering of video and/or audio data, performing modeling operations, including physics operations, and performing data transformations.

In at least one embodiment, processing array 4212 is configured to perform parallel graphics processing operations. In at least one embodiment, processing array 4212 can include additional logic to support execution of such graphics processing operations, including, but not limited to texture sampling logic to perform texture operations, as well as tessellation logic and other vertex processing logic. In at least one embodiment, processing array 4212 can be configured to execute graphics processing related shader programs such as, but not limited to vertex shaders, tessellation shaders, geometry shaders, and pixel shaders. In at least one embodiment, parallel processing unit 4202 can transfer data from system memory via I/O unit 4204 for processing. In at least one embodiment, during processing, transferred data can be stored to on-chip memory (e.g., a parallel processor memory 4222) during processing, then written back to system memory.

In at least one embodiment, when parallel processing unit 4202 is used to perform graphics processing, scheduler 4210 can be configured to divide a processing workload into approximately equal sized tasks, to better enable distribution of graphics processing operations to multiple clusters 4214A-4214N of processing array 4212. In at least one embodiment, portions of processing array 4212 can be configured to perform different types of processing. For example, in at least one embodiment, a first portion may be configured to perform vertex shading and topology generation, a second portion may be configured to perform tessellation and geometry shading, and a third portion may be configured to perform pixel shading or other screen space operations, to produce a rendered image for display. In at least one embodiment, intermediate data produced by one or more of clusters 4214A-4214N may be stored in buffers to allow intermediate data to be transmitted between clusters 4214A-4214N for further processing.

In at least one embodiment, processing array 4212 can receive processing tasks to be executed via scheduler 4210, which receives commands defining processing tasks from front end 4208. In at least one embodiment, processing tasks can include indices of data to be processed, e.g., surface (patch) data, primitive data, vertex data, and/or pixel data, as well as state parameters and commands defining how data is to be processed (e.g., what program is to be executed). In at least one embodiment, scheduler 4210 may be configured to fetch indices corresponding to tasks or may receive indices from front end 4208. In at least one embodiment, front end 4208 can be configured to ensure processing array 4212 is configured to a valid state before a workload specified by incoming command buffers (e.g., batch-buffers, push buffers, etc.) is initiated.

In at least one embodiment, each of one or more instances of parallel processing unit 4202 can couple with parallel processor memory 4222. In at least one embodiment, parallel processor memory 4222 can be accessed via memory crossbar 4216, which can receive memory requests from processing array 4212 as well as I/O unit 4204. In at least one embodiment, memory crossbar 4216 can access parallel processor memory 4222 via a memory interface 4218. In at least one embodiment, memory interface 4218 can include multiple partition units (e.g., a partition unit 4220A, partition unit 4220B, through partition unit 4220N) that can each couple to a portion (e.g., memory unit) of parallel processor memory 4222. In at least one embodiment, a number of partition units 4220A-4220N is configured to be equal to a number of memory units, such that a first partition unit 4220A has a corresponding first memory unit 4224A, a second partition unit 4220B has a corresponding memory unit 4224B, and an Nth partition unit 4220N has a corresponding Nth memory unit 4224N. In at least one embodiment, a number of partition units 4220A-4220N may not be equal to a number of memory devices.

In at least one embodiment, memory units 4224A-4224N can include various types of memory devices, including DRAM or graphics random access memory, such as SGRAM, including GDDR memory. In at least one embodiment, memory units 4224A-4224N may also include 3D stacked memory, including but not limited to high bandwidth memory ("HBM"). In at least one embodiment, render targets, such as frame buffers or texture maps may be stored across memory units 4224A-4224N, allowing partition units 4220A-4220N to write portions of each render target in parallel to efficiently use available bandwidth of parallel processor memory 4222. In at least one embodiment, a local instance of parallel processor memory 4222 may be excluded in favor of a unified memory design that utilizes system memory in conjunction with local cache memory.

In at least one embodiment, any one of clusters 4214A-4214N of processing array 4212 can process data that will be written to any of memory units 4224A-4224N within parallel processor memory 4222. In at least one embodiment, memory crossbar 4216 can be configured to transfer an output of each cluster 4214A-4214N to any partition unit 4220A-4220N or to another cluster 4214A-4214N, which can perform additional processing operations on an output. In at least one embodiment, each cluster 4214A-4214N can communicate with memory interface 4218 through memory crossbar 4216 to read from or write to various external memory devices. In at least one embodiment, memory crossbar 4216 has a connection to memory interface 4218 to communicate with I/O unit 4204, as well as a connection to a local instance of parallel processor memory 4222, enabling processing units within different clusters 4214A-4214N to communicate with system memory or other memory that is not local to parallel processing unit 4202. In at least one embodiment, memory crossbar 4216 can use virtual channels to separate traffic streams between clusters 4214A-4214N and partition units 4220A-4220N.

In at least one embodiment, multiple instances of parallel processing unit 4202 can be provided on a single add-in card, or multiple add-in cards can be interconnected. In at least one embodiment, different instances of parallel processing unit 4202 can be configured to inter-operate even if different instances have different numbers of processing cores, different amounts of local parallel processor memory, and/or other configuration differences. For example, in at least one embodiment, some instances of parallel processing unit 4202 can include higher precision floating point units relative to other instances. In at least one embodiment, systems incorporating one or more instances of parallel processing unit 4202 or parallel processor 4200 can be implemented in a variety of configurations and form factors, including but not limited to desktop, laptop, or handheld personal computers, servers, workstations, game consoles, and/or embedded systems.

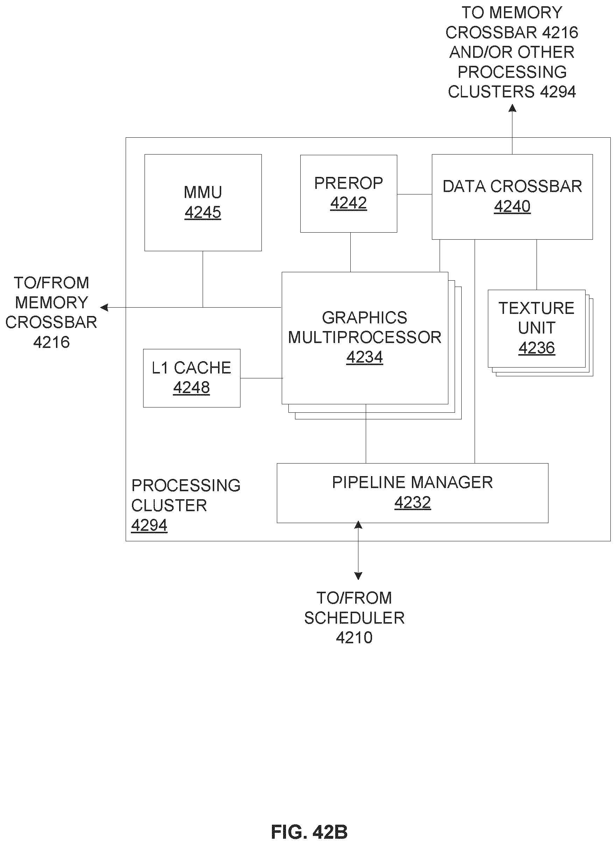

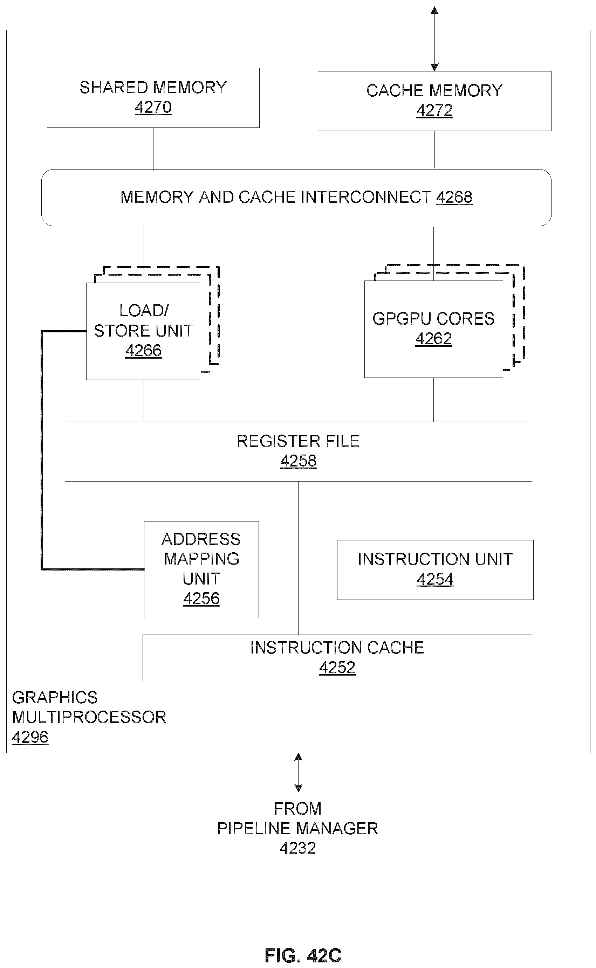

FIG. 42B illustrates a processing cluster 4294, in accordance with at least one embodiment. In at least one embodiment, processing cluster 4294 is included within a parallel processing unit. In at least one embodiment, processing cluster 4294 is one of processing clusters 4214A-4214N of FIG. 42. In at least one embodiment, processing cluster 4294 can be configured to execute many threads in parallel, where the term "thread" refers to an instance of a particular program executing on a particular set of input data. In at least one embodiment, single instruction, multiple data ("SIMD") instruction issue techniques are used to support parallel execution of a large number of threads without providing multiple independent instruction units. In at least one embodiment, single instruction, multiple thread ("SIMT") techniques are used to support parallel execution of a large number of generally synchronized threads, using a common instruction unit configured to issue instructions to a set of processing engines within each processing cluster 4294.

In at least one embodiment, operation of processing cluster 4294 can be controlled via a pipeline manager 4232 that distributes processing tasks to SIMT parallel processors. In at least one embodiment, pipeline manager 4232 receives instructions from scheduler 4210 of FIG. 42 and manages execution of those instructions via a graphics multiprocessor 4234 and/or a texture unit 4236. In at least one embodiment, graphics multiprocessor 4234 is an exemplary instance of a SIMT parallel processor. However, in at least one embodiment, various types of SIMT parallel processors of differing architectures may be included within processing cluster 4294. In at least one embodiment, one or more instances of graphics multiprocessor 4234 can be included within processing cluster 4294. In at least one embodiment, graphics multiprocessor 4234 can process data and a data crossbar 4240 can be used to distribute processed data to one of multiple possible destinations, including other shader units. In at least one embodiment, pipeline manager 4232 can facilitate distribution of processed data by specifying destinations for processed data to be distributed via data crossbar 4240.

In at least one embodiment, each graphics multiprocessor 4234 within processing cluster 4294 can include an identical set of functional execution logic (e.g., arithmetic logic units, load/store units ("LSUs"), etc.). In at least one embodiment, functional execution logic can be configured in a pipelined manner in which new instructions can be issued before previous instructions are complete. In at least one embodiment, functional execution logic supports a variety of operations including integer and floating point arithmetic, comparison operations, Boolean operations, bit-shifting, and computation of various algebraic functions. In at least one embodiment, same functional-unit hardware can be leveraged to perform different operations and any combination of functional units may be present.

In at least one embodiment, instructions transmitted to processing cluster 4294 constitute a thread. In at least one embodiment, a set of threads executing across a set of parallel processing engines is a thread group. In at least one embodiment, a thread group executes a program on different input data. In at least one embodiment, each thread within a thread group can be assigned to a different processing engine within graphics multiprocessor 4234. In at least one embodiment, a thread group may include fewer threads than a number of processing engines within graphics multiprocessor 4234. In at least one embodiment, when a thread group includes fewer threads than a number of processing engines, one or more of processing engines may be idle during cycles in which that thread group is being processed. In at least one embodiment, a thread group may also include more threads than a number of processing engines within graphics multiprocessor 4234. In at least one embodiment, when a thread group includes more threads than a number of processing engines within graphics multiprocessor 4234, processing can be performed over consecutive clock cycles. In at least one embodiment, multiple thread groups can be executed concurrently on graphics multiprocessor 4234.

In at least one embodiment, graphics multiprocessor 4234 includes an internal cache memory to perform load and store operations. In at least one embodiment, graphics multiprocessor 4234 can forego an internal cache and use a cache memory (e.g., L1 cache 4248) within processing cluster 4294. In at least one embodiment, each graphics multiprocessor 4234 also has access to Level 2 ("L2") caches within partition units (e.g., partition units 4220A-4220N of FIG. 42A) that are shared among all processing clusters 4294 and may be used to transfer data between threads. In at least one embodiment, graphics multiprocessor 4234 may also access off-chip global memory, which can include one or more of local parallel processor memory and/or system memory. In at least one embodiment, any memory external to parallel processing unit 4202 may be used as global memory. In at least one embodiment, processing cluster 4294 includes multiple instances of graphics multiprocessor 4234 that can share common instructions and data, which may be stored in L1 cache 4248.

In at least one embodiment, each processing cluster 4294 may include an MMU 4245 that is configured to map virtual addresses into physical addresses. In at least one embodiment, one or more instances of MMU 4245 may reside within memory interface 4218 of FIG. 42. In at least one embodiment, MMU 4245 includes a set of page table entries ("PTEs") used to map a virtual address to a physical address of a tile and optionally a cache line index. In at least one embodiment, MMU 4245 may include address translation lookaside buffers ("TLBs") or caches that may reside within graphics multiprocessor 4234 or L1 cache 4248 or processing cluster 4294. In at least one embodiment, a physical address is processed to distribute surface data access locality to allow efficient request interleaving among partition units. In at least one embodiment, a cache line index may be used to determine whether a request for a cache line is a hit or miss.

In at least one embodiment, processing cluster 4294 may be configured such that each graphics multiprocessor 4234 is coupled to a texture unit 4236 for performing texture mapping operations, e.g., determining texture sample positions, reading texture data, and filtering texture data. In at least one embodiment, texture data is read from an internal texture L1 cache (not shown) or from an L1 cache within graphics multiprocessor 4234 and is fetched from an L2 cache, local parallel processor memory, or system memory, as needed. In at least one embodiment, each graphics multiprocessor 4234 outputs a processed task to data crossbar 4240 to provide a processed task to another processing cluster 4294 for further processing or to store a processed task in an L2 cache, a local parallel processor memory, or a system memory via memory crossbar 4216. In at least one embodiment, a pre-raster operations unit ("preROP") 4242 is configured to receive data from graphics multiprocessor 4234, direct data to ROP units, which may be located with partition units as described herein (e.g., partition units 4220A-4220N of FIG. 42). In at least one embodiment, PreROP 4242 can perform optimizations for color blending, organize pixel color data, and perform address translations.

FIG. 42C illustrates a graphics multiprocessor 4296, in accordance with at least one embodiment. In at least one embodiment, graphics multiprocessor 4296 is graphics multiprocessor 4234 of FIG. 42B. In at least one embodiment, graphics multiprocessor 4296 couples with pipeline manager 4232 of processing cluster 4294. In at least one embodiment, graphics multiprocessor 4296 has an execution pipeline including but not limited to an instruction cache 4252, an instruction unit 4254, an address mapping unit 4256, a register file 4258, one or more GPGPU cores 4262, and one or more LSUs 4266. GPGPU cores 4262 and LSUs 4266 are coupled with cache memory 4272 and shared memory 4270 via a memory and cache interconnect 4268.

**In** at least one embodiment, instruction cache 4252 receives a stream of instructions to execute from pipeline manager 4232. **In** at least one embodiment, instructions are cached in instruction cache 4252 and dispatched for execution by instruction unit 4254. **In** at least one embodiment, instruction unit 4254 can dispatch instructions as thread groups (e.g., warps), with each thread of a thread group assigned to a different execution unit within GPGPU core 4262. **In** at least one embodiment, an instruction can access any of a local, shared, or global address space by specifying an address within a unified address space. **In** at least one embodiment, address mapping unit 4256 can be used to translate addresses in a unified address space into a distinct memory address that can be accessed by LSUs 4266.

In at least one embodiment, register file 4258 provides a set of registers for functional units of graphics multiprocessor 4296. In at least one embodiment, register file 4258 provides temporary storage for operands connected to data paths of functional units (e.g., GPGPU cores 4262, LSUs 4266) of graphics multiprocessor 4296. In at least one embodiment, register file 4258 is divided between each of functional units such that each functional unit is allocated a dedicated portion of register file 4258. In at least one embodiment, register file 4258 is divided between different thread groups being executed by graphics multiprocessor 4296.

In at least one embodiment, GPGPU cores 4262 can each include FPUs and/or integer ALUs that are used to execute instructions of graphics multiprocessor 4296. GPGPU cores 4262 can be similar in architecture or can differ in architecture. In at least one embodiment, a first portion of GPGPU cores 4262 include a single precision FPU and an integer ALU while a second portion of GPGPU cores 4262 include a double precision FPU. In at least one embodiment, FPUs can implement IEEE 754-2008 standard for floating point arithmetic or enable variable precision floating point arithmetic. In at least one embodiment, graphics multiprocessor 4296 can additionally include one or more fixed function or special function units to perform specific functions such as copy rectangle or pixel blending operations. In at least one embodiment one or more of GPGPU cores 4262 can also include fixed or special function logic.

In at least one embodiment, GPGPU cores 4262 include SIMD logic capable of performing a single instruction on multiple sets of data. In at least one embodiment GPGPU cores 4262 can physically execute SIMD4, SIMD8, and SIMD16 instructions and logically execute SIMD1, SIMD2, and SIMD32 instructions. In at least one embodiment, SIMD instructions for GPGPU cores 4262 can be generated at compile time by a shader compiler or automatically generated when executing programs written and compiled for single program multiple data ("SPMD") or SIMT architectures. In at least one embodiment, multiple threads of a program configured for an SIMT execution model can executed via a single SIMD instruction. For example, in at least one embodiment, eight SIMT threads that perform the same or similar operations can be executed in parallel via a single SIMD8 logic unit.

In at least one embodiment, memory and cache interconnect 4268 is an interconnect network that connects each functional unit of graphics multiprocessor 4296 to register file 4258 and to shared memory 4270. In at least one embodiment, memory and cache interconnect 4268 is a crossbar interconnect that allows LSU 4266 to implement load and store operations between shared memory 4270 and register file 4258. In at least one embodiment, register file 4258 can operate at a same frequency as GPGPU cores 4262, thus data transfer between GPGPU cores 4262 and register file 4258 is very low latency. In at least one embodiment, shared memory 4270 can be used to enable communication between threads that execute on functional units within graphics multiprocessor 4296. In at least one embodiment, cache memory 4272 can be used as a data cache for example, to cache texture data communicated between functional units and texture unit 4236. In at least one embodiment, shared memory 4270 can also be used as a program managed cached. In at least one embodiment, threads executing on GPGPU cores 4262 can programmatically store data within shared memory in addition to automatically cached data that is stored within cache memory 4272.

In at least one embodiment, a parallel processor or GPGPU as described herein is communicatively coupled to host/processor cores to accelerate graphics operations, machine-learning operations, pattern analysis operations, and various general purpose GPU (GPGPU) functions. In at least one embodiment, a GPU may be communicatively coupled to host processor/cores over a bus or other interconnect (e.g., a high speed interconnect such as PCIe or NVLink). In at least one embodiment, a GPU may be integrated on a same package or chip as cores and communicatively coupled to cores over a processor bus/interconnect that is internal to a package or a chip. In at least one embodiment, regardless of a manner in which a GPU is connected, processor cores may allocate work to a GPU in a form of sequences of commands/instructions contained in a WD. In at least one embodiment, a GPU then uses dedicated circuitry/logic for efficiently processing these commands/instructions.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_ first_ctaid to request starting thread dimensions in full for indicated threads to be performed after prior cancellation.

### General Computing

The following figures set forth, without limitation, exemplary software constructs within general computing that can be used to implement at least one embodiment.

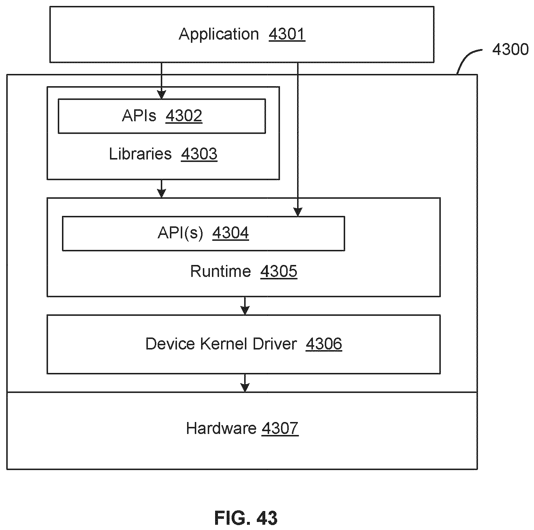

FIG. 43 illustrates a software stack of a programming platform, in accordance with at least one embodiment. In at least one embodiment, a programming platform is a platform for leveraging hardware on a computing system to accelerate computational tasks. A programming platform may be accessible to software developers through libraries, compiler directives, and/or extensions to programming languages, in at least one embodiment. In at least one embodiment, a programming platform may be, but is not limited to, CUDA, Radeon Open Compute Platform ("ROCm"), OpenCL (OpenCL^{™} is developed by Khronos group), SYCL, or Intel One API.

In at least one embodiment, a software stack 4300 of a programming platform provides an execution environment for an application 4301. In at least one embodiment, application 4301 may include any computer software capable of being launched on software stack 4300. In at least one embodiment, application 4301 may include, but is not limited to, an artificial intelligence ("AI")/machine learning ("ML") application, a high performance computing ("HPC") application, a virtual desktop infrastructure ("VDI"), or a data center workload.

In at least one embodiment, application 4301 and software stack 4300 run on hardware 4307. Hardware 4307 may include one or more GPUs, CPUs, FPGAs, AI engines, and/or other types of compute devices that support a programming platform, in at least one embodiment. In at least one embodiment, such as with CUDA, software stack 4300 may be vendor specific and compatible with only devices from particular vendor(s). In at least one embodiment, such as in with OpenCL, software stack 4300 may be used with devices from different vendors. In at least one embodiment, hardware 4307 includes a host connected to one more devices that can be accessed to perform computational tasks via application programming interface ("API") calls. A device within hardware 4307 may include, but is not limited to, a GPU, FPGA, AI engine, or other compute device (but may also include a CPU) and its memory, as opposed to a host within hardware 4307 that may include, but is not limited to, a CPU (but may also include a compute device) and its memory, in at least one embodiment.

In at least one embodiment, software stack 4300 of a programming platform includes, without limitation, a number of libraries 4303, a runtime 4305, and a device kernel driver 4306. Each of libraries 4303 may include data and programming code that can be used by computer programs and leveraged during software development, in at least one embodiment. In at least one embodiment, libraries 4303 may include, but are not limited to, pre-written code and subroutines, classes, values, type specifications, configuration data, documentation, help data, and/or message templates. In at least one embodiment, libraries 4303 include functions that are optimized for execution on one or more types of devices. In at least one embodiment, libraries 4303 may include, but are not limited to, functions for performing mathematical, deep learning, and/or other types of operations on devices. In at least one embodiment, libraries 4403 are associated with corresponding APIs 4402, which may include one or more APIs, that expose functions implemented in libraries 4403.

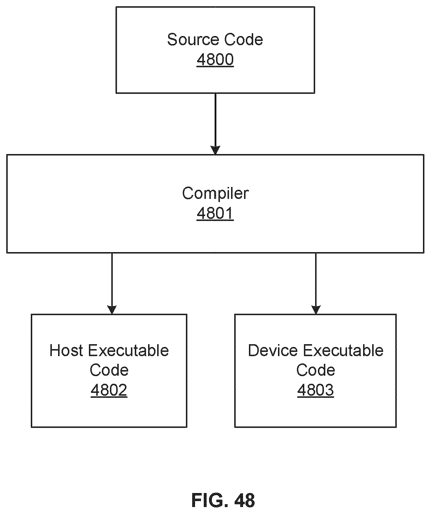

In at least one embodiment, application 4301 is written as source code that is compiled into executable code, as discussed in greater detail below in conjunction with FIG. 48. Executable code of application 4301 may run, at least in part, on an execution environment provided by software stack 4300, in at least one embodiment. In at least one embodiment, during execution of application 4301, code may be reached that needs to run on a device, as opposed to a host. In such a case, runtime 4305 may be called to load and launch requisite code on a device, in at least one embodiment. In at least one embodiment, runtime 4305 may include any technically feasible runtime system that is able to support execution of application S01.

In at least one embodiment, runtime 4305 is implemented as one or more runtime libraries associated with corresponding APIs, which are shown as API(s) 4304. One or more of such runtime libraries may include, without limitation, functions for memory management, execution control, device management, error handling, and/or synchronization, among other things, in at least one embodiment. In at least one embodiment, memory management functions may include, but are not limited to, functions to allocate, deallocate, and copy device memory, as well as transfer data between host memory and device memory. In at least one embodiment, execution control functions may include, but are not limited to, functions to launch a function (sometimes referred to as a "kernel" when a function is a global function callable from a host) on a device and set attribute values in a buffer maintained by a runtime library for a given function to be executed on a device.

Runtime libraries and corresponding API(s) 4304 may be implemented in any technically feasible manner, in at least one embodiment. In at least one embodiment, one (or any number of) API may expose a low-level set of functions for fine-grained control of a device, while another (or any number of) API may expose a higher-level set of such functions. In at least one embodiment, a high-level runtime API may be built on top of a low-level API. In at least one embodiment, one or more of runtime APIs may be language-specific APIs that are layered on top of a language-independent runtime API.

In at least one embodiment, device kernel driver 4306 is configured to facilitate communication with an underlying device. In at least one embodiment, device kernel driver 4306 may provide low-level functionalities upon which APIs, such as API(s) 4304, and/or other software relies. In at least one embodiment, device kernel driver 4306 may be configured to compile intermediate representation ("IR") code into binary code at runtime. For CUDA, device kernel driver 4306 may compile Parallel Thread Execution ("PTX") IR code that is not hardware specific into binary code for a specific target device at runtime (with caching of compiled binary code), which is also sometimes referred to as "finalizing" code, in at least one embodiment. Doing so may permit finalized code to run on a target device, which may not have existed when source code was originally compiled into PTX code, in at least one embodiment. Alternatively, in at least one embodiment, device source code may be compiled into binary code offline, without requiring device kernel driver 4306 to compile IR code at runtime.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

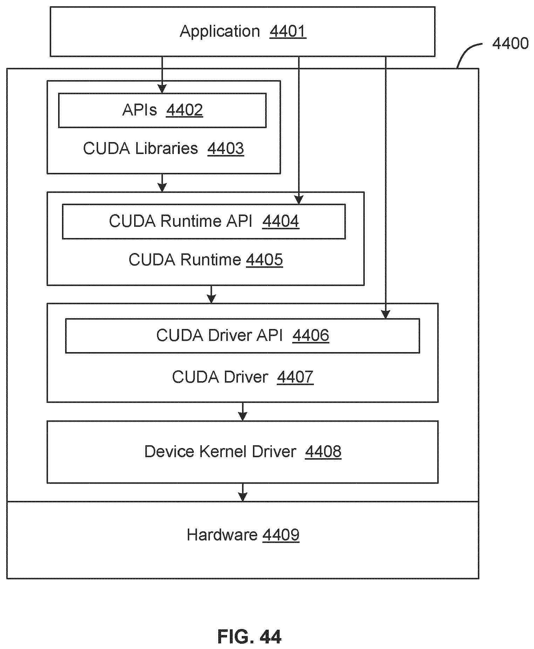

FIG. 44 illustrates a CUDA implementation of software stack 4300 of FIG. 43, in accordance with at least one embodiment. In at least one embodiment, a CUDA software stack 4400, on which an application 4401 may be launched, includes CUDA libraries 4403, a CUDA runtime 4405, a CUDA driver 4407, and a device kernel driver 4408. In at least one embodiment, CUDA software stack 4400 executes on hardware 4409, which may include a GPU that supports CUDA and is developed by NVIDIA Corporation of Santa Clara, CA.

In at least one embodiment, application 4401, CUDA runtime 4405, and device kernel driver 4408 may perform similar functionalities as application 4301, runtime 4305, and device kernel driver 4306, respectively, which are described above in conjunction with FIG. 43. In at least one embodiment, CUDA driver 4407 includes a library (libcuda.so) that implements a CUDA driver API 4406. Similar to a CUDA runtime API 4404 implemented by a CUDA runtime library (cudart), CUDA driver API 4406 may, without limitation, expose functions for memory management, execution control, device management, error handling, synchronization, and/or graphics interoperability, among other things, in at least one embodiment. In at least one embodiment, CUDA driver API 4406 differs from CUDA runtime API 4404 in that CUDA runtime API 4404 simplifies device code management by providing implicit initialization, context (analogous to a process) management, and module (analogous to dynamically loaded libraries) management. In contrast to high-level CUDA runtime API 4404, CUDA driver API 4406 is a low-level API providing more fine-grained control of a device, particularly with respect to contexts and module loading, in at least one embodiment. In at least one embodiment, CUDA driver API 4406 may expose functions for context management that are not exposed by CUDA runtime API 4404. In at least one embodiment, CUDA driver API 4406 is also language-independent and supports, e.g., OpenCL in addition to CUDA runtime API 4404. Further, in at least one embodiment, development libraries, including CUDA runtime 4405, may be considered as separate from driver components, including user-mode CUDA driver 4407 and kernel-mode device driver 4408 (also sometimes referred to as a "display" driver).

In at least one embodiment, CUDA libraries 4403 may include, but are not limited to, mathematical libraries, deep learning libraries, parallel algorithm libraries, and/or signal/image/video processing libraries, which parallel computing applications such as application 4401 may utilize. In at least one embodiment, CUDA libraries 4403 may include mathematical libraries such as a cuBLAS library that is an implementation of Basic Linear Algebra Subprograms ("BLAS") for performing linear algebra operations, a cuFFT library for computing fast Fourier transforms ("FFTs"), and a cuRAND library for generating random numbers, among others. In at least one embodiment, CUDA libraries 4403 may include deep learning libraries such as a cuDNN library of primitives for deep neural networks and a TensorRT platform for high-performance deep learning inference, among others.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

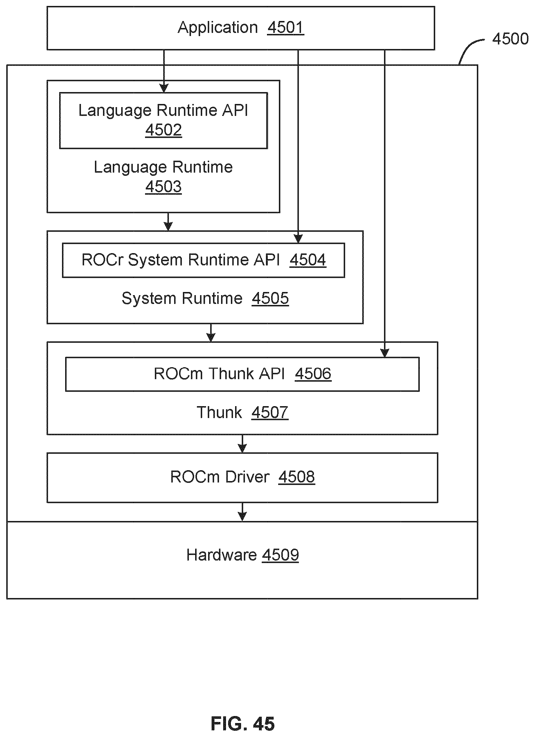

FIG. 45 illustrates a ROCm implementation of software stack 4300 of FIG. 43, in accordance with at least one embodiment. In at least one embodiment, a ROCm software stack 4500, on which an application 4501 may be launched, includes a language runtime 4503, a system runtime 4505, a thunk 4507, a ROCm kernel driver 4508, and a device kernel driver 4509. In at least one embodiment, ROCm software stack 4500 executes on hardware 4510, which may include a GPU that supports ROCm and is developed by AMD Corporation of Santa Clara, CA.

In at least one embodiment, application 4501 may perform similar functionalities as application 4301 discussed above in conjunction with FIG. 43. In addition, language runtime 4503 and system runtime 4505 may perform similar functionalities as runtime 4305 discussed above in conjunction with FIG. 43, in at least one embodiment. In at least one embodiment, language runtime 4503 and system runtime 4505 differ in that system runtime 4505 is a language-independent runtime that implements a ROCr system runtime API 4504 and makes use of a Heterogeneous System Architecture ("HAS") Runtime API. HAS runtime API is a thin, user-mode API that exposes interfaces to access and interact with an AMD GPU, including functions for memory management, execution control via architected dispatch of kernels, error handling, system and agent information, and runtime initialization and shutdown, among other things, in at least one embodiment. In contrast to system runtime 4505, language runtime 4503 is an implementation of a language-specific runtime API 4502 layered on top of ROCr system runtime API 4504, in at least one embodiment. In at least one embodiment, language runtime API may include, but is not limited to, a Heterogeneous compute Interface for Portability ("HIP") language runtime API, a Heterogeneous Compute Compiler ("HCC") language runtime API, or an OpenCL API, among others. HIP language in particular is an extension of C++ programming language with functionally similar versions of CUDA mechanisms, and, in at least one embodiment, a HIP language runtime API includes functions that are similar to those of CUDA runtime API 4404 discussed above in conjunction with FIG. 44, such as functions for memory management, execution control, device management, error handling, and synchronization, among other things.

In at least one embodiment, thunk (ROCt) 4507 is an interface that can be used to interact with underlying ROCm driver 4508. In at least one embodiment, ROCm driver 4508 is a ROCk driver, which is a combination of an AMDGPU driver and a HAS kernel driver (amdkfd). In at least one embodiment, AMDGPU driver is a device kernel driver for GPUs developed by AMD that performs similar functionalities as device kernel driver 4306 discussed above in conjunction with FIG. 43. In at least one embodiment, HAS kernel driver is a driver permitting different types of processors to share system resources more effectively via hardware features.

In at least one embodiment, various libraries (not shown) may be included in ROCm software stack 4500 above language runtime 4503 and provide functionality similarity to CUDA libraries 4403, discussed above in conjunction with FIG. 44. In at least one embodiment, various libraries may include, but are not limited to, mathematical, deep learning, and/or other libraries such as a hipBLAS library that implements functions similar to those of CUDA cuBLAS, a rocFFT library for computing FFTs that is similar to CUDA cuFFT, among others.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

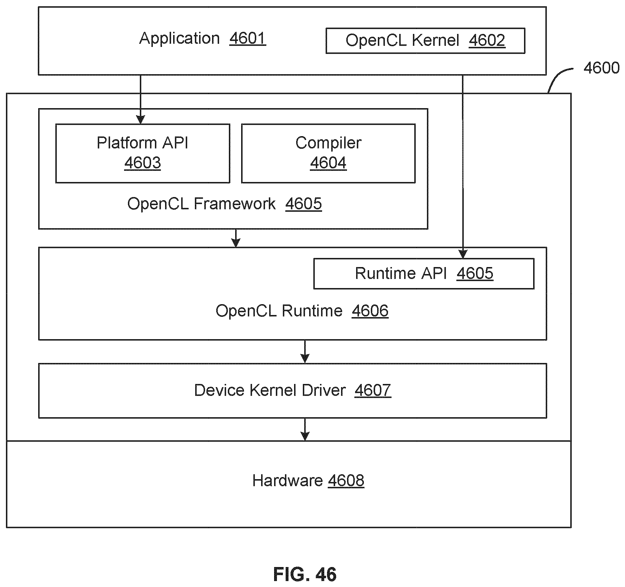

FIG. 46 illustrates an OpenCL implementation of software stack 4300 of FIG. 43, in accordance with at least one embodiment. In at least one embodiment, an OpenCL software stack 4600, on which an application 4601 may be launched, includes an OpenCL framework 4605, an OpenCL runtime 4606, and a driver 4607. In at least one embodiment, OpenCL software stack 4600 executes on hardware 4409 that is not vendor-specific. As OpenCL is supported by devices developed by different vendors, specific OpenCL drivers may be required to interoperate with hardware from such vendors, in at least one embodiment.

In at least one embodiment, application 4601, OpenCL runtime 4606, device kernel driver 4607, and hardware 4608 may perform similar functionalities as application 4301, runtime 4305, device kernel driver 4306, and hardware 4307, respectively, that are discussed above in conjunction with FIG. 43. In at least one embodiment, application 4601 further includes an OpenCL kernel 4602 with code that is to be executed on a device.

In at least one embodiment, OpenCL defines a "platform" that allows a host to control devices connected to a host. In at least one embodiment, an OpenCL framework provides a platform layer API and a runtime API, shown as platform API 4603 and runtime API 4605. In at least one embodiment, runtime API 4605 uses contexts to manage execution of kernels on devices. In at least one embodiment, each identified device may be associated with a respective context, which runtime API 4605 may use to manage command queues, program objects, and kernel objects, share memory objects, among other things, for that device. In at least one embodiment, platform API 4603 exposes functions that permit device contexts to be used to select and initialize devices, submit work to devices via command queues, and enable data transfer to and from devices, among other things. In addition, OpenCL framework provides various built-in functions (not shown), including math functions, relational functions, and image processing functions, among others, in at least one embodiment.

In at least one embodiment, a compiler 4604 is also included in OpenCL frame-work 4605. Source code may be compiled offline prior to executing an application or online during execution of an application, in at least one embodiment. In contrast to CUDA and ROCm, OpenCL applications in at least one embodiment may be compiled online by compiler 4604, which is included to be representative of any number of compilers that may be used to compile source code and/or IR code, such as Standard Portable Intermediate Representation ("SPIR-V") code, into binary code. Alternatively, in at least one embodiment, OpenCL applications may be compiled offline, prior to execution of such applications.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

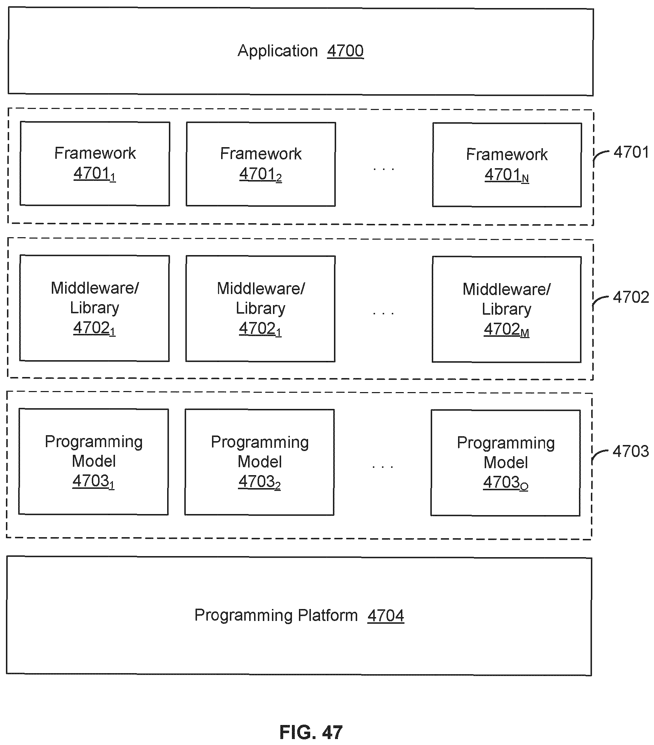

FIG. 47 illustrates software that is supported by a programming platform, in accordance with at least one embodiment. In at least one embodiment, a programming platform 4704 is configured to support various programming models 4703, middlewares and/or libraries 4702, and frameworks 4701 that an application 4700 may rely upon. In at least one embodiment, application 4700 may be an AI/ML application implemented using, for example, a deep learning framework such as MXNet, PyTorch, or TensorFlow, which may rely on libraries such as cuDNN, NVIDIA Collective Communications Library ("NCCL"), and/or NVIDA Developer Data Loading Library ("DALI") CUDA libraries to provide accelerated computing on underlying hardware.

In at least one embodiment, programming platform 4704 may be one of a CUDA, ROCm, or OpenCL platform described above in conjunction with FIG. 44, FIG. 45, and FIG. 46, respectively. In at least one embodiment, programming platform 4704 supports multiple programming models 4703, which are abstractions of an underlying computing system permitting expressions of algorithms and data structures. Programming models 4703 may expose features of underlying hardware in order to improve performance, in at least one embodiment. In at least one embodiment, programming models 4703 may include, but are not limited to, CUDA, HIP, OpenCL, C++ Accelerated Massive Parallelism ("C++AMP"), Open Multi-Processing ("OpenMP"), Open Accelerators ("OpenACC"), and/or Vulcan Compute.

In at least one embodiment, libraries and/or middlewares 4702 provide implementations of abstractions of programming models 4704. In at least one embodiment, such libraries include data and programming code that may be used by computer programs and leveraged during software development. In at least one embodiment, such middlewares include software that provides services to applications beyond those available from programming platform 4704. In at least one embodiment, libraries and/or middlewares 4702 may include, but are not limited to, cuBLAS, cuFFT, cuRAND, and other CUDA libraries, or rocBLAS, rocFFT, rocRAND, and other ROCm libraries. In addition, in at least one embodiment, libraries and/or middlewares 4702 may include NCCL and ROCm Communication Collectives Library ("RCCL") libraries providing communication routines for GPUs, a MIOpen library for deep learning acceleration, and/or an Eigen library for linear algebra, matrix and vector operations, geometrical transformations, numerical solvers, and related algorithms.

In at least one embodiment, application frameworks 4701 depend on libraries and/or middlewares 4702. In at least one embodiment, each of application frameworks 4701 is a software framework used to implement a standard structure of application software. An AI/ML application may be implemented using a framework such as Caffe, Caffe2, TensorFlow, Keras, PyTorch, or MxNet deep learning frameworks, in at least one embodiment.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more software threads identified by the API to be prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more software threads identified by the API to be prevented from being performed by one or more processors.. In at least one embodiment, one or more systems depicted in relation to preceding figures are utilized to perform an clusterlaunchcontrol.try_cancel to perform a request to cancel pending process threads to reallocate said thread work to an operating CTA.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to cause one or more processors to indicate whether one or more software threads have been prevented from being performed. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to cause one or more processors to indicate whether one or more software threads have been prevented from being performed. In at least one embodiment, one or more systems depicted in relation to preceding figures are utilized to perform an clusterlaunchcontrol.query_cancel.is_canceled to query a scheduling hardware and/or software to determine if indicated threads have been successfully cancelled.

In at least one embodiment, one or more systems depicted in relation to preceding figures are utilized to implement techniques, functions, and/or processes described in connection with FIGS. 1-11. In at least one embodiment, at least one component of preceding figures is used to perform an application programming interface (API) to indicate one or more software threads that have been prevented from being performed by one or more processors. In at least one embodiment, at least one component of preceding figures performs at least one aspect of components within FIGS. 1-11. In at least one embodiment, one or more systems depicted in preceding figures are utilized to implement one or more system and/or processes such as those described in connection with FIGS. 1-11, such as a processor comprising one or more circuits to perform an application programming interface (API) to indicate one or more software threads that have been prevented from being performed by one or more processors. In at least one embodiment, one or more systems depicted in relation to preceding figures are utilized to perform an clusterlaunchcontrol.query_cancel.get_first_ctaid to request starting thread dimensions in full for indicated threads to be performed after prior cancellation.

FIG. 48 illustrates compiling code to execute on one of programming platforms of FIGS. 43 - 46, in accordance with at least one embodiment. In at least one embodiment, a compiler 4801 receives source code 4800 that includes both host code as well as device code. In at least one embodiment, complier 4801 is configured to convert source code 4800 into host executable code 4802 for execution on a host and device executable code 4803 for execution on a device. In at least one embodiment, source code 4800 may either be compiled offline prior to execution of an application, or online during execution of an application.

In at least one embodiment, source code 4800 may include code in any programming language supported by compiler 4801, such as C++, C, Fortran, etc. In at least one embodiment, source code 4800 may be included in a single-source file having a mixture of host code and device code, with locations of device code being indicated therein. In at least one embodiment, a single-source file may be a .cu file that includes CUDA code or a .hip.cpp file that includes HIP code. Alternatively, in at least one embodiment, source code 4800 may include multiple source code files, rather than a single-source file, into which host code and device code are separated.

In at least one embodiment, compiler 4801 is configured to compile source code 4800 into host executable code 4802 for execution on a host and device executable code 4803 for execution on a device. In at least one embodiment, compiler 4801 performs operations including parsing source code 4800 into an abstract system tree (AST), performing optimizations, and generating executable code. In at least one embodiment in which source code 4800 includes a single-source file, compiler 4801 may separate device code from host code in such a single-source file, compile device code and host code into device executable code 4803 and host executable code 4802, respectively, and link device executable code 4803 and host executable code 4802 together in a single file, as discussed in greater detail below with respect to FIG. 37.

In at least one embodiment, host executable code 4802 and device executable code 4803 may be in any suitable format, such as binary code and/or IR code. In a case of CUDA, host executable code 4802 may include native object code and device executable code 4803 may include code in PTX intermediate representation, in at least one embodiment. In a case of ROCm, both host executable code 4802 and device executable code 4803 may include target binary code, in at least one embodiment.

At least one embodiment of the disclosure can be described in view of the following clauses:
1. A processor comprising:
   one or more circuits to perform an application programming interface (API) to cause one or more software threads identified by the API to be prevented from being performed by one or more processors.
2. The processor of clause 1, wherein the software threads identified by the API have not begun to be performed by the one or more processors.
3. The processor of clauses 1 and/or 2, wherein an input to the API comprises available bandwidth of another one or more processors and an indication of availability to perform the one or more software threads by the one or more processors.
4. The processor of clauses 1-3, wherein said software thread identified to be prevented from being performed by the API is indicated to be determined and output to memory by the API.
5. The processor of clauses 1-4, wherein performing the API is to cause the one or more software threads to be performed by one or more other processors.
6. The processor of clauses 1-5, wherein performance of the API is to cause generation of an identifier of threads indicated to be prevented from being performed by the one or more processors if the one or more threads indicated to be prevented from being performed exist.
7. The processor of clauses 1-6, wherein the one or more software threads identified to be prevented from being performed were previously scheduled to be performed by the one or more processors.
8. A system comprising:
   one or more processors to perform an application programming interface (API) to cause one or more software threads identified by the API to be prevented from being performed by one or more processors.
9. The system of clause 8, wherein the software threads identified by the API have not begun to be performed by the one or more processors.
10. The system of clauses 8 and/or 9, wherein an input to the API comprises available bandwidth of another one or more processors and an indication of availability to perform the one or more software threads by the one or more processors.
11. The system of clauses 8-10, wherein the software thread identified to be prevented from being performed by the API is indicated to be determined and output to memory by the API.
12. The system of clauses 8-11, wherein performing the API is to cause the one or more software threads to be performed by one or more other processors.
13. The system of clauses 8-12, wherein performance of the API is to cause generation of an identifier of threads indicated to be prevented from being performed by one or more processors if the one or more threads indicated to be prevented from being performed exist.
14. The system of clauses 8-13, wherein the one or more software threads identified to be prevented from being performed were previously scheduled to be performed by the one or more processors.
15. A computer-implemented method comprising:
   one or more processors to perform an application programming interface (API) to cause one or more software threads identified by the API to be prevented from being performed by one or more processors.
16. The method of clause 15, wherein the software threads identified by the API have not begun to be performed by the one or more processors.
17. The method of clauses 15 and/or 16, wherein an input to the API comprises a thread identifier of the one or more software threads indicated to be prevented from being performed if the one or more threads indicated to be prevented from being performed exist.
18. The method of clauses 15-17, wherein an input to the API comprises available bandwidth of another one or more processors and an indication of availability to perform the one or more software threads by the one or more processors.
19. The method of clauses 15-18, wherein the software thread identified to be prevented from being performed by the API is indicated to be determined and output to memory by the API.
20. The method of clauses 15-19, wherein the one or more software threads identified to be prevented from being performed were previously scheduled to be performed by the one or more processors.

At least one embodiment of the disclosure can be described in view of the following clauses:
1. A processor comprising:
   one or more circuits to perform an application programming interface (API) to cause one or more processors to indicate whether one or more software threads have been prevented from being performed.
2. The processor of clause 1, wherein the software threads identified by the API have not been indicated to be performed by one or more other processors.
3. The processor of clauses 1 and/or 2, wherein an input to the API indicates a thread identification of the one or more software threads.
4. The processor of clauses 1-3, wherein an input to the API indicates one or more memory locations in which to store an indication of whether the one or more software threads have been prevented from being performed.
5. The processor of clauses 1-4, wherein the one or more software threads have been scheduled to be performed using the one or more processors.
6. The processor of clauses 1-5, wherein performing the API is to cause the one or more software threads to be performed by one or more other processors.
7. The processor of clauses 1-6, wherein performing the API is to cause an identifier of the one or more software threads to be indicated.
8. A system comprising:
   one or more circuits to perform an application programming interface (API) to cause one or more processors to indicate whether one or more software threads have been prevented from being performed.
9. The system of clause 8, wherein the software threads identified by the API have not been indicated to be performed by one or more other processors.
10. The system of clauses 8 and/or 9, wherein an input to the API indicates a thread identification of the one or more software threads.
11. The system of clauses 8-10, wherein an input to the API indicates one or more memory locations in which to store an indication of whether the one or more software threads have been prevented from being performed.
12. The system of clauses 8-11, wherein the one or more software threads have been scheduled to be performed using the one or more processors.
13. The system of clauses 8-12, wherein performing the API is to cause the one or more software threads to be performed by one or more other processors.
14. The system of clauses 8-13, wherein performing the API is to cause an identifier of the one or more software threads to be indicated.
15. A method comprising:
   performing an application programming interface (API) to cause one or more processors to indicate whether one or more software threads have been prevented from being performed.
16. The method of clause 15, wherein the software threads identified by the API have not been indicated to be performed by one or more other processors.
17. The method of clauses 15 and/or 16, wherein an input to the API indicates a thread identification of the one or more software threads.
18. The method of clauses 15-17, wherein an input to the API indicates one or more memory locations in which to store an indication of whether the one or more software threads have been prevented from being performed.
19. The method of clauses 15-18, wherein the one or more software threads have been scheduled to be performed using the one or more processors.
20. The method of clauses 15-19, wherein performing the API is to cause the one or more software threads to be performed by one or more other processors.

At least one embodiment of the disclosure can be described in view of the following clauses:
1. A processor comprising:
   one or more circuits to perform an application programming interface (API) to indicate one or more software threads that have been prevented from being performed by one or more processors.
2. The processor of clause 1, wherein the one or more software threads were previously scheduled to be performed by the one or more processors.
3. The processor of clauses 1 and/or 2, wherein an input to the API indicates a thread identification of the one or more software threads that have been prevented from being performed by the one or more processors.
4. The processor of clauses 1-3, wherein the thread identification for the one or more software threads indicated to be prevented from being performed indicate one or more coordinates of a portion of the one or more software threads.
5. The processor of clauses 1-4, wherein performing the API is to indicate one or more thread identifiers of threads indicated to have been prevented from being performed by the one or more processors.
6. The processor of clauses 1-5, wherein performing the API is to cause a thread identifier of the one or more threads prevented from being performed by one or more processors to be indicated.
7. The processor of clauses 1-6, wherein the one or more software threads prevented from being performed by the one or more processors are to be performed by indicated one or more other processors.
8. A system comprising:
   one or more circuits to perform an application programming interface (API) to indicate one or more software threads that have been prevented from being performed by one or more processors.
9. The system of clause 8, wherein the one or more software threads were previously scheduled to be performed by the one or more processors.
10. The system of clauses 8 and/or 9, wherein an input to the API indicates a thread identification of the one or more software threads that have been prevented from being performed by the one or more processors.
11. The system of clauses 8-10, wherein the thread identification for the one or more software threads indicated to be prevented from being performed indicate one or more coordinates of a portion of the one or more software threads.
12. The system of clauses 8-11, wherein performing the API is to indicate one or more thread identifiers of threads indicated to have been prevented from being performed by the one or more processors.
13. The system of clauses 8-12, wherein performing the API is to cause a thread identifier of the one or more threads prevented from being performed by one or more processors to be indicated.
14. The system of clauses 8-13, wherein the one or more software threads prevented from being performed by the one or more processors are to be performed by indicated one or more other processors.
15. A method comprising:
   performing an application programming interface (API) to indicate one or more software threads that have been prevented from being performed by one or more processors.
16. The method of clause 15, wherein the one or more software threads were previously scheduled to be performed by the one or more processors.
17. The method of clauses 15 and/or 16, wherein an input to the API indicates a thread identification of the one or more software threads that have been prevented from being performed by the one or more processors.
18. The method of clauses 15-17, wherein the thread identification for the one or more software threads indicated to be prevented from being performed indicate one or more coordinates of a portion of the one or more software threads.
19. The method of clauses 15-18, wherein performing the API is to cause a thread identifier of the one or more threads prevented from being performed by one or more processors to be indicated.
20. The method of clauses 15-19, wherein the one or more software threads prevented from being performed by the one or more processors are to be performed by indicated one or more other processors.

Other variations are within spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. term "connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. In at least one embodiment, use of term "set" (e.g., "a set of items") or "subset" unless otherwise noted or contradicted by context, is to be construed as a nonempty collection comprising one or more members. Further, unless otherwise noted or contradicted by context, term "subset" of a corresponding set does not necessarily denote a proper subset of corresponding set, but subset and corresponding set may be equal.

Conjunctive language, such as phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C},

{B, C}, {A, B, C}. Thus, such conjunctive language is not generally intended to imply that certain embodiments require at least one of A, at least one of B and at least one of C each to be present. In addition, unless otherwise noted or contradicted by context, term "plurality" indicates a state of being plural (e.g., "a plurality of items" indicates multiple items). In at least one embodiment, a number of items in a plurality is at least two, but can be more when so indicated either explicitly or by context. Further, unless stated otherwise or otherwise clear from context, phrase "based on" means "based at least in part on" and not "based solely on."

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium. In at least one embodiment, in form of a computer program comprising a plurality of instructions executable by one or more processors. In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. A set of non-transitory computer-readable storage media, in at least one embodiment, comprises multiple non-transitory computer-readable storage media and one or more of individual non-transitory storage media of multiple non-transitory computer-readable storage media lack all of code while multiple non-transitory computer-readable storage media collectively store all of code. In at least one embodiment, executable instructions are executed such that different instructions are executed by different processors - in at least one embodiment, a non-transitory computer-readable storage medium store instructions and a main central processing unit ("CPU") executes some of instructions while a graphics processing unit ("GPU") executes other instructions. **In** at least one embodiment, different components of a computer system have separate processors and different processors execute different subsets of instructions.

Accordingly, in at least one embodiment, computer systems are configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or exemplary language (e.g., "such as") provided herein, is intended merely to better illuminate embodiments of disclosure and does not pose a limitation on scope of disclosure unless otherwise claimed. No language in specification should be construed as indicating any non-claimed element as essential to practice of disclosure.

All references, including publications, patent applications, and patents, cited herein are hereby incorporated by reference to same extent as if each reference were individually and specifically indicated to be incorporated by reference and were set forth in its entirety herein.

**In** description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still cooperate or interact with each other.

Unless specifically stated otherwise, it may be appreciated that throughout specification terms such as "processing," "computing," "calculating," "determining," or like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, term "processor" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors. As used herein, "software" processes may include, in at least one embodiment, software and/or hardware entities that perform work over time, such as tasks, threads, and intelligent agents. Also, each process may refer to multiple processes, for carrying out instructions in sequence or in parallel, continuously or intermittently. Terms "system" and "method" are used herein interchangeably insofar as system may embody one or more methods and methods may be considered a system.

In at least one embodiment, an arithmetic logic unit is a set of combinational logic circuitry that takes one or more inputs to produce a result. In at least one embodiment, an arithmetic logic unit is used by a processor to implement mathematical operation such as addition, subtraction, or multiplication. In at least one embodiment, an arithmetic logic unit is used to implement logical operations such as logical AND/OR or XOR. In at least one embodiment, an arithmetic logic unit is stateless, and made from physical switching components such as semiconductor transistors arranged to form logical gates. In at least one embodiment, an arithmetic logic unit may operate internally as a stateful logic circuit with an associated clock. In at least one embodiment, an arithmetic logic unit may be constructed as an asynchronous logic circuit with an internal state not maintained in an associated register set. In at least one embodiment, an arithmetic logic unit is used by a processor to combine operands stored in one or more registers of the processor and produce an output that can be stored by the processor in another register or a memory location.

In at least one embodiment, as a result of processing an instruction retrieved by the processor, the processor presents one or more inputs or operands to an arithmetic logic unit, causing the arithmetic logic unit to produce a result based at least in part on an instruction code provided to inputs of the arithmetic logic unit. In at least one embodiment, the instruction codes provided by the processor to the ALU are based at least in part on the instruction executed by the processor. In at least one embodiment combinational logic in the ALU processes the inputs and produces an output which is placed on a bus within the processor. In at least one embodiment, the processor selects a destination register, memory location, output device, or output storage location on the output bus so that clocking the processor causes the results produced by the ALU to be sent to the desired location.

In present document, references may be made to obtaining, acquiring, receiving, or inputting analog or digital data into a subsystem, computer system, or computer-implemented machine. In at least one embodiment, process of obtaining, acquiring, receiving, or inputting analog and digital data can be accomplished in a variety of ways such as by receiving data as a parameter of a function call or a call to an application programming interface. In some implementations, process of obtaining, acquiring, receiving, or inputting analog or digital data can be accomplished by transferring data via a serial or parallel interface. In another implementation, process of obtaining, acquiring, receiving, or inputting analog or digital data can be accomplished by transferring data via a computer network from providing entity to acquiring entity. References may also be made to providing, outputting, transmitting, sending, or presenting analog or digital data. In various examples, process of providing, outputting, transmitting, sending, or presenting analog or digital data can be accomplished by transferring data as an input or output parameter of a function call, a parameter of an application programming interface or interprocess communication mechanism.

Although discussion above sets forth example implementations of described techniques, other architectures may be used to implement described functionality, and are intended to be within scope of this disclosure. Furthermore, although specific distributions of responsibilities are defined above for purposes of discussion, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A processor comprising:
one or more circuits to perform an application programming interface (API) to cause one or more software threads identified by the API to be prevented from being performed by one or more processors.

2. The processor of claim 1, wherein the software threads identified by the API have not begun to be performed by the one or more processors.

3. The processor of claim 1 or 2, wherein an input to the API comprises available bandwidth of another one or more processors and an indication of availability to perform the one or more software threads by the one or more processors.

4. The processor of claim 3, wherein said software thread identified to be prevented from being performed by the API is indicated to be determined and output to memory by the API.

5. The processor of claims 1-4, wherein performing the API is to cause the one or more software threads to be performed by one or more other processors.

6. The processor of claims 1-5, wherein performance of the API is to cause generation of an identifier of threads indicated to be prevented from being performed by the one or more processors if the one or more threads indicated to be prevented from being performed exist.

7. The processor of claim 1-6, wherein the one or more software threads identified to be prevented from being performed were previously scheduled to be performed by the one or more processors.

8. A system comprising:
one or more processors to perform an application programming interface (API) to cause one or more software threads identified by the API to be prevented from being performed by one or more processors.

9. The system of claim 8, wherein the software threads identified by the API have not begun to be performed by the one or more processors, wherein an input to the API comprises available bandwidth of another one or more processors and an indication of availability to perform the one or more software threads by the one or more processors, wherein the software thread identified to be prevented from being performed by the API is indicated to be determined and output to memory by the API, wherein performing the API is to cause the one or more software threads to be performed by one or more other processors, wherein performance of the API is to cause generation of an identifier of threads indicated to be prevented from being performed by one or more processors if the one or more threads indicated to be prevented from being performed exist, wherein the one or more software threads identified to be prevented from being performed were previously scheduled to be performed by the one or more processors.

10. A computer-implemented method comprising:
one or more processors to perform an application programming interface (API) to cause one or more software threads identified by the API to be prevented from being performed by one or more processors.

11. The method of claim 10, wherein the software threads identified by the API have not begun to be performed by the one or more processors.

12. The method of claim 10 or 11, wherein an input to the API comprises a thread identifier of the one or more software threads indicated to be prevented from being performed if the one or more threads indicated to be prevented from being performed exist.

13. The method of any of claims 10-12, wherein an input to the API comprises available bandwidth of another one or more processors and an indication of availability to perform the one or more software threads by the one or more processors.

14. The method of any of claims 10-13, wherein the software thread identified to be prevented from being performed by the API is indicated to be determined and output to memory by the API.

15. The method of any of claims 10-14, wherein the one or more software threads identified to be prevented from being performed were previously scheduled to be performed by the one or more processors.
